(19) Europäisches Patentamt / European Patent Office / Office européen des brevets

(11) **EP 2 949 952 A1**

(12) **EUROPEAN PATENT APPLICATION**
published in accordance with Art. 153(4) EPC

(43) Date of publication:
**02.12.2015 Bulletin 2015/49**

(51) Int Cl.:
**F16C 17/03** (2006.01)   **F16C 17/06** (2006.01)
**F16C 17/12** (2006.01)   **F16C 27/02** (2006.01)

(21) Application number: **13850357.8**

(22) Date of filing: **31.10.2013**

(86) International application number:
**PCT/RU2013/000972**

(87) International publication number:
**WO 2014/070046 (08.05.2014 Gazette 2014/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.11.2012 RU 2012146614**

(71) Applicant: **Ermilov, Yury Ivanovich Moscow 119361 (RU)**

(72) Inventor: **Ermilov, Yury Ivanovich Moscow 119361 (RU)**

(74) Representative: **Anohins, Vladimirs et al Agency Tria Robit P.O. Box 22 1010 Riga (LV)**

(54) **FOIL BEARING ASSEMBLY**

(57) This invention relates to gas-lubricated sliding bearings used in rotor supports of high speed turbomachines. The bearing assembly comprises a radial foil bearing and an axial foil bearing, a control bearing preload device for controlling stiffness of the bearing under normal operating conditions, an electromagnetic unloading device for decreasing amplitude of rotor oscillations and an unloading means for increasing the ultimate bearing load without damaging bump foils. The radial foil bearing comprises a bushing 6 providing accommodating bearing misalignment with respect to the journal, an elastic member in the form of an elastic damping unit for increasing damping, which consists of a bump foil 20 and two smooth foils 16 and 22. The bump foils in the bearing have different heights and alternate in the axial direction to decrease wear under start/stop. A top foil 4 of the bearing is weldlessly retained within slots of mounting bars 70 and 80. The axial bearing has the bump foil with ridges circumferentially extended in order for the bearing to work in sealing mode. The top foils of the bearing are provided with circumferential slits in order to decrease thermal stress.

Fig. 1

EP 2 949 952 A1

**Description**

TECHNICAL FIELD

This invention relates to gas-lubricated sliding bearings used in rotor supports of high speed turbomachines (machines).

BACKGROUND OF THE INVENTION

Gas dynamic (hydrodynamic) foil bearings are gas lubricated sliding bearings, wherein one of sliding surfaces is a surface of one or several thin foils, hereinafter top foils, manufactured from metals or other suitable materials and disposed between a rotor part, i.e. a rotatable member, and a housing member. The housing member, receiving load from the rotor part (bearing load), is normally manufactured separately from a high-speed machine housing (machine housing) and anchored relative thereof. The top foil forms the sliding surface from the rotor side, which surface is normally coated by an antifriction layer to decrease wear. Another sliding surface is a surface of rotation of the rotor part comprised into the foil bearing and having a cylindrical, flat or conical shape.

When the top foil is displaced under the action of the rotor, there appears a force of a bearing reaction from the top foil, which force is directed opposite displacement thereof. This force can be generated by means of deforming either the top foil or an elastic member, disposed between the top foil and the housing member and transmitting load from the top foil to the housing member. The elastic member can be part of the adjacent top foil, or a special bump foil having bumps or corrugations, or a sheet of elastic material, for example, rubber.

The rotatable member of a radial foil bearing is a rotor journal normally having a cylindrical sliding surface. The radial bearing receives a radial load (perpendicular to the rotor axis). The rotatable member of an axial bearing is a rotor thrust disc normally having a flat sliding surface. The axial bearing receives load directed along the rotor axis.

Under the nonrotating rotor, the rotor sliding surface and the top foil are in contact and a contact pressure is generated therebetween. Under the rotating rotor between the rotor and the top foil is generated a lubrication film having overpressure and decreasing the contact pressure. Under lubrication film overpressure at reaching some speed (lift off speed) the top foil is fully separated from the rotor surface and thereby the contact therebetween disappears.

Until bearing load is less than the bearing load capacity, the rotor surface and the top foil are fully separated by the lubrication film and contact is missing therebetween. When bearing load is equal or more than the bearing load capacity, contact takes place between the rotor surface and the top foil.

For a conventional foil bearing, having one or several bump foils, there is a determined bearing load damaging the bump foil (damaging load), i.e. when plastic deformation of one or several bump foils starts. Normally the damaging load is significantly more than the bearing load capacity. However under some impact loads or, for example, under surging in the centrifugal compressor, bearing load can exceed the damaging load.

To increase foil bearing damping, as described in U.S. Pat. No. 4415280, a bump foil is anchored by its edge to a top foil in the direction along a bump foil ridge but another bump foil edge is free, or as described in U.S. Pat. No. 6726365, a bump foil is anchored by its edge to a housing member in the similar manner but another bump foil edge is free, or as described in U.S. Pat. No. 5902049, a bump foil is anchored by its edge to a supporting foil, disposed between the bump foil and a housing member,-in the similar manner but another bump foil edge is free.

A relatively small foil bearing stiffness is preferable under a small bearing load because it allows distributing load from the journal to a more top foil surface thereby decreasing wear. Under increase in bearing load, bearing stiffness must increase. Hereinafter bearing stiffness means the ratio of the bearing load to displacement the rotatable member in the direction of the load.

To decrease bearing stiffness under a small eccentricity, as described in U.S. Pat No. 5902049, a bump foil has circumferentially interchanging corrugations of variable height. Therefore under the small eccentricity, therein just takes place deformation of higher corrugations or waves having a more step between their projecting parts. However increase in step causes decreasing the ratio of height/length of an arc-shaped bump part, decreasing a length of the sliding path between rubbing parts of the bump foil and decreasing frictional damping. Over and above such a method can be used only for the specially formed bump foils having flat parts and projecting arc-shaped parts facing one side of the flat parts. However this method is not suitable for a conventional wave-shaped bump foil.

Normally in the foil bearing therein overpressure in the lubrication film is normally generated by means of forming its profile in the form of a wedge converging in the direction of rotor rotation. However in some foil bearings overpressure in the lubrication film is also generated by means of grooves manufactured on the top foil or forming there under the lubrication film pressure. Such grooves of small depth, about some tens of microns, are disposed non-perpendicularly or at an angle to the direction of rotation of the rotor part in the bearing. The grooves are similar to the grooves in conventional bearings with rigid surfaces.

Such an effect of increasing the lubrication film pressure by means of grooves (grooves overpressure effect) in an axial foil bearing is also described in U.S. Pat. No. 4116503. The grooves are manufactured by etching treatment on a top compliant foil similar to a thin membrane. To increase wear- resistant under start/stop it is necessary an antifriction coating for projecting parts of the bearing surface having grooves. Coating the compliant membrane by a rigid wear-resistant layer is sufficiently difficult because connection of the coating with the membrane must be durable. Thereby the rigid wear-resistant antifriction coating is not practically used in conventional foil bearings. Making grooves in a soft coating, normally used for foil bearings, is rather difficult and moreover under operating conditions such grooves can change their shape.

Increase in lubrication film pressure by means of grooves is used for a radial foil bearing, as described in U.S. Pat. No. 5902049, wherein under the lubrication film pressure a top foil cylindrical surface is deformed and the grooves are formed over ends of separate bump foils, which ends are arranged in a herringbone pattern and a radial stiffness is minimal thereof. However in this case it is difficult to meet requirements for the optimal number of the grooves, which number is desirable to be more than ten, a more number of the grooves causes decreasing as lengths of the bump foils as damping thereof.

Conventional herringbone grooved bearings with rigid sliding surfaces can have grooves disposed on the rotor surface to generate the lubrication film overpressure. Using such a rotor in the foil bearing with a compliant top foil, having a soft antifriction coating, causes an intense antifriction coating wear under start/stop or under short-time impact loads, or other big random loads exceeding the bearing load capacity. The reason for such a wear is deformation of the compliant top foil during its dry friction (with the rotor) and its deflection into a groove space. Moreover a jut, formed by a transition from a groove bottom to a projecting part disposed between the grooves of the thrust disc, intensively shears the soft antifriction coating.

Increase in foil bearing damping can also be obtained by means of increasing damping of the lubrication film due to decreasing an average thickness thereof. However under increasing rotor rotation speed in the compliant foil bearing the average thickness of the lubrication film increases due to increase in lubrication film pressure hereby lubrication film damping decreases.

In many conventional foil bearings in order to increase stiffness and damping of the foil bearing (by means of increase in frictional damping and in lubrication film damping), it is used a passive top foil preload against the rotatable member, i.e. the passive bearing preload not depending upon bearing operating conditions. The passive bearing preload is obtained, for example, because the top foils are elastically deformed by the rotatable member in the foil bearing. Such a bearing, wherein a top foil is flat in free condition, is described, for example, in U.S. Pat. No. 5427455. However the passive bearing preload has a limitation because increase in bearing preload causes increasing contact pressure of the top foil to the rotatable member and dry friction therebetween, therefore wear increases under rotor start/stop.

As described in U.S. Pat. No. 4445792, a foil bearing without bump foils comprises a control bearing preload device, to which top foils are each anchored by one edge. The control bearing preload device synchronously turns all the top foils in one direction so that to press them to the journal thereby increasing bearing preload or in the other direction thereby decreasing bearing preload. Under start/stop the control bearing preload device generates a small bearing preload to decrease wear, under operating conditions the bearing preload increases thereby increasing bearing stiffness. Such a bearing has limited possibilities to increase the bearing preload due to a small top foils' bending stiffness. Under increase in bearing preload, damping of the lubrication film increases slightly because thickness of the lubrication film between each top foil and the journal decreases in a narrow zone disposed opposite mounting the top foil to the control bearing preload device.

As described in U.S. Pat. No.6953283, a foil bearing without bump foils comprises a control bearing preload device and a plurality of top foils, against which outward surfaces movable pins are abutted. Under rotor speedup/stop the pins move back from a journal and the top foils are pressed against the journal with a small force thereby decreasing wear. Under a big rotation speed the pins move up to the journal and push the top foils thereby increasing the bearing preload and stiffness. However under increase in bearing preload there slightly increases damping of the lubrication film because thickness of the lubrication film between each top foil and the journal decreases in a narrow zone disposed opposite a contacting surface of the pin with the top foil. Using such pushing pins in the foil bearing with the bump foil does not provide growth in damping and worsens the bearing characteristics because the top foil has a small thickness and will bulge in the zone of contact with the pushing pins thereby decreasing the bearing load capacity.

As described in U.S. Pat. No. 6024491, a foil bearing comprises bump foils supported by air cameras, which are supplied with compressed air to accommodate a rotor radial displacement. However rather a big volumes of air cameras exceedingly decrease stiffness and damping of such a bearing.

U.S. Pat. No. 5911511 describes a radial foil bearing comprising a bushing, top foils and bump foils disposed therebetween. The bushing comprises tilting parts abutted against a housing member to accommodate bearing misalignment with respect to the journal. However construction of such a bearing does not allow controlling bearing preload under operating conditions thereby limiting possibilities to increase the bearing stiffness and damping.

In U.S. Pat. No. 7614792 is described a radial foil bearing or seal comprising bushing parts manufactured separately from each other. One of the objects of the present invention is to facilitate assembling the bearing in case when it is difficult to synchronously mount an entire bearing bushing within a housing member and it is easier to do it step by step. However if in the foil bearing it is necessary to mount within the bushing some bump and top foils, it will be more convenient to do it before mounting the bushing within the housing member. The bushing together with the bump and top foils therewithin can be mounted to the machine housing or to the housing member. The foil bearings with bushings, which parts can be displaced relative to each other, as shown in U.S. Pat. No.5911511, 7614792, do not provide separate assembling.

In U.S. Pat. Nos. 7614792, 5915841 are described foil bearings comprising a housing member or a bushing, including T-shaped retainers for anchoring top foils. The top foil is anchored by its leading and trailing edge between two T-shaped retainers. Such a manner of weldless anchoring top foils has an advantage, because neither welding nor special details, for example, prismatic mounting bars, are needed to anchor the top foil within the housing member. Disadvantage of such an anchoring of the top foils is necessity to distance leading and trailing parts thereof from the journal thereby decreasing a useful length of the top foil as well as the necessity of a complicated (as a cam) form of the housing member inner surface.

In another embodiment of the radial bearing a top foil by either its specially profiled leading or trailing parts is anchored within a housing member slot. Disadvantage of such a manner of anchoring is a small circumferential stiffness of an anchoring part for reason of rather a big radial distance between the point of anchoring the foil and a line of action of the tangential force, dragging or pushing the top foil under rotor start/stop in operating conditions of dry friction in the bearing or during an accident when aforesaid force can be too big thereby deforming the top foil at the point of anchoring.

As previously discussed, under a big bearing load, considerably exceeding the bearing load capacity, conventional foil bearings can be damaged because of plastic deformation of a bump foil. Such big loads can occur under impacts or surging in the centrifugal compressor. Such damaging of the bump foil causes increasing a mounting gap, decreasing the bearing stiffness and damping and appearing possible journal oscillations of big amplitude, grazing rotor rotating parts and decreasing machine service life (machine life).

In U.S. Pat. No. 4394091 is described a radial foil bearing axially disposed next to a ball rolling bearing, having a less radial gap between its inner ring and the journal than the foil bearing static eccentricity. Such a limitation of the journal eccentricity provides decreasing a torque of friction in the foil bearing under rotor start. However under operating rotation speed, external loads to the rotor, appearing, for example, under machine housing oscillations, can often cause a more journal eccentricity than its static eccentricity thereby causing contact of the rotating journal and the ball rolling bearing inner ring. At a big circumferential journal speed (about several tens m/sec) such frequent contacts can cause damaging contacting surfaces and decreasing the bearing service life.

In Japanese application JP2008-232289 is described a double radial bearing forming by two radial foil bearings with a ball rolling bearing therebetween. The ball rolling bearing has a less radial gap between the radial bearing inner ring and the journal than a lubrication film thickness in the foil bearing under a high rotor rotation speed. However disadvantage of such a double radial bearing is contact of the journal with the ball rolling bearing inner ring and therefore wear of the contacting surfaces, which contact occurs under a considerably less load than the foil bearing load capacity for reason of compliance of a bearing top foil.

Under the rotating journal some heat is generated in a lubrication film of the foil bearing for reason of friction. The heat of friction is transmitted to the top foil, the journal and partially comes out of the lubrication film together with the air getting out. A quantity of evolved heat increases with increase in rotation speed and in bearing load. Under a big rotation speed and bearing load the temperature of the bearing becomes rather high thereby causing a compulsory cooling of the foil bearing. Normally for cooling a foil radial bearing, therein is generated difference of pressures in the circumferential air at the bearing faces and the air moves towards the bearing axis along all the holes disposed between the journal and the housing member. However a flow section of the lubrication film, wherein is generated heat of friction, is considerably less than the flow section between the top foil and the housing member, wherein the bump foil is disposed. That is why a significant part of the cooling air, running between the top foil and the housing member, is slightly heated and ineffectively used.

In U.S. Pat. No. 5902049 is described increase in efficiency of cooling a bearing by means of a thin perforated sheet disposed between a top foil and a bump foil. However efficiency of such a cooling is limited.

Used in high-speed machines foil bearings and active magnetic bearings have advantages and disadvantages. Using the foil and active magnetic bearings in one hybrid bearing accommodates disadvantages and takes advantages of both types of the bearings, that makes such bearings perspective nowadays. Under a big durational load the axial foil bearing has difficulties with cooling because the heat generated in the lubrication film is too big but such problems are missing in axial active magnetic bearings.

Increase in high-speed machine power causes increasing exciting forces in the machines' flowing parts and seals, which forces are capable to generate self-exciting oscillations of the rotor supported by foil bearings under operating conditions. Such oscillations are accompanied with dry friction between bearing foil elements. Under growth in amplitude of the oscillations, rubbing elements' wear can become significant thereby reducing the machine service life. Additional mounting of magnetic bearings with controlled characteristics provides increasing foil bearing damping, i.e. decreasing the amplitude of the rotor oscillations and increasing the foil bearing's service life.

A shared operating of the foil and magnetic bearings decreases as load to each bearing as probability of foil bearing's damages under surging in the compressor.

At a small rotation speed foil bearings have a small load capacity, thereby increase in rotor weight causes a significant bearing wear under rotor start/stop. The magnetic bearing load capacity does not decrease at the small rotation speed, that practically eliminates foil bearing wear under rotor start/stop.

On the other hand magnetic bearings have auxiliary bearings to prevent accidents under disabled power or failure in their control system. Thus the auxiliary bearings have a small operating life during accidents. A shared operating of the magnetic and foil bearings eliminates such auxiliary bearing disadvantages, because under failure in operating of the magnetic bearings occurs a smooth rotor running out with minimal foil bearings' wear.

Magnetic bearings are badly tailored to impact loads and high-frequency oscillations while foil bearings are well tailored to such conditions.

Despite aforesaid advantages of the hybrid bearing, comprising the foil bearing and the magnetic bearing, such a construction has serious disadvantages, namely high complexity and high cost. Magnetic bearings are significantly more expensive than foil bearings because of a very complicated magnetic bearing control system and expensive electronic components. Great cost of the highly complicated magnetic bearing control system is connected with providing high speed and complexity of data processing about position of the rotor to transmit controlling signals to the magnet bearings and to accommodate forces acting to the rotor with high frequency and prevent appearing of instability causing rotor oscillations in the magnetic bearings.

In U.S. Pat. Nos. 6353273, 6770993, 6965181 are described embodiments of the hybrid bearing, combining foil and magnetic bearings, and methods of controlling thereof to eliminate problems of controlling their shared operating. However therein a complicated magnetic bearing control system is almost completely used for such hybrid bearings while the foil bearings well operate without such a system under forces acting to the rotor with high frequency.

In U.S. Pat. No. 5911511 is described an axial foil bearing comprising a bushing including tilting parts to decrease loss in the bearing load capacity due to a housing member misalignments with a respect to a thrust disc. However such a bearing does not provide a regular load distribution to all the bushing tilting parts in the circumferential direction because load to the bushing part closest to the thrust disc is more than that to a bushing part disposed at the opposite thrust disc side, i.e. the maximally outlying part. The difference in load is proportional to the value of misalignment.

Bump foils ridges in foil bearings are normally extended in the direction across speed of rotor surface's movement. For radial bearings it is the direction along the bearing axis, for axial bearings it is the radial direction. Such disposition is more manufactured.

Circumferentially extending bump foils' ridges are used very seldom. U.S.Pat. No. 4296976 describes circumferential extension of bump foils' ridges in radial and axial bearings. The object of the invention is to improve manufacturability and quality of manufacturing of foil bearings. In radial and axial bearings the bump foils are disposed in two layers perpendicular to the rotor sliding surface and the ridges in one layer are circumferentially disposed while in another layer the foils' ridges are disposed in the cross direction. However in U.S. Pat. No. 4296976 there is not referred to possible decrease in gas leakage through the bearing by means of disposition of the bump foils' ridges.

In Russian Pat. № 2449184 the object of the invention is to increase reliability and the bearing load capacity for an axial foil bearing. As shown in figures, bump foil waves are radially arranged, however in the description any reference to disposition of the bump foils' waves is missing and the object of the disclosed invention does not depend upon the bump foils' waves disposition. In this patent nothing is said about the possibility to decrease gas leakage through the bearing by means of disposition of the bump foils' ridges. As seen in figures of disposition of the bump foils, distance between edges of the bump foils' ridges, disposed opposite each other, is about one third of a circumferential length of the top foil and it is significantly more than a wave length of the bump foil. Similar mutual disposition of the bump foils, which ridges are circumferentially extended, does not provide significant decrease in gas leakage through the bearing, which serves as a seal.

U.S. Pat No. 6505837 describes a radial foil seal and an axial foil seal, each comprising a journal or a thrust disc respectively, a housing member, a top foil and a bump foil disposed therebetween. To eliminate a gas leakage through the seal in the space between the top foil and the housing member, each-seal has the top foil flanged part in the form of a flat ring for the radial seal or in the form of a tubular ring for the axial seal. In the radial seal, therein are used only the bump foils, which ridges are axially extended as usual. As shown in a radial sectional view of the axial foil seal, the bump foils' ridges are radially extended, however a reference to decrease in gas leakage through the seal by means of the bump foils' ridges disposition is missing in the description. Disadvantage of this seal is that by means of the top foil sealing tubular part the pressure between the top foil and the bump foil does not practically vary in the radial direction and the pressure is equal to the gas pressure nearby the top foil inner diameter. Hereby the pressure of the lubrication film between the top foil and the thrust disc gradually changes in the radial direction. Such a distribution of pressure requires increasing bearing top foil bending stiffness that significantly decreases advantages, which the compliant top foil has, to reach the minimal gap and to decrease the gas leakage.

Bump foils, used as an elastic member in foil bearings for some applications, have too a big stiffness under a small bump foil wave length. It may be disadvantage, for example, in case of a small sized foil bearing. Even if the minimal bump foil thickness is about 0,07 millimeter, the foil wave length of suitable stiffness is more than 3mm. For axial bearings, which diameter is about 20 millimeters or less, for example, such a wave length does not allow arranging between the top foil and the housing member a sufficient number of waves to form the optimal lubrication film profile.

Normally radial foil bearings of stationary machines do not have relatively big durational loads in one direction. Short-time (several tenths of seconds or less) big loads to the bearing can appear, for example, under surging, or under short-time vibrations, or under impact loads. However radial bearings of high-speed machines for transport applications may have big loads for a sufficiently long time, about several seconds, for example, because of the gyroscopic torque impacting to the rotor. Big loads and big rotation speeds, a low coefficient of thermal conductivity and a high coefficient of linear heat expansion of nickel alloy, of which top foils are manufactured, can cause a local bearing top foil heating and warping (due to appearing irregular stress), the lubrication film discontinuity and the bearing damage, as described in the paper [1].

[1] DellaCorte, C., and Bruckner, R.J.: "Remaining Technical Challenges and Future Plans for Oil-Free Turbomachinery," Proceedings of 2010 ASME-IGTI Turbo Expo, Glasgow, UK, GT2010-22086, June 2010

SUMMARY OF THE INVENTION

The object of the present invention is to increase damping of a gas dynamic foil bearing. In order to achieve such an object, the gas dynamic foil bearing comprises a housing member, a journal, a top foil and an elastic-damping unit. The top foil is disposed between the housing member and the journal. The elastic-damping unit is disposed between the top foil and the housing member. The elastic-damping unit comprises a bump foil, a supporting foil and an inner foil. The bump foil is anchored by its first edge to the supporting foil along a bump foil ridge. Hereby the inner foil is disposed between the bump and supporting foils and anchored to the other bump foil edge disposed opposite the first edge. The elastic-damping unit provides damping, which exceeds damping of the bump foil, anchored by its edge, for example, to the housing member and having another free edge.

Another object of the present invention is to decrease top foil wear in a radial foil bearing under rotor start/stop. In order to achieve such an object, the radial foil bearing comprises a housing member, a journal, a top foil and bump foils. The top foil is disposed between the housing member and the journal. The bump foils are circumferentially arranged between the top foil and the housing member and some bump foils are lower than others. Hereby the bump foils of variable height interchange in the direction of the bearing axis, providing under dry friction during rotor speedup a big contacting surface between the top foil and the journal by means of a small bearing stiffness under rotor weight load.

Yet another object of the present invention is to increase the bearing load capacity. In order to achieve such an object, a foil bearing comprises a housing member, a journal, a top foil and bump foils. The top foil is disposed between the housing member and the journal. The bump foils are axially disposed between the top foil and the housing member. The bump foils have interchanging narrow and wide ridges to provide a variable circumferential stiffness. The bump foils are arranged so that their narrow ridges are arranged under inclination to the bearing midline forming a herringbone pattern. Under the lubrication film pressure the top foil is more sagging along narrow ridges wherein stiffness of the bump foils is less. Resulting from that, grooves of herringbone pattern are generated on the top foil thereby increasing the bearing load capacity.

In order to achieve such an object, i.e. increase in the bearing load capacity, in another manner, a foil bearing comprises a housing member, a journal and a top foil, disposed therebetween, an elastic member, disposed between the top foil and the housing member, and an inner sheet, disposed between the top foil and the elastic member. The inner sheet has grooves on its side facing the top foil. The grooves, forming a herringbone pattern, begin from the inner sheet lateral edges and are directed to the bearing midline. Under the lubrication film pressure the top foil is more sagging along the grooves on the inner sheet. It causes forming grooves of herringbone pattern on the top foil and increasing the bearing load capacity.

Yet another object of the present invention is to decrease the rotor lift off speed in a foil bearing. In order to achieve such an object, the foil bearing comprises a housing member, a journal, a top foil and an elastic member. The top foil is disposed between the housing member and the journal. The elastic member is disposed between the top foil and the housing member. On the rotor surface, disposed opposite the top foil, are circumferentially arranged a plurality of grooves forming a herringbone pattern to generate the lubrication film overpressure. Hereby a transient surface between a projecting part and a groove bottom has a rounding, which minimal radius considerably exceeds a groove depth. The rounding prevents the top foil from wear under rotor speedup hereby providing decrease in the rotor lift off speed in the foil bearing.

The other object of the present invention is to control foil bearing stiffness under rotor rotation. In order to achieve such an object, a foil bearing comprises a housing member, a journal, a top foil, an elastic member and a bushing. The top foil is disposed between the housing member and the journal. The bushing is disposed between the top foil and the housing member. The elastic member is disposed between the top foil and the bushing. Bushing parts can radially be displaced relative to each other. The foil bearing comprises a control bearing preload device mounted to the housing member. Hereby the bushing parts are abutted against movable parts of the control bearing preload device. The movable parts radially displace the bushing parts during rotor rotation thereby providing varying in bearing preload and stiffness.

The other object of the present invention is to simplify assembling a foil bearing. In order to achieve such an object, the foil bearing comprises a housing member, a journal, a top foil, an elastic member and an annular bushing. The top foil is disposed between the housing member and the journal. The annular bushing is disposed between the top foil and the housing member. The elastic member is disposed between the top foil and the annular bushing. Hereby the annular bushing comprises three or more parts, connected by thin bridges, in order to change their position relative to each other in the direction of the journal under an external force or torque. The bushing parts are abutted against the housing member so that they can turn along the axis parallel to the bushing axis.

Yet another object of the present invention is to increase the load capacity of a radial foil bearing by means of accommodating its misalignment under keeping stability to housing member conical oscillations. In order to achieve such an object, the radial foil bearing comprises a housing member, a journal, a top foil, a ring and an elastic member. The housing member is anchored relative to a machine housing by the ring. The ring inner part has a small bending stiffness and a big radial stiffness relative to the ring outward part. The ring is mounted by its inner part in the middle of the housing member outward side. The ring is mounted by its outward part to the machine housing inner side. Hereby between the housing member outward side and the machine housing inner side therein is disposed a bump foil for damping possible housing member conical oscillations.

Yet another object of the present invention is to simplify anchoring a top foil and to improve manufacturability of a foil bearing. In order to achieve such an object, the foil bearing comprises a housing member, a journal and a top foil. The top foil is disposed between the housing member and the journal. The journal rotates from the top foil trailing edge to the leading edge thereof. The top foil is anchored to a mounting bar, which portion projects out of the housing member. This portion has a slit extending along the mounting bar. The top foil leading edge is mounted within the mounting bar slit, which slit is disposed so that under mounting bar displacement in the direction of rotation one of contacting surfaces of the mounting bar with the top foil is disposed across the direction of journal rotation. The leading edge of the top foil is disposed near another part thereof, which part, projecting to the journal, is closer to the journal surface than the mounting bar top part, when the top foil leading edge is abutted against the mounting bar in the direction from the journal

Yet another object of the present invention is to increase the ultimate bearing load without damaging bump foils. In order to achieve such an object, a foil bearing comprises a housing member, a journal, a top foil, a bump foil and an unloading ring. The top foil is disposed between the housing member and the journal. The bump foil is circumferentially disposed between the top foil and the housing member. The unloading ring is concentrically mounted to the housing member and axially disposed nearby the top foil. The unloading ring inner surface has antifriction properties. A radial gap between the unloading ring inner surface and the journal surface is set so that under some bearing load, exceeding the bearing load that damages the bump foil, part of the bearing load is received by the unloading ring. As a result, deformation of the bump foil does not exceed the deformation damaging the bump foil and is not less than the deformation under which the bearing load is equal to the bearing load capacity.

Yet another object of the present invention is to increase the ultimate bearing load without damaging bump foils in another manner. In order to achieve such an object, a foil bearing comprises a housing member, a journal, a top foil, a bump foil, a ring. The top foil is disposed between the housing member and the journal. The bump foil is circumferentially disposed between the top foil and the housing member. Inside the annular space limited by tops disposed from both bump foil sides, there are disposed unloading means, as foils disposed in the direction of bump foils' ridges. Hereby height of unloading means is so that under the ultimate bearing load, exceeding the load damaging the bump foil, deformation of the bump foil does not exceed the deformation damaging the bump foil and is not less than the deformation under which the bearing load is equal to the bearing load capacity.

Yet another object of the present invention is to cool a foil bearing journal. In order to achieve such an object, a foil bearing comprises a housing member, a journal, a top foil and an elastic member. Inside the rotor under the journal surface, therein are disposed channels for cooling the journal. The channels have inlets from one bearing side and outlets from another bearing side. At the outlets there are manufactured radial channels to increase a cooling gas leakage running through thereof by means of the centrifugal effect.

Yet another object of the present invention is to increase foil bearing damping i.e. to decrease amplitude of rotor oscillations in a foil bearing. In order to achieve such an object, the foil bearing comprises a housing member, a journal, a top foil, an elastic member and an electromagnetic unloading device comprising sequentially connected: a force sensor or a rotor displacement sensor, an amplifier, a derivative D-controller, a driver, a power amplifier and an electromagnet capable to attract the rotor. The device can also comprise a speed sensor, instead of a force sensor or displacement sensor, and thereby a proportional P-controller (controller) instead of the D-controller. Hereby in the circuit between the amplifier and the differential controller is disposed a high-frequency filter removing off frequencies, which are a little more than the frequency of rotor critical oscillations.

Yet another object of the present invention is to unload a foil bearing from slowly changing forces. In order to achieve such an object, the foil bearing comprises a housing member, a journal, a top foil, an elastic member and a foil bearing unloading device from slowly changing forces. The foil bearing unloading device comprises sequentially connected: a force sensor or a rotor displacement sensor, an amplifier, an integral controller, a driver, a power amplifier and an electromagnet capable to attract the rotor. Hereby in the circuit between the amplifier and the integral controller is disposed a filter of high- and mid-range frequencies, which filter moves off a frequency slightly exceeding the frequency of possible surging oscillations in the machine operating flow.

Yet another object of the present invention is to decrease top foil wear in a radial foil bearing under start/stop of a heavy rotor. In order to achieve such an object, the radial foil bearing comprises a housing member, a journal, a top foil, an elastic member and a foil bearing unloading device to unload the radial foil bearing from rotor weight under rotor start/stop. The foil bearing unloading device comprises sequentially connected: a rotor rotation sensor, a controller, a power amplifier and an electromagnet disposed above the rotor to vertically attract thereof.

Yet another object of the present invention is to increase the axial foil bearing load capacity by accommodation to misalignments. In order to achieve such an object, the axial foil bearing comprises a housing member, a thrust disc, a top foil and an elastic member. The top foil is disposed between the thrust disc and the housing member. The elastic member is disposed between the top foil and the housing member. Between the elastic member and the housing member, therein is disposed a first disc-shaped bushing. Between the first disc-shaped bushing and the housing member therein is disposed a second bushing. Both bushings are in contact through supporting means disposed therebetween in the radial direction at the opposite sides to the bearing axis. The second bushing contacts with the housing member through the supporting means disposed between the second bushing and the housing member in the radial direction at the opposite sides to the bearing axis, i.e. across the direction of contacts between both bushings.

Yet another object of the present invention is to decrease gas leakage through a foil bearing or seal. In order to achieve such an object, the foil bearing or seal comprises a housing member, a thrust disc, a top foil, an elastic member. The top foil is disposed between the thrust disc and the housing member. The elastic member is disposed between the top foil and the housing member. The elastic member comprises one or several layers of bump foils circumferentially arranged. Several bump foils and their ridges are circumferentially extended in each layer. Hereby a distance between adjacent ridges' edges is less than the bump foil wave length.

Yet another object of the present invention is to decrease elastic member stiffness in a foil bearing, comprising bump foils, having rather a small wave length, or to keep constant elastic member stiffness under decrease in bump foil wave length. In order to achieve such an object, the foil bearing comprises a housing member, a thrust disc, a top foil, an elastic member. The top foil is disposed between the thrust disc and the housing member. The elastic member is disposed between the top foil and the housing member and comprises a pair of bump foils, which foils as well as their ridges are arranged in the direction normal to the thrust disc surface. The bump foils are anchored relative to each other by elastic means to generate an elastic reaction under a relative foils' displacement across the direction of their ridges, resulting in sliding of this pair of foils under top foil load.

Yet another object of the present invention is to increase foil bearing reliability under a big durational load. In order to achieve such an object, a top foil, disposed between a rotor journal and a housing member, has a leading and trailing edges, disposed relative to each other in the direction of journal rotation. The top foil comprises two or several parts, facing each other by their lateral edges. Each part has a leading and trailing edges, which edges, belonging to the top foil leading edge or trailing edge respectively, are disposed relative to each other across the circumferential direction. The top foil lateral edges are disposed with a small gap or tightly to each other.

BRIEF DESCRIPTION OF THE DRAWINGS

FIG. 1 is a partial cross-sectional view of a hydrodynamic radial foil bearing which embodies the present invention.
FIGS. 2, 3 are enlarged fragmentary sectional views of encircled portions I, II of FIG. 1.
FIG. 4 is a partial longitudinal sectional view of the hydrodynamic radial foil bearing of FIG. 1 and a hydrodynamic axial foil bearing in accordance with the present invention.
FIG. 5 is a view of a turned part of an elastic-damping unit of FIG. 1.
FIGS. 6...12 are views similar to that of FIG. 5 of other embodiments of an elastic-damping unit.
FIG. 13 is a plan view, unwrapped, of a supporting foil of FIG. 1 with bump foils anchored thereof.
FIGS. 14, 15 are views similar to that of FIG. 13 of other embodiments of bump foils to realize the grooves overpressure effect.

FIG. 16 is a view similar to that of FIG. 13 of another embodiment of the radial foil bearing of FIG. 1 to realize the grooves overpressure effect by means of an inner sheet.

FIG. 17 is a sectional view along a line A--A of that of FIG. 16.

FIGS. 18, 19 are views similar to that of FIG. 16 of other embodiments of an inner sheet.

FIG. 20 is a partial sectional view along a line A--A of that of FIG. 4.

FIG. 21 is a view similar to that of FIG. 20 of another embodiment of a journal groove.

FIG. 22 is a partial view of another arrangement of journal grooves of FIG. 4.

FIG. 23 is a view similar to that of FIG. 4 of another embodiment of a control bearing preload device.

FIG. 24 is a cross-sectional view similar to that of FIG. 1 of another embodiment of a bushing and foil elements.

FIG. 25 is a view similar to that of FIG. 24 of another embodiment of a bump foil.

FIG. 26 is a view similar to that of FIG. 24 of another embodiment of a bushing.

FIG. 27 is a view similar to that of FIG. 24 of yet another embodiment of a bushing.

FIG. 28 is an enlarged fragmentary sectional view of deformation of the bushing of FIG. 27.

FIG. 29 is a view similar to that of FIG. 24 of an alternative embodiment of a control bearing preload device.

FIG. 30 is a partial longitudinal sectional view of that of FIG. 29.

FIG. 31 is a view similar to that of FIG. 29 of an alternative embodiment of anchoring a housing member.

FIG. 32 is a partial longitudinal sectional view of that of FIG. 31.

FIGS. 33...34 are enlarged fragmentary sectional views of embodiments of connecting bushing parts of FIG. 24.

FIG. 35 is an enlarged fragmentary sectional view of an embodiment of connecting-links between bushing parts of FIG. 1.

FIG. 36 is an enlarged fragmentary sectional view of FIG. 1.

FIG. 37 is a view similar to that of FIG. 36 of another embodiment of anchoring a top foil.

FIGS. 38...39 are views similar to that of FIG. 1 of other embodiments of anchoring a top foil.

FIGS. 40...42 are views similar to that of FIG. 36 of other embodiments of anchoring an axial foil bearing top foil.

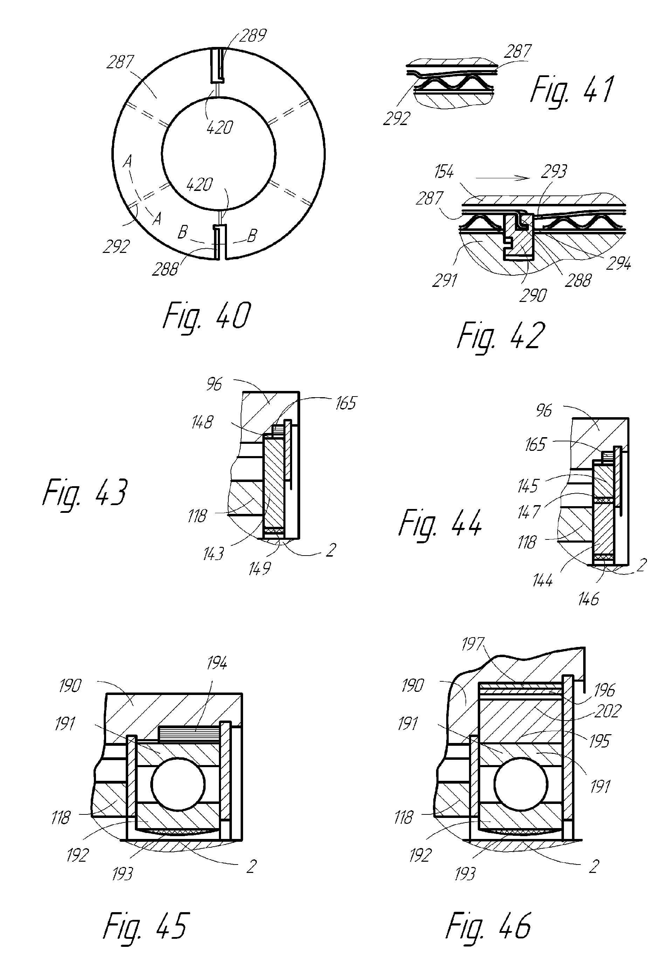

FIG. 40 is a plan view of a top foil.

FIG. 41 is a sectional view of the axial bearing of FIG. 40 along a line A--A.

FIG. 42 is a sectional view of the axial bearing of FIG. 40 along a line B--B.

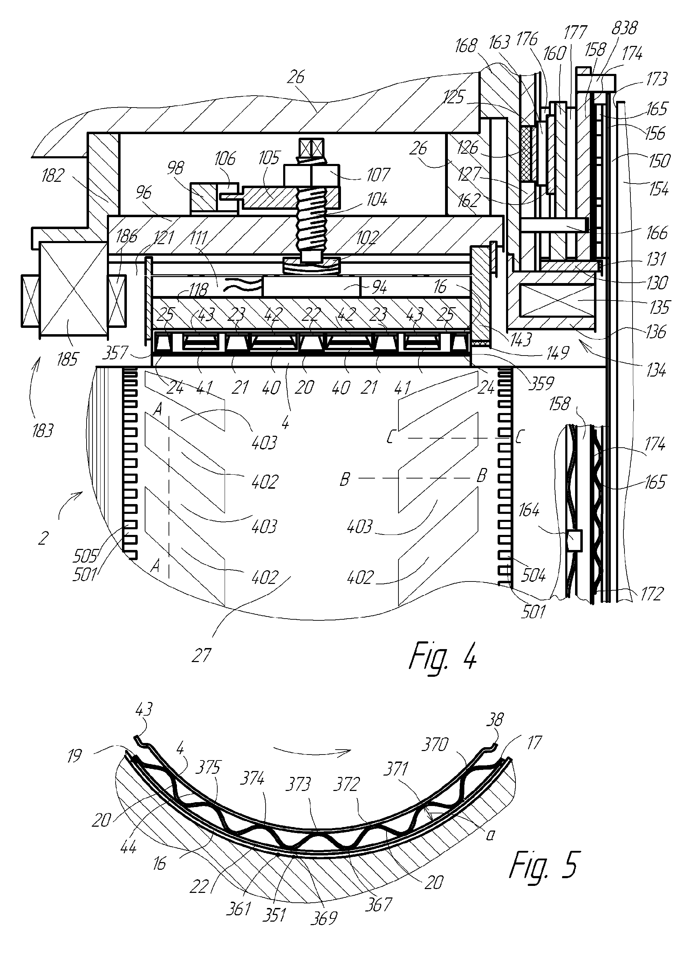

FIG. 43 is a fragmentary sectional view similar to that of FIG. 4 of another embodiment of an unloading means.

FIGS. 44...46 are views similar to that of FIG. 43 of yet other embodiments of unloading means.

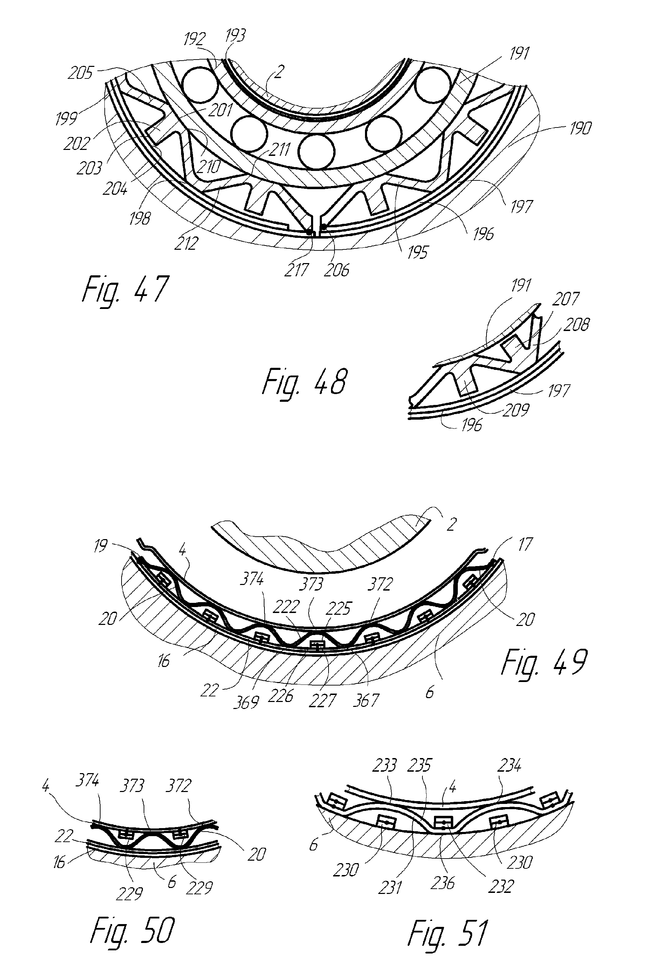

FIG. 47 is a partial cross-sectional view of that of FIG. 46.

FIG. 48 is a view similar to that of FIG. 47 of another embodiment of an unloading means.

FIG. 49...51 are views similar to that of FIG. 5 of other embodiments of a journal displacement unloading means.

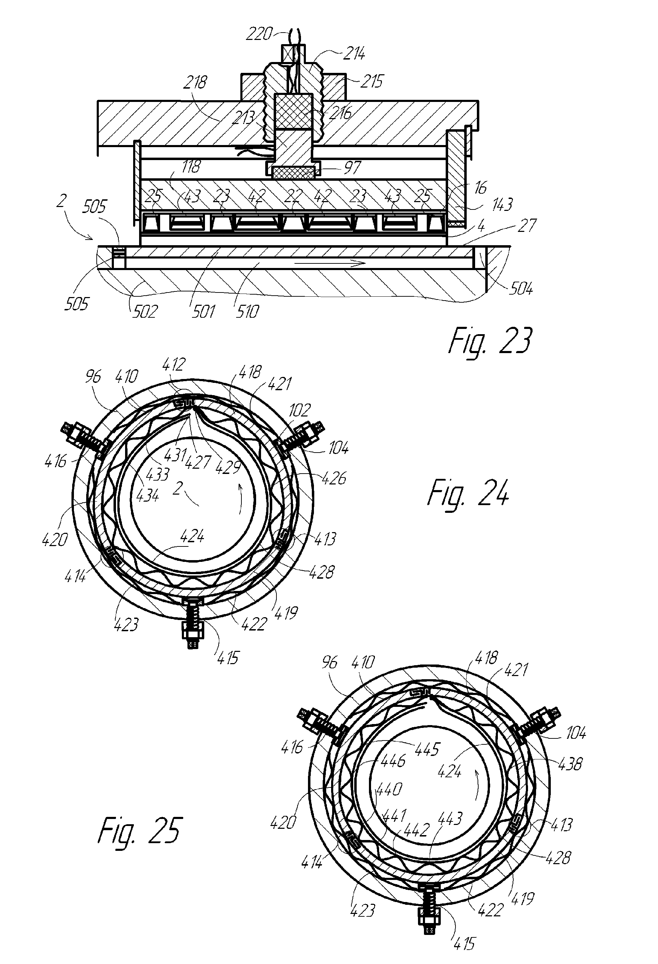

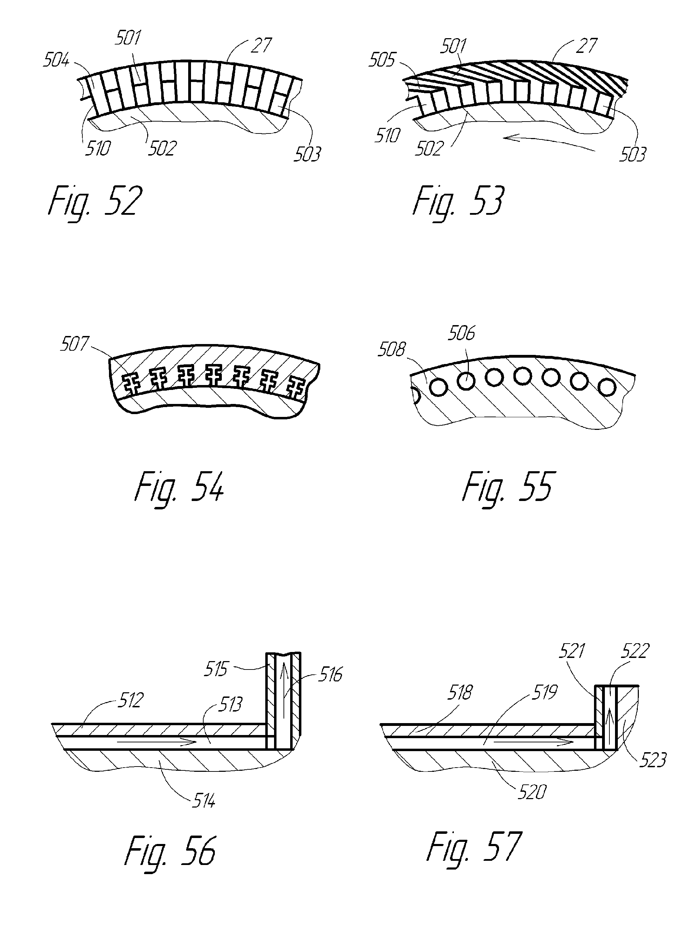

FIGS. 52, 53 are partial cross-sectional views of the journal of FIG 23.

FIGS. 54, 55 are sectional views similar to that of FIG. 52 of other embodiments of cooling a journal.

FIGS. 56, 57 are partial longitudinal sectional views of embodiments of cooling a journal.

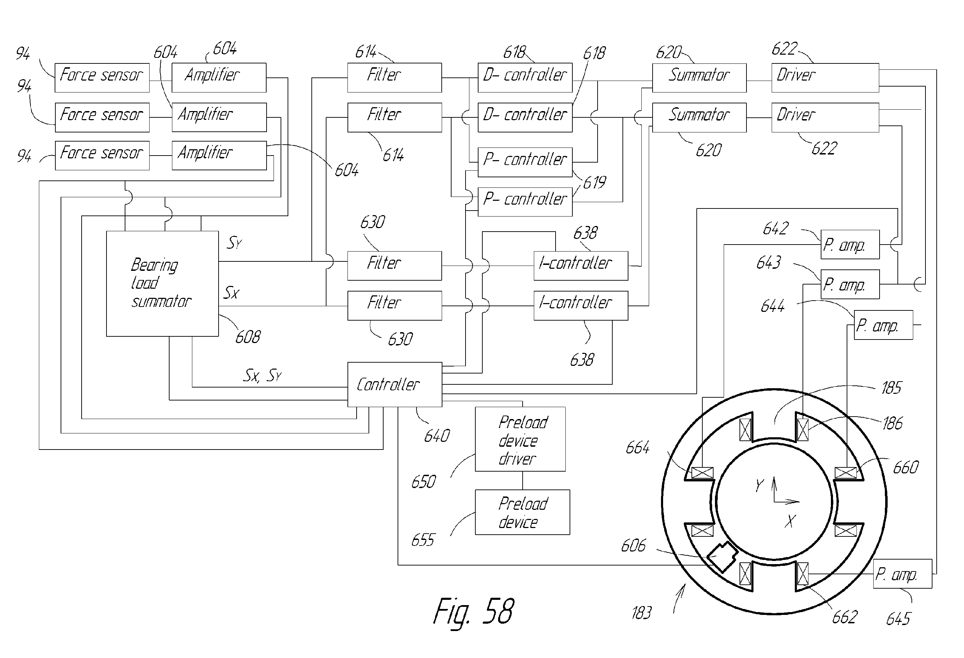

FIG. 58 is a schematic view of a control system for a radial foil bearing electromagnetic unloading device and a control bearing preload device.

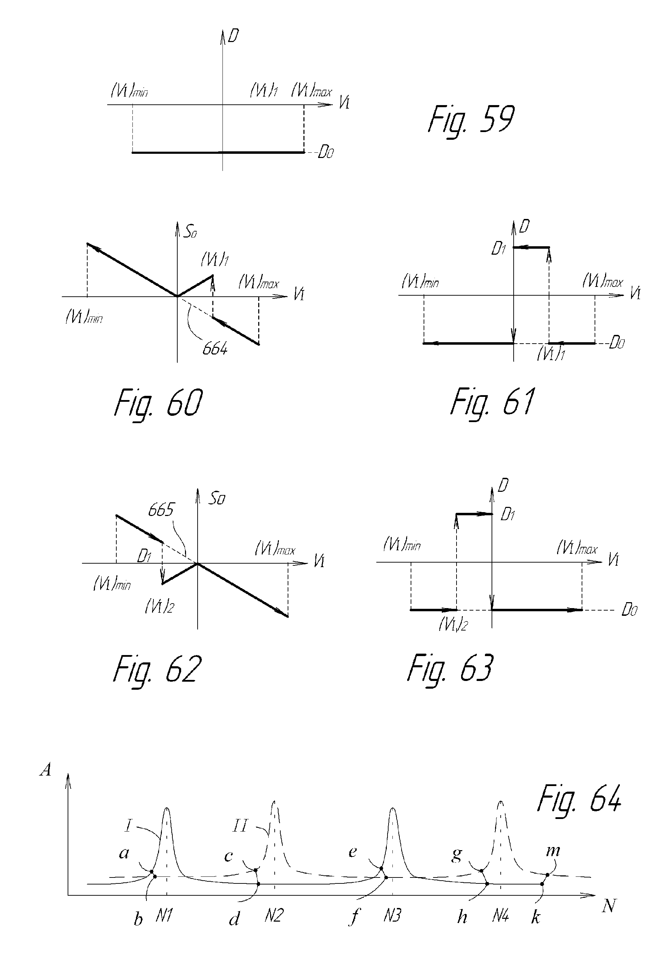

FIGS. 59...63 are graphic illustrations of functioning of a D- controller of FIG. 58.

FIG. 64 is a graphic illustration of amplitude of rotor oscillations at rotor speedup under variable bearing preload.

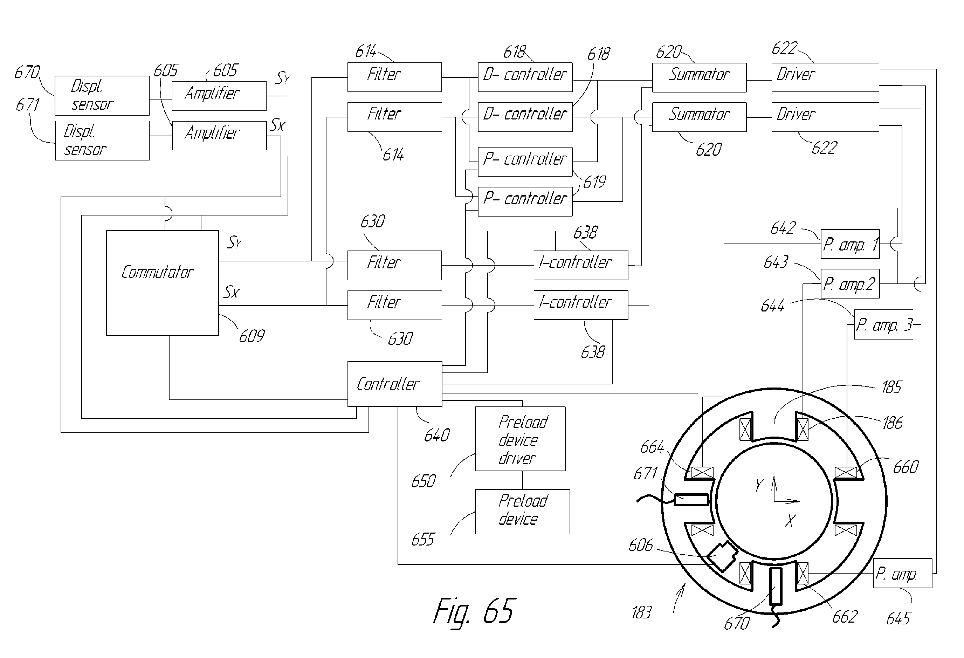

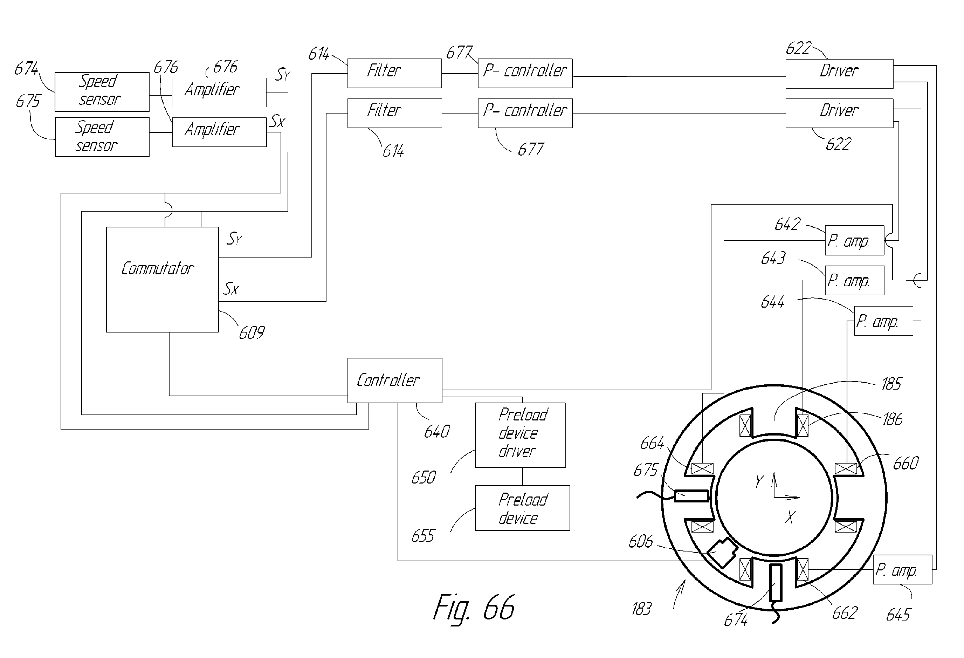

FIGS. 65, 66 are schematic views similar to that of FIG. 58 for the purpose of illustrating other embodiments of the control systems for a bearing electromagnetic unloading device and a control bearing preload device, which embodiments are alternative to that of FIG. 58.

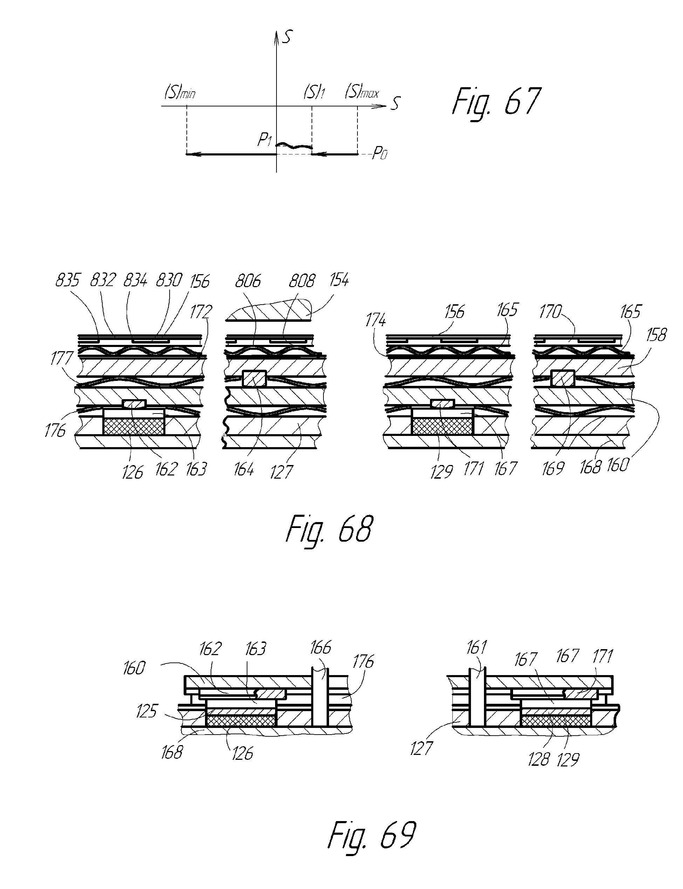

FIG. 67 is a graphic illustration of functioning of a P-controller of FIG. 66.

FIG. 68 is a fragmentary sectional view of the axial foil bearing of FIG. 4 along the circumferential direction.

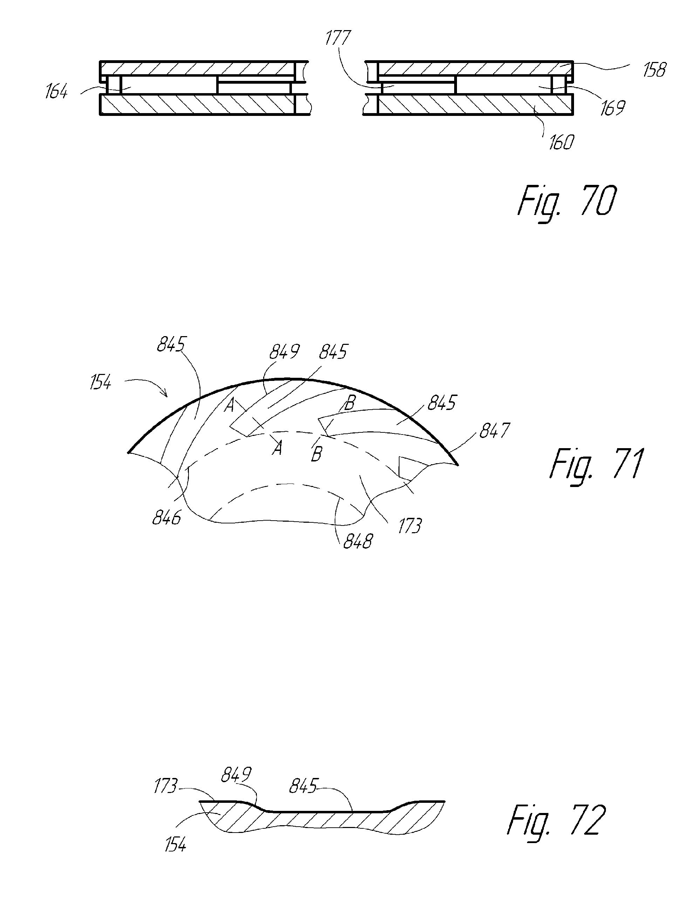

FIGS. 69, 70 are fragmentary longitudinal sectional views of the axial foil bearing shown in FIG. 4.

FIG. 71 is a partial plan view of an axial bearing thrust disc of FIG. 4.

FIG. 72 is a sectional view of that of FIG. 71 along a line A--A.

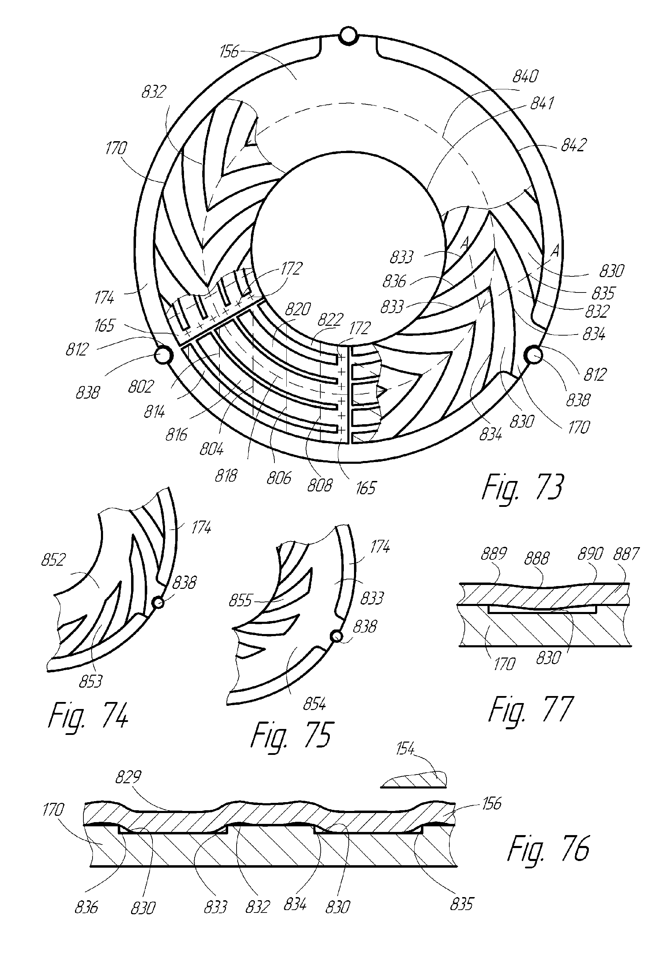

FIG. 73 is a plan view of the axial bearing of FIG. 4.

FIGS. 74, 75 are partial plan views similar to that of FIG. 73 of other embodiments of an inner sheet.

FIG. 76 is a sectional view of that of FIG. 73 along lines A--A

FIGS. 77...83 are views of other embodiments of the axial foil bearing shown in FIG. 4.

FIG. 77 is a view similar to that of FIG. 76 of another embodiment of a top foil.

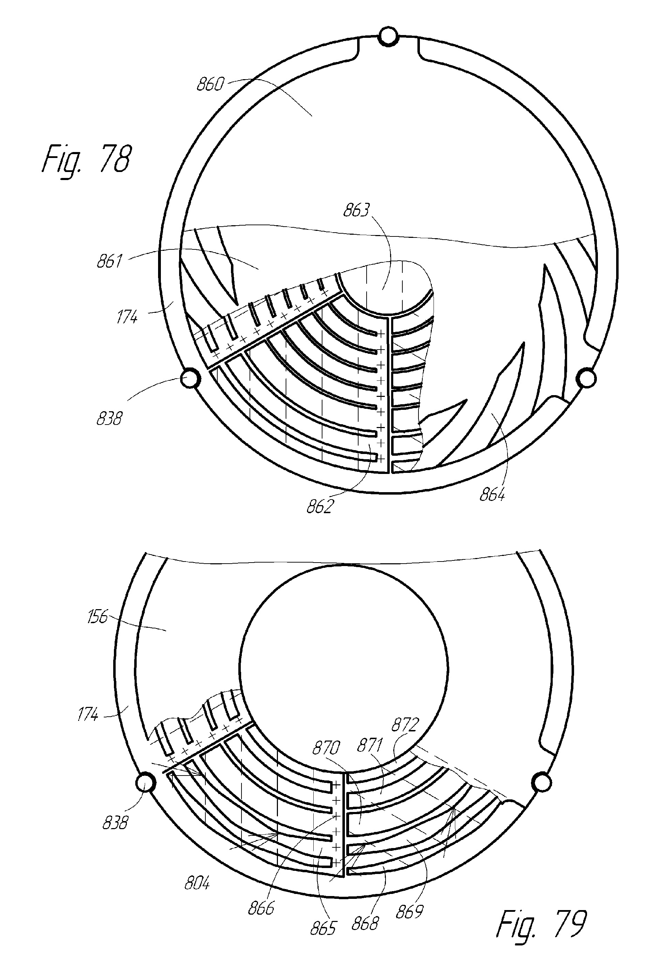

FIG. 78 is a view similar to that of FIG. 73 of yet another embodiment of a top foil.

FIG. 79 is a partial view similar to that of FIG. 73 of another embodiment of a bump foil.

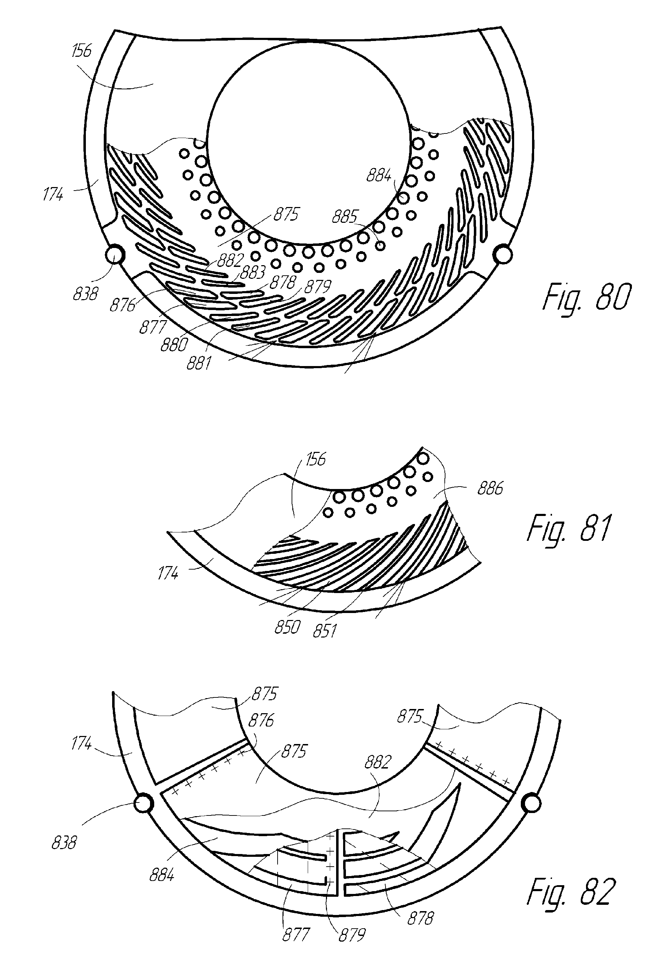

FIGS. 80, 81 are partial views similar to that of FIG.

73 of other embodiments of an elastic member.

FIG. 82 is a view similar to that of FIG. 73 of yet another embodiment of a top foil.

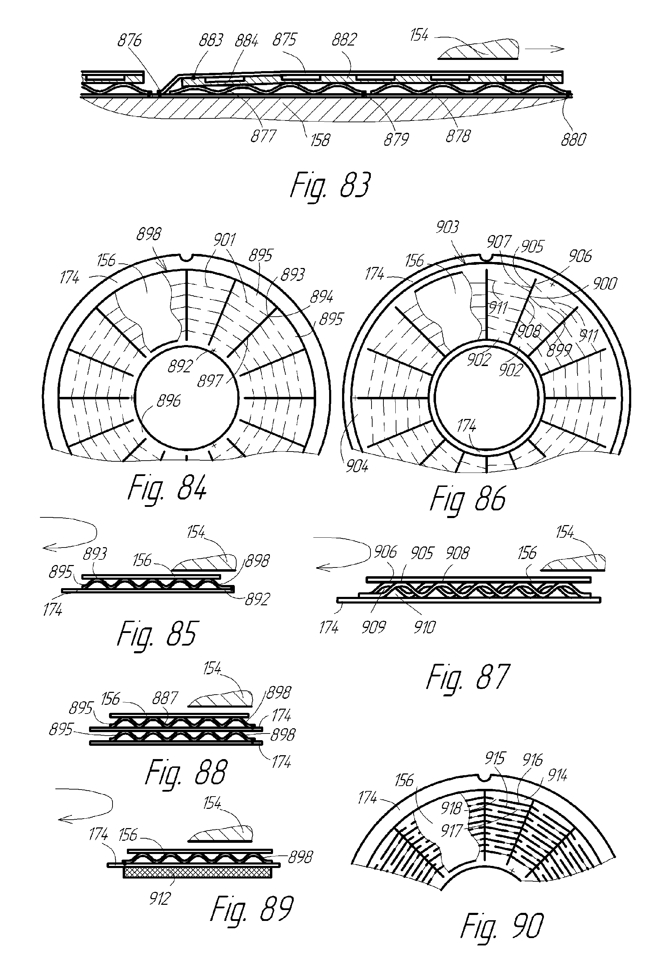

FIG. 83 is a sectional view along the circumferential direction of that of FIG. 82.

FIG. 84 is a partial view similar to that of FIG. 73 of yet another alternative embodiment of an axial foil bearing as a foil bearing-seal.

FIG. 85 is a longitudinal sectional view of that of FIG. 84.

FIGS. 86...97, 102, 103 are views of other embodiments of the axial foil bearing-seal of FIG. 84.

FIG. 86 is a partial view similar to that of FIG. 84 of another embodiment of a bump foil.

FIG. 87 is a longitudinal sectional view of that of FIG. 86.

FIGS. 88, 89 are partial views similar to that of FIG. 85 of other embodiments of an elastic member.

FIG. 90 is a partial view similar to that of FIG. 84 of another embodiment of a bump foil.

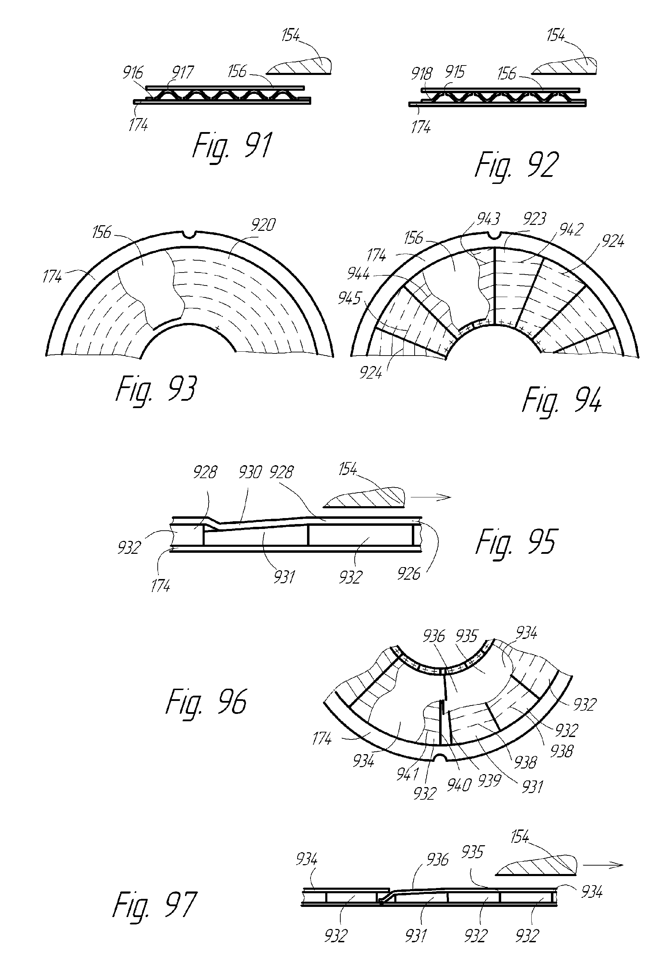

FIG. 91, 92 are longitudinal sectional views of that of FIG. 90.

FIG. 93, 94 are partial views similar to that of FIG. 84 of yet other embodiments of a bump foil.

FIG. 95 is a partial sectional view along the circumferential direction of that of FIG. 84 of another embodiment of an axial foil bearing-seal.

FIG. 96 is a partial view similar to that of FIG. 84 of yet another embodiment of an axial foil bearing-seal.

FIG. 97 is a sectional view of that of FIG. 96 along the circumferential direction.

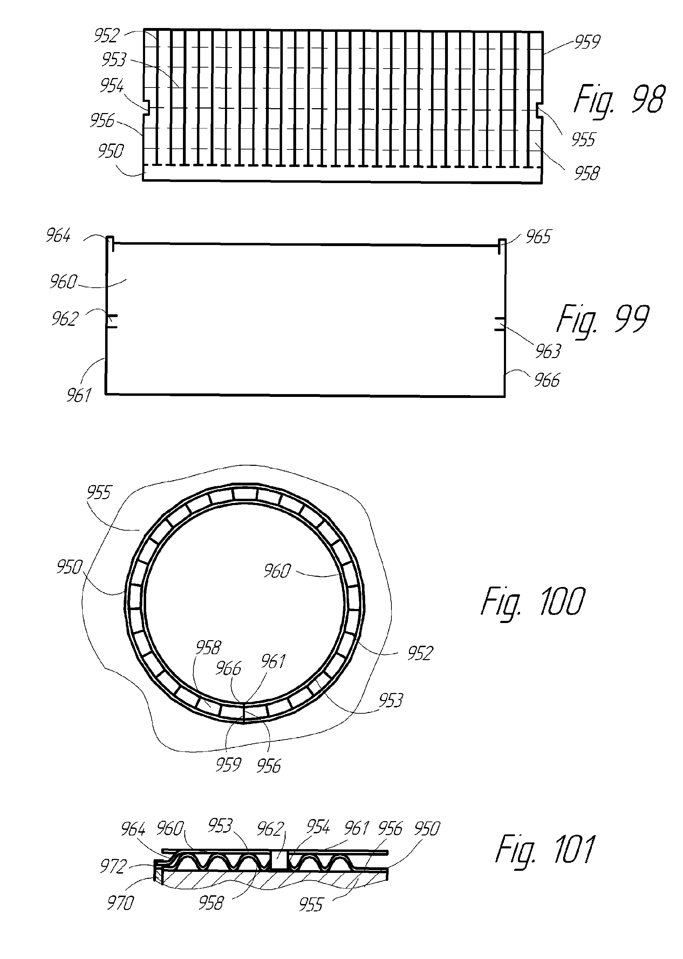

FIGS. 98... 101 are views of embodiments of a radial foil bearing-seal.

FIG. 98 is a plan view, unwrapped, of a bump foil of the radial foil bearing-seal.

FIG. 99 is a plan view, unwrapped, of a top foil of the radial foil bearing-seal.

FIG. 100 is an end view of a foil bearing-seal, wherein a shaft is missing.

FIG. 101 is a longitudinal sectional view of that of FIG. 100.

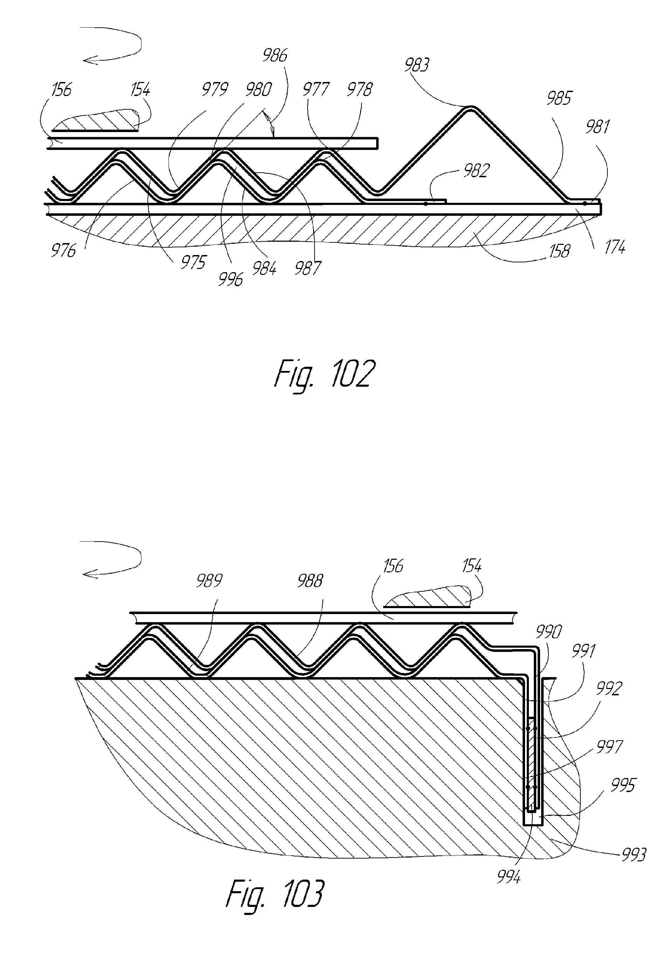

FIGS. 102, 103 are partial views similar to that of FIG. 85 of yet other embodiments of an elastic member.

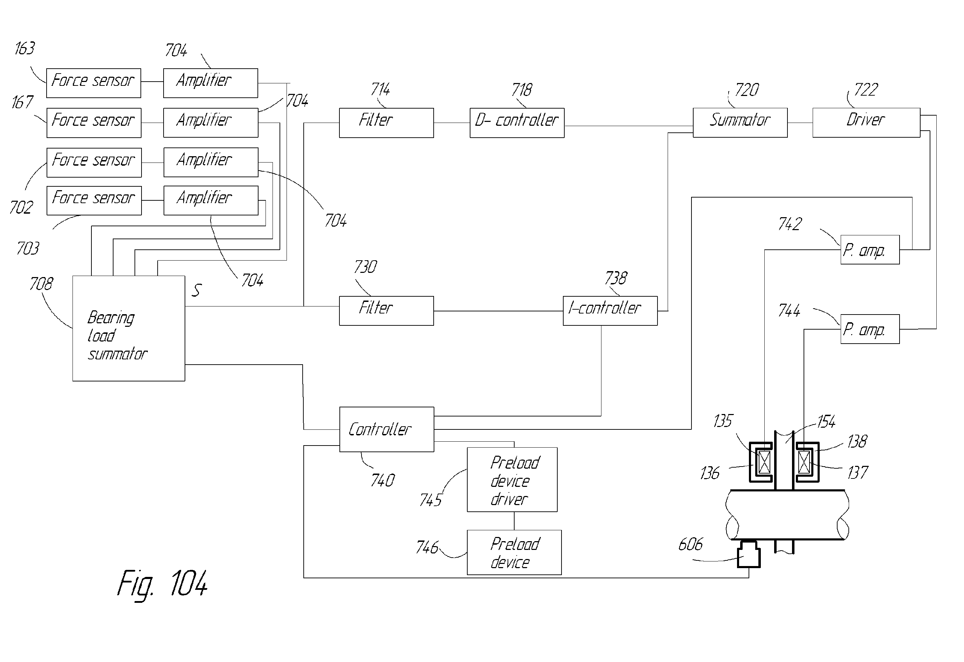

FIG. 104 is a schematic view similar to that of FIG. 58 of a control system for an axial bearing electromagnetic unloading device and a control bearing preload device.

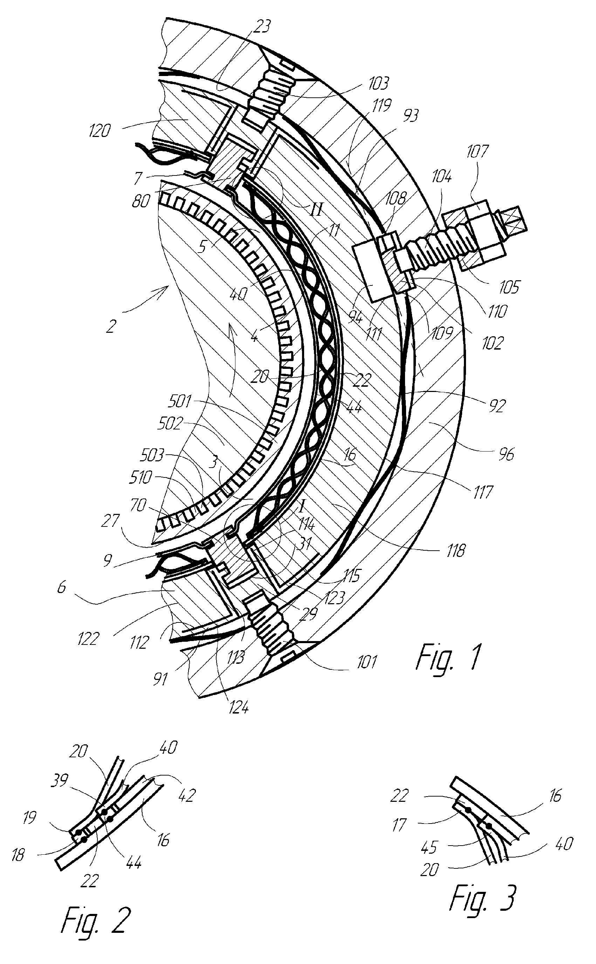

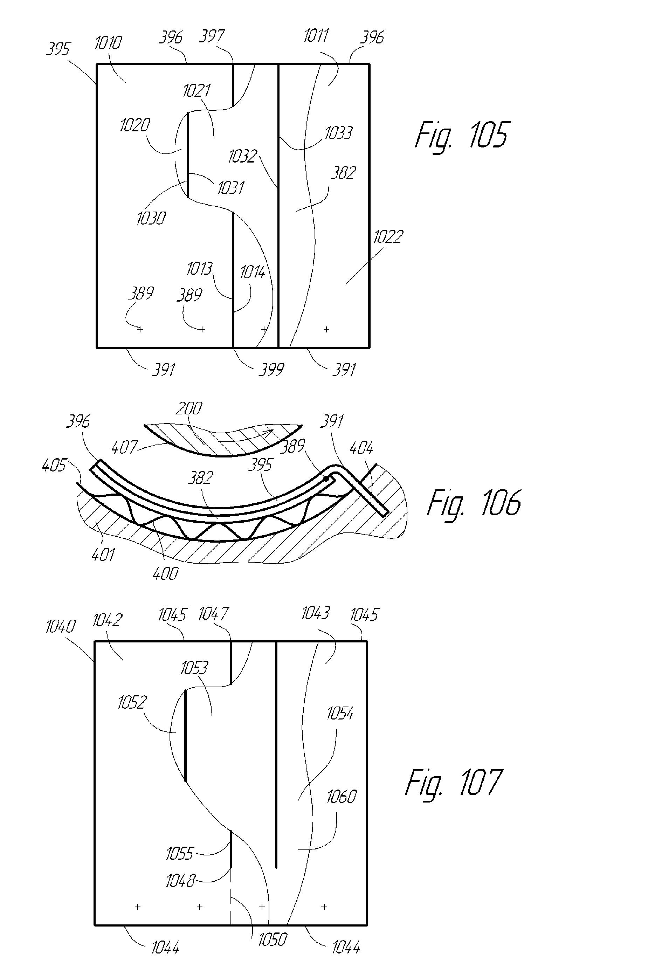

FIGS. 105... 107 are views of embodiments of a radial foil bearing alternative to that of FIG. 1.

FIG. 105 is a plan view, unwrapped, of an alternative embodiment of a foil bearing top foil.

FIG. 105 is a plan view, unwrapped, of another embodiment of a top foil of a foil bearing.

FIG. 106 is a partial end view of a foil bearing.

FIG. 107 is a view similar to that of FIG. 105 of yet another embodiment of a top foil.

DESCRIPTION OF THE PREFERRED EMBODIMENTS

FIG. 1 is a partial cross sectional view of a hydrodynamic radial foil bearing providing a rotor rotation with respect to a high-speed machine housing. FIG. 4 is a partial longitudinal sectional view of a hydrodynamic axial foil bearing and the hydrodynamic radial foil bearing of FIG. 1. A journal 2 is as part of a shaft, included into a rotor, as a rotary body specifically in the form of cylinder. The journal 2 has an outward or supporting surface 27. The journal 2 has the direction of rotation (the circumferential direction) along a circumference which is formed by a journal surface 27 cross section. The surface 27 axis is the journal axis, i.e. the rotor axis. The journal 2 is disposed within a bushing 6 bore, i.e. in the space limited by a bushing 6 inner cylindrical surface 11. The bushing 6 is formed as a cylindrical sleeve. The bushing 6 receives load transmitted from the journal and received by the bearing, i.e. bearing load.

Hereinafter a radial bearing element inner surface means a surface facing the radial bearing axis, an axial bearing element inner surface means a surface facing an operating surface of a thrust disc comprised into the axial bearing. A radial bearing element outward surface means a surface disposed opposite the inner surface of the radial bearing element. An axial bearing element outward surface means a surface disposed opposite the inner surface of the axial bearing element. For example, a surface 117 is a bushing 6 outward surface.

A bushing 6 surface 11 axis, hereinafter the bushing axis, coincides with the radial bearing axis which is disposed in the direction of the journal axis. The bushing 6 is disposed between an inner surface 23 of a cylindrical supporting sleeve 96, which receives bearing load, and the journal 2 surface 27, i.e. between the supporting sleeve 96 serving as a housing member and the journal 2. The supporting sleeve 96 axis is disposed in the direction of the journal 2 axis.

The bushing 6 comprises three equal parts 118, 120, 122 elastically connected. A bushing can comprise three or more parts that are capable to be displaced relative to each other as radially, i.e. normal to the journal surface 27, as circumferentially, i.e. around the rotor axis. A quantity of such parts depends upon the bearing diameter and may be five or seven, or a little more under a very big bearing diameter, for example, about 0,2 meters. A radial bushing thickness is normally adjusted so that bending stiffness of a bushing part is more than a radial stiffness of a bearing elastic member. The bushing 6 is retained relative to the sleeve 96 by intermediate means as described further.

Shown in FIG. 1 the journal 2 and the bushing 6 have the respective cylindrical surfaces 27 and 11. However the journal and bushing surfaces may be otherwise shaped, such as conical, and the other components of the bearing suitably shaped to be compatible with such alternative shapes. These components are disposed between the journal 2 surface 27 and the bushing 6 inner surface 11.

Between the journal 2 and the bushing 6 there are circumferentially arranged three equal top foils 4, 7, 9 having the same anchoring and disposition relative to the journal 2. The top foils can differ from each other, for example, in circumferential length. Normally the top foil surface is smooth. Under free condition the top foil can be flat or cylindrical, for example.

The bearing can comprise one or more top foils. The maximal quantity of the top foils does not exceed a quantity of the top foils in conventional foil bearings wherein bump foils are supported by a rigid housing member and the bushing is missing. The top foils and other foil bearing elements are normally made of metal or metallic alloys however they can be manufactured of polymer materials, materials with carbon fibers or other suitable materials.

Disclosed further embodiments of foil elements, including top, bump and supporting foils disposed between the journal 2 surface 27 and the bushing 6 inner surface 11, can also be used in conventional foil bearings wherein bump foils, supported by the rigid housing member, are disposed between the journal and the housing member and the bushing is missing.

The top foil 4 has a cylindrical surface which generatrix is disposed along the bearing axis. Top foils used in the bearing can have a thickness in the range of several hundredths to several tenths of millimeters. The foil 4 has a rectangle in a plan view. As shown in FIG. 4, two foil 4 lateral edges 357 and 359 are circumferentially disposed. Shown in FIG. 5 a foil 4 trailing edge 43 is disposed along the bushing 6 axis, i.e. across the direction of the journal 2 rotation, i.e. across the circumferential direction and towards the direction of rotation. A foil 4 leading edge 38 is disposed along the bushing 6 axis opposite the trailing edge 43. The top foil 4 inner surface faces the journal surface 27, i.e. the journal 2. The top foil 4 outward surface faces the bushing 6 inner surface 11, i.e. the bushing 6.

Under the journal 2 rotation in the direction from the trailing edge 43 to the leading edge 38 with some speed exceeding the lift off speed, between the journal 2 and the foil 4 there is generated a gas lubrication film shaped as a converging wedge which thickness decreases in the direction of journal rotation from an inlet zone 3 to an outlet zone 5. The gas lubrication film is a means without nonrotating mechanical parts to transmit bearing load from the rotating journal 2 to the top foils 4, 7, 9. The foil 4 contacts with the nonrotating journal 2 closer to the outlet zone 5.

In the foil bearing between the top foil 4 and the bushing 6 part 118 there are disposed elastic damping units functioning as an elastic member for damping the journal 2 radial displacement. The elastic-damping units are arranged in the direction of the bushing 6 axis, i.e. across the journal 2 rotation. Besides FIG. 1, the elastic-damping units are shown in FIGS. 2, 3, 4, 5, 13. Two enlarged elastic-damping units' parts, marked in FIG. 1 by circles I, II, are shown in FIGS. 2 and 3 respectively. Shown in FIG. 1 one of the elastic-damping units comprises a bump foil 20 and two frictional elements: an inner foil 22 and a supporting foil 16. FIG. 4 is a partial longitudinal sectional view of the bearing of FIG. 1 by a plane running through the bushing 6 axis.

Hereinafter the frictional elements mean elements rubbing with each other and with other bearing components, for example, the top foil and the housing member. More detailed descriptions will be described further.

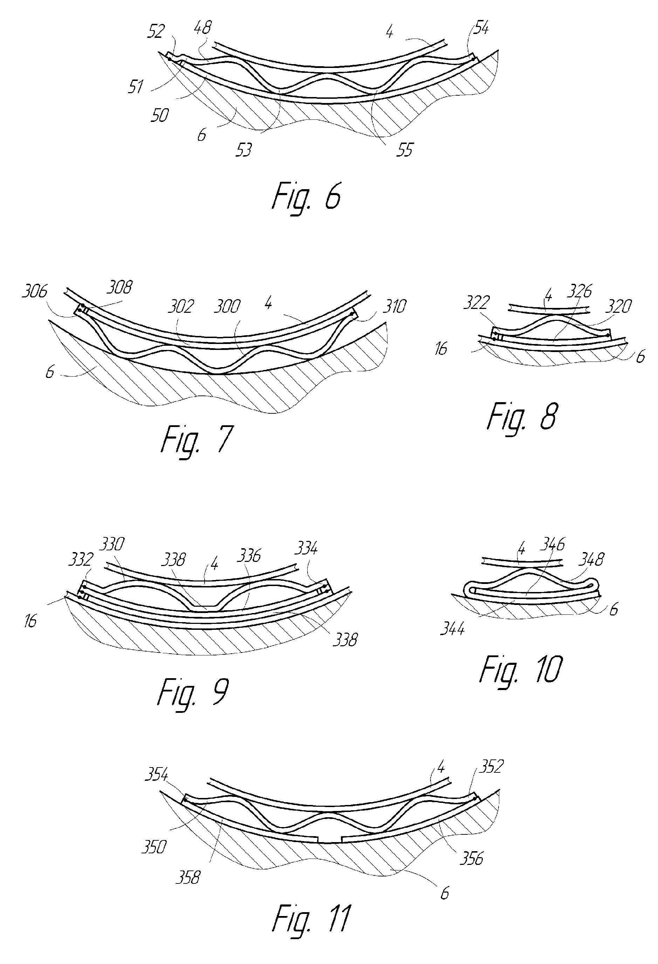

Bump foils may be manufactured by press or plastic deformation of either an entire foil fragment or several separate foil fragments connected, for example, by welding. The bump foil is normally manufactured by deforming a flat foil which thickness is usually about one tenth of millimeters. The bump foil surface is corrugated or wave-shaped and normally cylindrical. The bump foil profile in section may be different, for example, zigzag-shaped, or specifically sinusoidal as shown in FIG. 5, or arc-shaped, or arc-shaped in combination with straight parts as shown in FIG. 9, or otherwise shaped.

The term "a bump foil" is comprised to a more common term "a wave-shaped element". Another wave-shaped element, which can be used instead of the bump foil, may be manufactured without plastic deformation, for example, by wire electrical discharge machine (EDM) cutting a continuous metal piece, or manufactured of metal, plastic material or other suitable elastic materials. Such a wave-shaped element profile may be similar to the bump foil profile. A quantity of waves in the wave-shaped element may be from one to several tens or a little more under a very big bearing diameter, for example, a 0.2 m diameter.

Another elastic-damping unit comprises a bump foil 40 contacting with the foil 4 and two frictional elements: the supporting foil 16, disposed between the bump foil 40 and the bushing 6, and an inner foil 42 disposed between the foils 40 and 16. A bump foil 40 waves' height in the radial direction (in the direction normal to the journal 2 surface 27) is less than respectively a foil 20 waves' height as shown in FIG. 5. As shown in FIGS. 2, 3 the bump foil 40 is anchored along its ridges by its first edge 39 to the foil 16 through a narrow foil 44. The bump foil 40 is anchored along its ridges by its second edge 45, which is opposite the first edge 39, to the inner foil 42. All the elastic-damping units, disposed between the foil 4 and the bushing 6, have the common frictional element, i.e. the supporting foil 16.

As shown in FIGS. 1, 4, between the top foil 4 and the bushing 6 across the circumferential direction there are arranged nine elastic-damping units but a number thereof can be from one to several tens. Between the top foil 4 and bushing 6 there is circumferentially arranged one elastic-damping unit but a number thereof can also be several units.

FIG. 5 is a view of a turned part of FIG. 1 illustrating an elastic-damping unit, which comprises the bump foil 20 and a pair of frictional elements: the supporting foil 16 and the inner foil 22. The bump foil 20, disposed between the top foil 4 and the inner foil 22, contacts with the foil 4 outward surface. The bump foil 20 has seven projecting roundish parts (including waves' tops or ridges 371, 372, 373, 375) facing the journal 2 and contacting with the foil 4. As shown in FIG. 9, the bump foil can have another practically flat projecting part 331. The bump foil 20 is anchored along its ridges by its first edge 19 to the foil 16 through a narrow foil 18, for example, by spot welding. The foils 20 and 18 are equal in thickness for simplifying anchoring. The bump foil 20 is anchored along its ridges by its second edge 17, which is opposite the first edge 19, to the foil 22.

The bump foil 20 has eight other parts (including projecting parts at the bump foil 20 edges 17, 19 and six waves' ridges 367, 369 etc.) projecting towards the bushing 6 and the foils 22, 16 and contacting with the inner foil 22. The inner foil 22 is in contact with the foil 16. Bearing load is transmitted from the top foil 4 to the bushing 6 through the foils 22, 16 parts disposed opposite the bump foil 20 projecting parts. For example, from a projecting part 369 bearing load is transmitted through the foils 22, 16 circumferentially limited by points 351 and 361. In order to enhance damping between the foils 20, 22 and also between the foils 22, 16 there can be mounted smooth foils unfixed relative to the elastic-damping unit. Hereby a friction coefficient between the smooth foils and the foils 20, 22 must be more than the friction coefficient between the foils 20, 22.

The supporting foil 16 is in contact with the foil 20 projecting part 19. Frictional elements, i.e. the foils 22, 16, are disposed from one bump foil 20 side. Between anchoring lines of the foils 22 and 16 to the foil 20 a distance is equal to seven bump foil 20 wave lengths. Eight contact lines between the frictional elements are disposed opposite the foil 20 projecting parts. A quantity of the bump foil parts, projecting towards the frictional elements, may be two or more.

The top foils 4, 7, 9 are circumferentially arranged between the journal 2 and the respective bushing 6 parts 118, 120, 122. Between the foils 7, 9 and the respective bushing 6 parts 120, 122 there are disposed elastic-damping units similar to the units disposed between the top foil 4 and the bushing 6 part 118.

As shown in FIG. 5, one of the bump foil 20 waves has a projecting part, or a convexity bump with edges 367, 369 which serve as the bump foil 20 projecting parts facing the foil 22, i.e. the bushing 6, and the projecting top 373 facing the journal 2, i.e. the foil 4 facing another wave shaped element side. The bump 20 edges 17, 19 project to the foil 22. The bump foil 20 convexity comprises two surfaces, inclined to the top foil 4 and connecting respective projecting parts 367 and 373, and 369 and 363. Another foil 20 wave has a profile with edges 373, 374 facing the foil 4 and the top 369 facing the foil 22 disposed from the other side of the bump foil 20.

Bearing load is transmitted from the journal to the bushing 6 through the foil 4, the bump foil 20 (through its projecting parts 371, 372 and others facing the journal 2, through its projecting parts 17, 367, 369, 19 and others facing the bushing 6, the inner foil 22, and the supporting foil 16. When the foil 20 is deformed, its projecting parts 367, 369, 19 begin to slide on the foil 22, to which the foil 20 edge 17 is anchored. As a result, friction work between the sliding foils 20, 22 is equal to that between the sliding bump foil 20 and the supporting foil or the housing member in the conventional manner of anchoring the bump foil 20 by one edge to the supporting foil or to the housing member respectively. The foil 20 deformation also causes relative sliding of the inner foil 22 along the supporting foil 16 by means of displacing the foil 20 edge 17, anchored to the foil 22, relative to the foil 20 edge 19, anchored to the foil 16, and an additional frictional work is produced. Therefore as the frictional work as the damping capacity of the elastic-damping unit of FIG. 5 is more than that in the conventional manner of anchoring of the bump foil 20.

Frictional elements of the elastic-damping unit can be different bearing elements having different disposition relative to the bump foil. The elastic-damping unit can have two or several frictional elements and their maximal quantity (depending upon a number of waves in the bump foil, or the ratio of wave height to wave length, or a friction coefficient between rubbing elements in the elastic-damping unit) is limited because too big frictional forces can lock relative sliding between the frictional elements. FIGS. 6...12 and 47 are cross sectional views of other embodiments of elastic-damping units, different to that of shown in FIG. 5 by number of waves in a bump foil, by shape and number of frictional elements, their relative disposition and points of anchoring to the bump foil. FIG. 47 illustrates another further described embodiment of the elastic-damping unit compared to that of shown in FIG. 5. In FIGS. 5...12 bearing load is transmitted through elastic-damping units from the journal to the bearing bushing 6 functioning as the housing member.

The maximal quantity of waves in a bump foil of the elastic damping unit may be approximately equal to that in conventional foil bearings (normally not more than several tens depending upon the bearing diameter). The elastic-damping units can be used in a conventional foil bearing wherein bump foils are supported by the rigid housing member and the bushing is missing.

Shown in FIG. 6 an elastic-damping unit comprises a bump foil 48, the bushing 6 and an inner foil 50 disposed therebetween. The bushing 6 and the inner foil 50 serve as two frictional elements. There are four contact lines between the frictional elements disposed opposite bump foil 48 projecting parts 51, 53, 55, 54. The inner foil 50 contacts with four bump foil 48 projecting parts, including the parts 53, 55, 54, and the bushing 6 contacts with the bump foil 48 projecting part 51. The bump foil 48 is anchored along its first stepped edge 52 to the bushing 6 in the direction parallel to the foil 48 waves' ridges, for example, by spot welding. The inner foil 50 is anchored along its second edge 54, disposed opposite the first edge 52, to the bump foil 48. The foil 50 and the bushing 6 face one bump foil 48 side.

Shown in FIG. 7 another embodiment of an elastic-damping unit comprises a bump foil 300, the top foil 4 and an inner foil 302 radially disposed therebetween. The top foil 4 and the inner foil 302 serve as two frictional elements. The bump foil 300 is anchored by its first edge 306 to the top foil 4 through a narrow foil 308. The bump foil 300 is anchored by its second edge 310, disposed opposite the first edge 306, to the inner foil 302. Bearing load is transmitted to the bushing 6 through the bump foil 300 and frictional elements.

As shown in FIG. 8, yet another embodiment of an elastic-damping unit comprises a bump foil 320 having one wave, the supporting foil 16 and an inner foil 326 disposed therebetween. The supporting foil 16 and the inner foil 326 serve as two frictional elements: Between the foils 16 and 326 there are two contact lines disposed opposite two foil 360 projecting parts. The bump foil 320 is anchored by its edge 322 to the supporting foil 16. The foil 320 is anchored by its second edge, disposed opposite the first edge 322, to the foil 326.

As shown in FIG. 9, yet another embodiment of an elastic-damping unit comprises a bump foil 330 and two frictional elements: a foil 336 together with the supporting foil 16 and an inner foil 338. The foil 336 with the supporting foil 16 is one frictional element because all parts thereof are not displaced relative to each other in the direction across the bump foil 330 corrugations or ridges under deformation of the bump foil 330. The bump foil 330, different to that of shown in FIG. 4 by shape of waves or corrugations, is anchored by its first edge 332 through the foil 336 to the supporting foil 16. The foil 330 is anchored by its second edge 334, disposed opposite the first edge 332, to the foil 338. The foil 338 is disposed between the foils 16 and 336. The foil 330 has three parts projecting to the supporting foil 16, including the parts disposed at the edges 332 and 334. Under deformation of the bump foil 330 an additional frictional work is produced by means of displacement of the foil 338 together with the foil 330 edge 334 relative to the foils 16, 336.

As shown in FIG. 10, yet another embodiment of an elastic-damping unit comprises a bump foil 348 having one wave and two smooth marginal parts 344, 346 serving as frictional elements. The part 344 is disposed between the bump foil 348 corrugated part and the bushing 6. The part 346 is disposed between the bump foil 348 corrugated part and the part 344. Hereby the frictional elements 344, 346 are the bump foil 348 continued parts and their additional anchoring is not required.

As shown in FIG. 11, yet another embodiment of an elastic-damping unit comprises a bump foil 350 and as frictional elements two foils 356 and 358 each disposed between the bump foil 350 and the bushing 6. The foils 356 and 358 each have with the bushing 6 two contact lines disposed opposite two respective bump foil 350 projecting parts. Compared to aforesaid embodiments of the elastic-damping unit, therein the frictional elements do not overlap each other and do not have contact lines therebetween. The bump foil 350 is anchored by its first edge 354 to the foil 358. The bump foil 350 is anchored by its second edge, disposed opposite the first edge 354, to the foil 356. Under deformation of the foil 350 its projecting parts slide along the foils 356 and 358 and frictional work of this sliding is less than that of sliding of the foil 350 along the bushing 6 under conventional anchoring the bump foil 350 by its edge to the bushing 6 under equality of the respective friction coefficients. In the elastic-damping unit shown in FIG. 11 an additional frictional work is produced by means of sliding of one or both foils 356 and 358 along the bushing 6. The summary frictional work (as a result of sliding of the foils 356, 358 on the bump foil 350 and the bushing 6) may be as more (under an equal friction coefficient) as less (under various friction coefficients) than the frictional work under conventional anchoring the foil 350. The summary frictional work also depends upon a quantity of the projecting parts disposed opposite each frictional element. Under sliding of one foil, for example, the foil 358 along the bushing 6, the foil 356 and the bushing 6 are considered to be one frictional element. In this case the previously discussed summary frictional work is produced between elements themselves of the elastic-damping unit. Under sliding of both foils 356 and 358 along the bushing 6 the summary frictional work is produced between the frictional element of the elastic-damping unit and the bushing 6 adjoining to one side thereof.

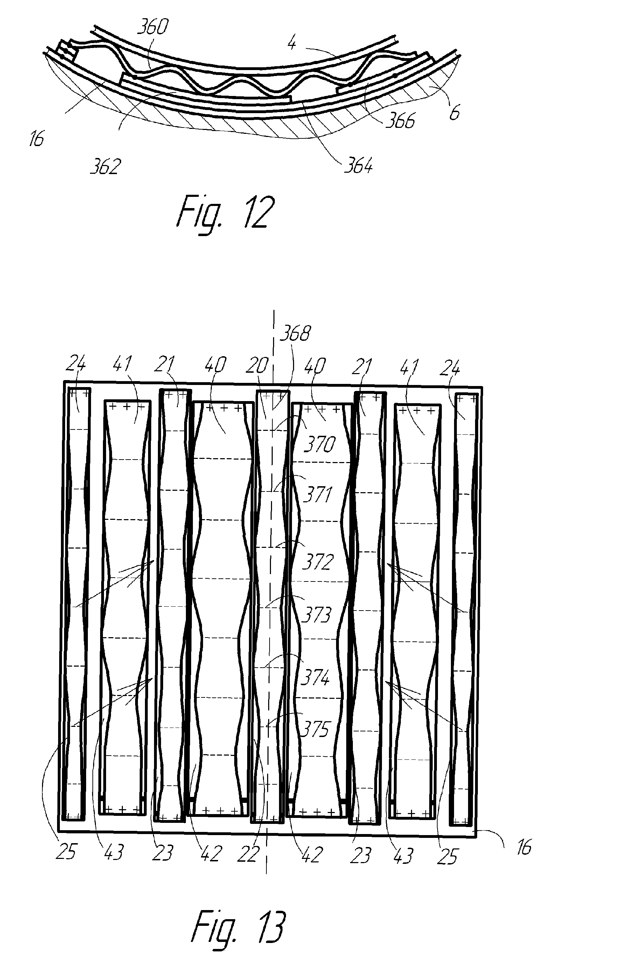

FIG. 12 illustrates another embodiment of a more complicated structure of an elastic-damping unit comprising a bump foil 360 and two pairs of frictional elements contacting with each other: first and second frictional elements, first and third frictional elements. The first frictional element is a foil 362, the second frictional element is a pair of foils 364, 366 anchored to each other, the third frictional element is the supporting foil 16. All three frictional elements face one bump foil 360 side. The anchored foils 364, 366 are disposed as between the foils 362, 16 as between the bump foil 350 and the supporting foil 16. The foil 362 is disposed between the bump foil 360 and the anchored foils 364, 366. The bump foil 360 comprises six parts projecting towards the frictional elements: three of them contact with the first frictional element, two of them contact with the second frictional element and one part contacts with the third frictional element, i.e. the supporting foil 16. Distances between the lines of anchoring first and second, first and third, second and third frictional elements to the foil 360 are equal to three, one and four foil 360 wave lengths respectively. There are three contact lines between the first and second frictional elements, which contact lines are disposed opposite the foil 360 projecting parts, and five contact lines between the second and third frictional elements, which contact lines are disposed opposite the foil 360 projecting parts.

In comparison with aforesaid conventional manner of anchoring a bump foil only by one edge to a bearing housing member or to a supporting foil, in the elastic damping units of the present invention under deformation thereof, when in all contacts between their rubbing elements friction coefficients are approximately equal, in order to enhance damping the next inequality must be satisfied

$$\sum_{i=1}^{L_1} \frac{(N_i - 1)^2}{2} + \sum_{j=1}^{L_2} M_j (K_j - 0.5) > \frac{(L_0 - 1)^2}{2},$$

where $L_0$ - a quantity of the bump foil parts projecting to the frictional elements; $L_1$ - a quantity of the frictional elements; $L_2$ - a quantity of pairs of the contacting frictional elements, i - a number of the frictional elements contacting with $N_i$ projecting parts of the bump foil; $M_j$ - a quantity of the bump foil waves between the lines of anchoring each frictional element of j-pair to the bump foil; $K_j$ - a quantity of the contact lines in each j-pair of the frictional elements disposed opposite the bump foil projecting parts.

Shown in FIGS. 5... 12 elastic-damping units are radially disposed relative to the top foil 4, i.e. normal to the journal 2 surface 27.

Elastic-damping units similar to that of shown in FIGS. 5... 12 can also be parts of an elastic member as for conventional radial foil bearings having the rigid housing member instead of the bushing 6 as for axial foil bearings. Hereby the elastic-damping unit is disposed between the top foil and the housing member.

FIG. 13 is a plan view, unwrapped, of the supporting foil 16 (shown in FIGS. 1, 4) with bump foils anchored thereof and arranged in the direction of the bearing axis, i.e. in the direction of the bump foils' ridges. An elastic member formed by the bump foils is disposed between the supporting foil 16 and the top foil 4. The elastic-damping units comprise bump foils 20, 21, 24, 40, 41. Having the same profile, the bump foils 21, 24 are narrower than the foil 20. Having the same profile, the foils 41 are narrower than the foils 40. Due to the same profile, bump foils 20, 21, 24 waves have the equal height in the direction of their ridges. Due to the same profile, bump foils 40, 41 waves also have the equal height in the direction of their ridges. The higher bump foils 20, 21, 24 waves interchange with the lower bump foils 40, 41 waves in the direction of their ridges.

The higher bump foils 20, 21, 24 are narrower than the lower bump foils 40, 41. Therefore in the radial direction stiffness of the foils 20, 21, 24 is less than that of the foils 40, 41. To decrease stiffness of higher bump foils, their wave length must be more than that of lower bump foils. To provide regularity of stiffness in the axial direction, a quantity of bump foils in the direction of the bearing axis is increasing with growth in bearing axial length and may be in the range of three till several tens.

Under rotor start/stop at a small speed of rotation, dry friction takes place between the top foil 4 and the journal 2. All the journal 2 load to the top foil 4 is received only by the higher foils 20, 21, 24, therefore the bearing stiffness is small. It allows distributing the journal 2 load over a more top foil 4 area thereby decreasing bearing wear under rotor start/stop. In addition, a small bearing stiffness provides as the first as the second low critical rotor speeds to improve rotor dynamics. After rotor speedup under increase in journal load, the top foil 4 displacement increases and the top foil 4 begins to contact with the bump foils 40, 41 causing a significant increase in bearing stiffness.

Besides using in radial bearings, such an elastic member with interchanging bump foils of more or less height can be used in axial foil bearings, wherein an elastic member is disposed between a top foil and a housing member, similar to that in conventional foil bearings.

The bump foils 20, 21, 24, 40, 41 have widths periodically changing in the circumferential direction. Bump foil 20 ridges 371, 373, 375 and the respective waves forming thereof are narrower than bump foil 20 ridges 370, 372, 374 and the respective waves forming thereof. Therefore stiffness of narrower waves having the ridges 371, 373, 375 is less than stiffness of wider waves having the ridges 370, 372, 374. The narrower ridges 371, 373, 375 are interchanging with the wider ridges 370, 372, 374 and so is their stiffness. The ratio in width of wide ridges to narrow ridges as well as the respective waves does not normally exceed two. The bump foils 20, 21, 24, 40, 41 are arranged so that their narrow ridges are disposed along directions, marked by arrows, under inclination, i.e. nonperpendicularly to a bearing midline 368 circumferentially running at the position intermediate between lateral edges 357, 359 of the top foil 4 as shown in FIG. 4 and at the position intermediate between lateral edges of the top foils 7, 9 shown in FIG. 1. Such arrangement of the bump foils causes arising zones of less and more stiffness, circumferentially interchanging and each disposed nonperpendicularly to the circumferential direction.

Shown in FIG. 13 bump foils have zones of small stiffness each formed by one narrower wave than adjacent waves thereof. Formed in such a manner the zones of more and less stiffness are circumferentially interchanging and extending from the foil 4 lateral edges 357, 359 to the midline 368. However under a big number of ridges on a bump foil, for example, under a big journal diameter, each zone of small or big stiffness can be circumferentially formed by several narrow or wide ridges respectively.

Under the lubrication film pressure the top foil 4 of FIG. 1 is radially sagging more in the zones of narrow ridges along the directions, marked by the arrows, wherein stiffness of the bump foils is less. It causes generating grooves of herringbone pattern which disposition on the top foil 4 is marked by the arrows. Such grooves cause generating an additional pressure in the lubrication film thereby increasing the bearing load capacity, resulting from the grooves overpressure effect.

To make effect of increasing pressure in the lubrication film by means of grooves formed on a top foil, it is necessary that the grooves should begin from the top foil lateral edge, i.e. the grooves must be connected with the circumferential space of the bearing. As seen in FIG. 13 all the bump foils have circumferentially interchanging stiffness thereby increasing pressure in the lubrication film. However, contrary to the embodiment shown in FIG. 13, instead of two marginal bump foils 24 disposed at the top foil 4 lateral sides, therein bump foils of constant width can also be mounted. Hereby a relatively small width and consequently stiffness of the bump foils will let grooves form on a top foil under the lubrication film pressure and effect of increasing pressure by means of the formed grooves will be obtained but it will be less than in the embodiment shown in FIG. 13. All further described embodiments of bearings with the elastic member, having interchanging stiffness in the circumferential direction to form grooves on the top foil, meet aforesaid requirements.

A quantity of the grooves, generated under the lubrication film pressure and circumferentially arranged on top foils, as shown in FIG. 13 and others, is approximately equal to that in conventional radial or axial bearings having rigid sliding surfaces. Hereby top foil bending stiffness limits further increase in quantity of grooves.

Grooves on a top foil can be generated in an embodiment of the bearing wherein height of tops of bump foils is constant in the direction of the bearing axis but width thereof periodically changes in the circumferential direction similar to that of FIG. 13.

In yet another embodiment of the bearing instead of one bump foil several bump foils can circumferentially be arranged, which foils have periodically changing widths in the circumferential direction, i.e. the elastic member disposed between the top foil 4 and the bushing comprises several elastic parts in the circumferential direction.

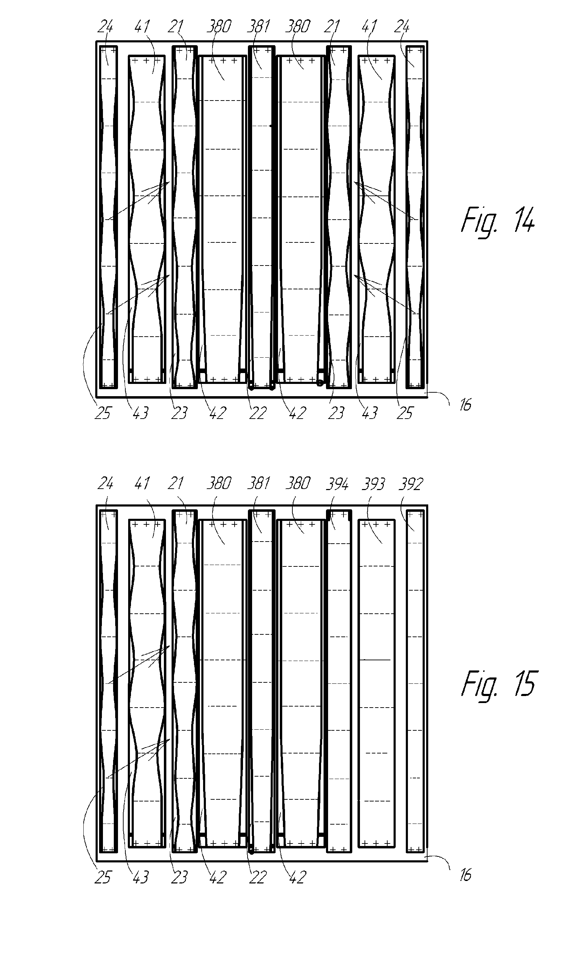

Compared to FIG. 13, FIGS. 14, 15 illustrate other embodiments of bump foils. Shown in FIG. 14 bump foils 381, 380 of constant widths are mounted to the supporting foil 16 (instead of the bump foils 20, 40 of variable widths) and disposed at a position intermediate between the bearing faces. As shown in FIG. 13, under the lubrication film overpressure the grooves on the top foil 4 are generated nearer the bearing faces wherein the bump foils 21, 24, 41 of variable widths are disposed.

Compared to FIG. 13, in FIG. 15 instead of the bump foils 24, 41, 21 of variable widths, bump foils 392, 393, 394 of constant widths are anchored to the supporting foil 16 at one bearing face, thereby grooves of semiherringbone pattern are generated on the top foil 4 only at the opposite bearing face, wherein the bump foils 24, 41, 21 are disposed. Such disposition of grooves of semiherringbone pattern as well as grooves of herringbone pattern also causes the grooves overpressure effect thereby generating an additional pressure in the lubrication film and increasing the bearing load capacity.

Another embodiment of an elastic member can be used to generate grooves on the top foil 4 in the radial foil bearing. Instead of bump foils of variable widths, an elastic perforated sheet, for example, made of rubber, can be disposed between the top foil 4 and the bushing 6. The sheet comprises a plurality of apertures, which periodically change either their diameter or density of their disposition in the circumferential direction by forming circumferentially interchanging zones of more or less stiffness, that are disposed similar to that of shown in FIGS. 13, 15 in the direction from one or both lateral edges of the top foil 4 to its middle part and in the direction of rotation. FIGS. 80, 81 illustrate such a perforated sheet for an axial foil bearing.

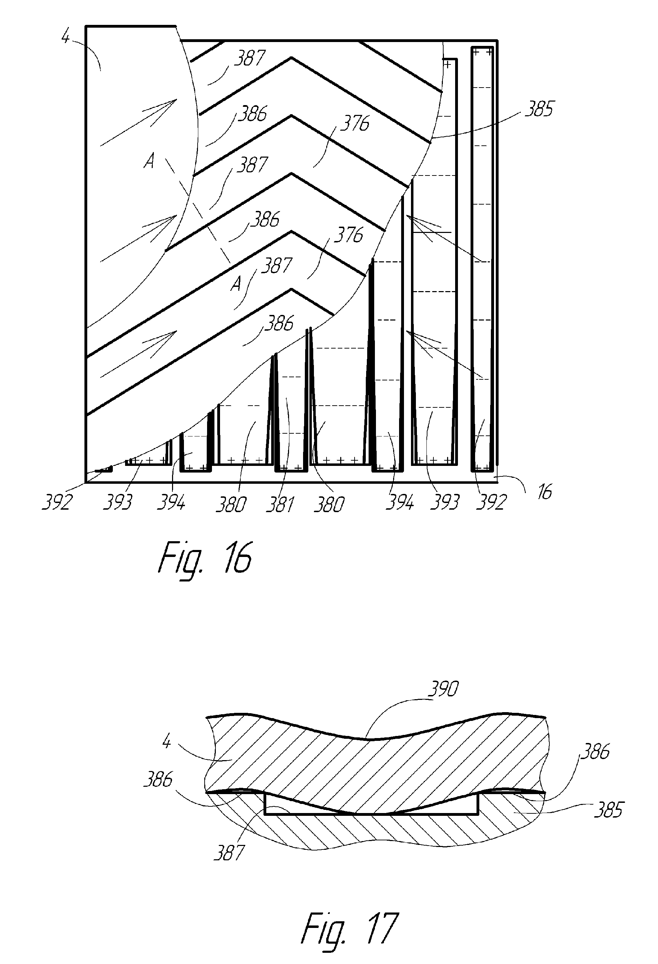

FIG. 16 illustrates an alternative embodiment of a radial foil bearing compared to that of shown in FIGS. 1,4, 13. The radial foil bearing comprises other bump foils and an inner element in order to realize the grooves overpressure effect by means of generating grooves on the top foil 4 in another manner. Anchored to the supporting foil 16, the bump foils 392, 393, 394, 380 of constant widths (similar to conventional bump foils) are symmetrically arranged relative to the bearing midline but one wide bump foil may also be anchored instead of several bump foils. As shown in FIG. 16, between the bump foils and the top foil 4 there is disposed the inner element as an inner sheet 385 having channels as grooves 376 of herringbone pattern, which grooves are-disposed on the surface facing the foil 4. The grooves 376 are symmetrically disposed under inclination to the bearing midline, i.e. nonperpendicularly to the circumferential direction. Symmetrically disposed to the bearing midline pairs of the grooves 376 are connected at the point of running the bearing midline. FIG. 17 is a sectional view of the top foil 4 and the inner sheet 385 along the line A--A of FIG. 16. As shown in FIG. 17, each groove 376 on the sheet 385 is formed by a bottom surface 387 and lateral sides of projections 386 disposed between the grooves. The grooves 376 can be manufactured, for example, by etching treatment of the sheet 385 or by coating a thin metal layer on the sheet 385 in the galvanic manner with following etching treatment on the mask. The groove 376 depth is normally in the range of several till several tens of microns. The inner sheet 385 is axially retained, for example, by anchoring to the foil 4 or by mounting bars 70 and 80. The inner sheet can have through cutouts of herringbone pattern as channels, which disposition is similar to that of the grooves 376.

Under using the inner sheet, having grooves in order to form other grooves on the top foil, between a bearing bushing and the inner sheet may be mounted a conventional elastic member, comprising one or several bump foils of constant or steadily changing stiffness, for example, as it is used in conventional foil bearings.

Under the lubrication film pressure the top foil 4 is sagging over the grooves 376 in the direction from the journal 2 as shown in FIG. 17. As soon as the top foil 4 is in contact with the groove bottom surface 387 and under further increase in lubrication film pressure, a groove 390 depth on the foil 4 surface will remain constant and be equal to the groove depth on the sheet 385, contrary to that of shown in FIG. 1 wherein the groove depth on the foil 4 surface constantly increases with increase in lubrication film pressure. Formed on the top foil 4, the grooves 390 of herringbone pattern cause generating an additional pressure in the lubrication film thereby increasing the bearing load capacity, resulting from the grooves overpressure effect.

To make effect of increasing the lubrication film pressure by means of forming grooves on a top foil, it is necessary that the grooves should begin from the top foil lateral edge, i.e. the grooves must be connected with the bearing circumferential space. Providing it, the bearing embodiment of FIG. 16 comprises the inner sheet 385, which is equal to the top foil 4 in axial length and has the grooves beginning from the top foil 4 lateral edge. However, contrary to the embodiment shown in FIG. 16, the inner sheet with grooves can have an axial length more than that of the top foil 4 thereby increasing a bending stiffness of the top foil along its lateral edges and a little decreasing the lubrication film pressure by means of formed grooves on the top foil.

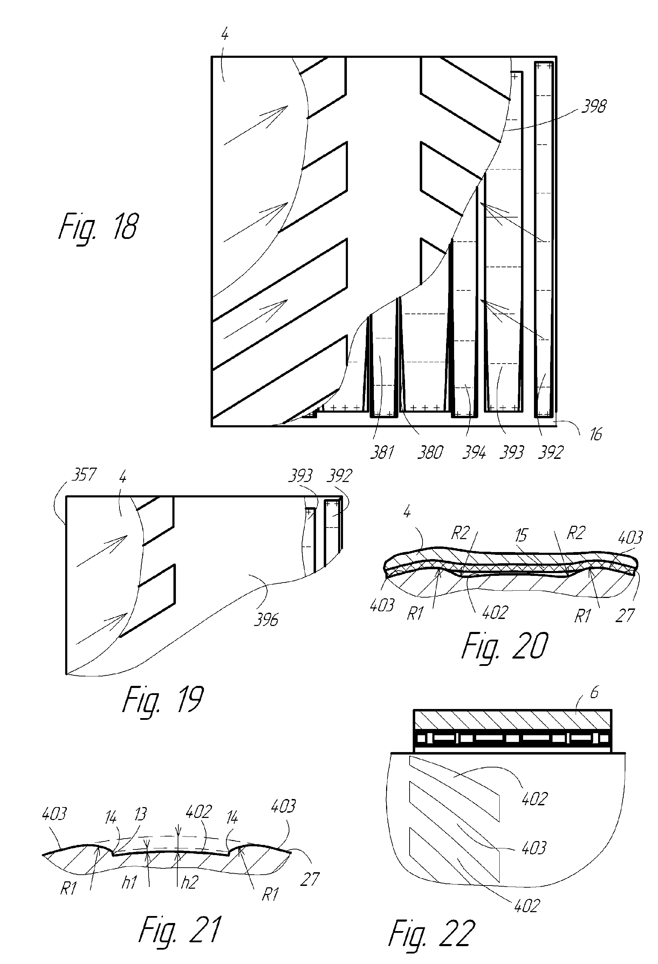

FIG. 18 is a plan view of another embodiment of an inner sheet, wherein an inner sheet 398 has shorter grooves compared to that on the inner sheet 385 of FIG. 16. The grooves on the inner sheet 398 do not reach the midline thereof, which midline is running along the bearing midline. Thus under the lubrication film pressure, grooves on the top foil 4 are generated nearer the bearing faces, wherein are disposed the grooves on the sheet 398.

FIG. 19 illustrates yet another embodiment of an inner sheet, wherein an inner sheet 396 has grooves disposed in another manner, compared to that of shown in FIG. 18. The grooves on the inner sheet 396 are disposed only at one bearing face, i.e. disposed beginning from the top foil 4 lateral edge 357. Therefore under the lubrication film pressure the grooves on the top foil 4 are generated only beginning from one bearing face as it is seen in case of the grooves on the sheet 396.

Shown in FIG. 4 the journal 2 has grooves of herringbone pattern on the surface 27. The grooves are disposed under inclination to the bearing midline, i.e. nonperpendicularly to the circumferential direction, i.e. in the direction of the rotating journal 2 surface. The journal 2 has a smooth cylindrical surface between rows of the grooves. The groove width is equal to a distance between the opposite groove boundaries. Grooves' arrangement on the journal 2 is similar to that of the conventional radial grooved bearing with the rigid nonrotating surface. The grooves of both rows can be pairwise connected in the middle part of the journal.

FIG. 20 is a partial cross sectional view of a groove together with the top foil 4 along the line A--A of that of FIG. 4. The groove has a bottom formed by a surface 402. The surface 402 and a surface 403 of the projection disposed between the grooves (wherein the surface 403 is part of the cylindrical journal surface 27) are connected by a transient surface, having a convex part of a radius $R_1$ and a concave part of a radius $R_2$. The radii $R_1$, $R_2$ can be various along the transient surface from the surface 403 to the surface 402. The groove depth, i.e. a radial distance between the projection disposed between the grooves and the groove bottom, is about several microns. The transient surface profile along lines B--B and C--C of FIG. 4 is similar to the profile of FIG. 20. A quantity of grooves on the journal in the circumferential direction is normal for the radial grooved bearing with the rigid nonrotating surface and not exceeding several tens increasing with rowth in the journal radius. A quantity of the grooves is additionally limited by the rounding transient surface, dividing the grooves' cavities and the projections disposed between the grooves.

Under rotor start/stop a top foil 4 antifriction coating 15 has a dry friction with the journal surface. Under the journal 2 load the foil 4 is sagging between the projections 403 (disposed between the grooves) into the grooves and the antifriction coating 15 contacts with the transient surface convex part. A small radius of the transient surface causes increasing contact stress between the transient surface and the antifriction coating and an intensive wear thereof. Otherwise increase in the transient surface radius causes decreasing contact stress and lessening antifriction coating wear.

Under journal rotation such grooves generate an additional pressure in the lubrication film thereby increasing the bearing load capacity. The grooves overpressure effect will be more considerable under rotor start/stop when the minimal thickness of the lubrication film is small. Increase in the bearing load capacity under rotor start/stop provides decreasing the bearing journal lift off speed and touch-down speed.

Under dry friction of a top foil and a journal, contact pressure will be different in bearings respectively loaded by a relatively light or heavy rotor. To provide a small top foil wear under a small contact pressure, when increase in pressure is obtained by means of grooves on the journal, the radius $R_1$ of the transient surface convex part may be relatively small, for example, ten times as much as the groove depth. To provide a small top foil wear under a big contact pressure, the radius $R_1$ must be significantly more.

FIG. 21 is a cross sectional view of another embodiment of a groove on the journal, compared to that of shown in FIG. 20. In FIG. 21 the groove cross profile is a convex surface of the radius $R_1$, which surface transits to a surface 13 by forming a sharp edge, i.e. a jut 14. The jut 14 height above the groove bottom is $h_1$. The groove depth is $h_2$. If the ratio of $h_1$ to $h_2$ is small (it does not exceed one third, for example) under contact of a top foil and a journal, the top foil will contact with the journal along the groove convex surface (as shown in FIG. 21) and the top foil antifriction coating wear will be small. Change in the groove cross profile due to increasing $h_1$ till exceeding some value causes an additional contact of the top foil and the journal along the transient surface jut 14 and antifriction coating wear will sharply increase. The maximal ratio of $h_1$ to $h_2$, providing a small top foil antifriction coating wear, will decrease with increase in journal contact pressure to the top foil.

FIG. 22 illustrates another embodiment of arrangement of grooves on the journal, compared to that of shown in FIG. 4. In FIG. 22 the grooves, having the bottom 402, are disposed on the journal only at one bearing face nonperpendicularly to the circumferential direction.

Shown in FIG. 1 a force sensor 94 is mounted within a bushing 6 part 118 slot 111. The pushing bolt 104 is abutted against the force sensor 94 through a cap 102 spherical part. The cap 102 is supported by a pushing bolt 104 threadedly mounted to the supporting sleeve 96. Bearing load is transmitted from the bushing 6 part 118 to the sleeve 96 through the force sensor 94, the cap 102 and the bolt 104.The cap 102 has flat lateral faces 108, 109 adjoining to slot 110 lateral sides within the supporting sleeve 96. Therefore the cap 102 moves without rotation under the bolt 104 rotation.

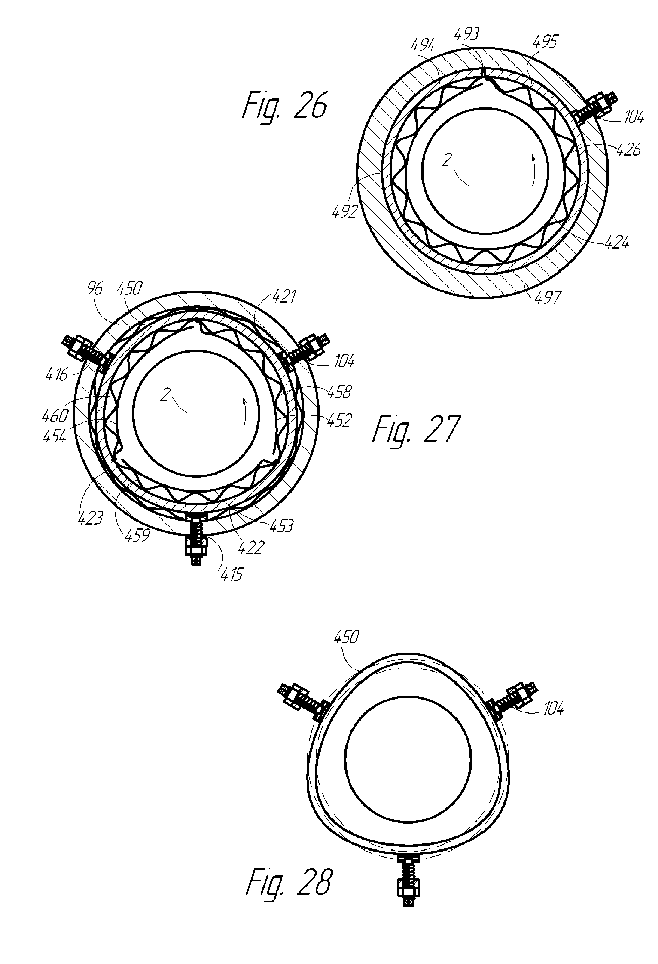

Contacting surfaces of the cap 102 and the force sensor 94 can be of any suitable shape for circumferential and axial turning the bushing 6 part 118 with respect to the cap 102. Without a force sensor, contacting surfaces of the bushing 6 and the cap 102 may suitably be shaped. FIG. 26 illustrates an embodiment without a cap, wherein the pushing bolt 104 is directly abutted against a bushing 492.

The maximal turning angle of the bushing parts in the axial direction can be different from the respective angle in the circumferential direction. Therefore, instead of spherical shape, the cap 102 can have a different curvature of the contacting surface in the axial and circumferential directions, for example, the contacting surface can be toroidal.

FIG. 23 illustrates another embodiment of a cap, compared to that of shown in FIG. 1. In FIG. 23 instead of the cap 102, which receives load from the bushing 6 part 118 through the force sensor 94 and transmits it to the bolt 104, is used a cylindrical elastic cap 97, for example, manufactured from a wire net formed by braiding wires. The cap 97 radial stiffness is about or a bit more than the stiffness of the bump foils disposed between the journal 2 and the bushing 6. Compliance of the cap 97 allows the bushing 6 part 118 to turn axially and circumferentially, providing a big contacting surface and decreasing contact stress and contact wear under transmitting load from the force sensor 94 to the cap 97. The elastic material has a big internal friction thereby providing capability to damp bushing 6 oscillations relative to the sleeve 96.

As shown in FIG. 4 an arm 105 is threadedly mounted and fixed to the bolt 104 by a nut lock 107. The arm 105 end is disposed within a ring 98 slot 106. The pushing bolt 104, the arm 105 and the ring 98 are parts of a loading device to control bearing preload, hereinafter the control bearing preload device or the preload device. The preload device allows the bushing 6 part 118 to be displaced radially, i.e. towards and from the journal 2 surface under operating conditions. The control bearing preload device also comprises pushing bolts and arms (similar to the bolt 104 and the arm 105), which are used for synchronous radial displacement (shift) of the bushing 6 parts 118, 120, 122 towards or from the journal 2 surface as well as a driver of the control bearing preload device, which driver rotates the turning ring 98. This driver can be, for example, electromagnetic or pneumatic. Synchronous radial displacement of the bushing 6 parts 118, 120, 122 means their relative radial displacement.

When the ring 98 rotates around the bearing axis in one direction, it causes rotating the bolt 104 and its radial movement to the journal 2 by means of the arm 105. The bolt 104 displaces the bushing 6 part 118 to the journal through the cap 102 and hereby the bushing 6 parts 120, 122 are radially displaced to the journal under the respective operating pushing bolts. Hereby bearing preload increases and it causes increasing bearing stiffness and damping under rotor rotation. When the ring 98 rotates around the bearing axis in the opposite direction, it causes a radial displacement of the respective pushing bolts and the bushing 6 parts 118, 120, 122 from the journal and decrease in bearing preload and stiffness. The ring 98 rotation angle controls bearing preload defined by the preload device control system by means of the force sensor 94 and similar force sensors disposed within the bushing 6 parts 120, 122. The preload device control system outputs control signals to the preload device driver.

A simplified embodiment of the control bearing preload device can comprise just one pushing bolt 104 radially displacing the bushing 6 part 118. Hereby the bushing 6 parts 120, 122 are supported by conventional supporting means, which are stationary anchored to the sleeve 96 and have a spherical shape, for example, similar to the cap 102, at the place of contact with the bushing 6. In this case under the action of the pushing bolt the bushing 6 part 118 is radially displaced to the bearing centre thereby increasing the bearing stiffness and damping.

A force sensor can be missing and boundaries of radial displacement of the bushing 6 part 118 can be set, for example, by means of abutments limiting rotation and movement of the pushing bolt towards or from the journal 2.

In another embodiment of the foil bearing, comprising a simplified control bearing preload device, the bushing 6 part 118 can radially be displaced under the pushing bolt 104 while the bushing 6 parts 120, 122 are fixedly anchored relative to the sleeve 96. Hereby under the action of the pushing bolt 104 the bushing 6 part 118 is radially displaced to the bearing centre relative to the parts 120, 122 thereby increasing the bearing stiffness and damping.

FIG. 23 is a longitudinal sectional view of another embodiment of the control bearing preload device and the force sensor for the radial foil bearing compared to that of shown in FIG. 1. As shown in FIG. 23 instead of the supporting sleeve 96 and the force sensor 94 are used a supporting sleeve 218 and the cap 97. The elastic cap 97, having the form of cylinder or disc, is disposed within the bushing 6 part 118 slot and mounted to a force sensor 213 face. By another face the force sensor 213 is abutted against a piezoceramic actuator 216 mounted within a screw 214 bore. The screw 214 is threadedly mounted in the radial direction to the supporting sleeve 218 and radially positioned by a nut 215. Bearing load is transmitted from the bushing 6 part 118 to the sleeve 218 through the cap 97, the force sensor 213, the actuator 216 and the screw 214.

Under voltage supplied through inputs 220, the actuator 216 expands proportionally to the voltage value. Hereby the force sensor 213 and the cap 97 together with the bushing 6 part 118 are radially displaced to the journal 2 and bearing preload increases. Under decrease in supplied voltage the actuator 216 shrinks and under bearing load the bushing 6 part 118 together with the cap 97 and the force sensor 213 are displaced from the journal 2 thereby decreasing foil bearing preload.

Shown in FIGS. 1, 23 the force sensors 94, 213 can comprise, for example, a strain gauge.

The force sensors 94, 213 can be used on variable purposes: for measuring load to the radial bearing bushing part and comparing it with the admissible load under current rotation speed; for measuring bearing load; for measuring change in bearing preload caused by heat expansion of the journal and the bearing parts.

To measure load to the bearing bushing part instead of the force sensor 94 can be used the strain gauge axially mounted to the supporting sleeve 96 outward surface (shown in FIG. 1) nearby the pushing bolt 102. Hereby the supporting sleeve 96 part, comprising the pushing bolt 104 and the strain gauge both mounted to thereof, is circumferentially separated by slits, axially extended, from the rest part of the sleeve 96 and connected with it just at faces of the sleeve 96. Load from the bushing 6 part 118 to the separated sleeve 96 part causes deformation measured by the strain gauge. In this case the force sensor 94 is not used and load from the bushing 6 part 118 is directly received by the cap 102.

Shown in FIGS. 4, 23 embodiments of the control bearing preload device together with bump foils 92, 93, mounted between the bushing 6 and the sleeve 96, can also be used in hydrodynamic foil bearings comprising bushing tilting parts, wherein a gas lubrication film or a liquid lubrication film is generated between the bushing surface and the journal.

FIGS. 24...32 are cross sectional views of embodiments of a radial foil bearing differing by control bearing preload devices, bushings, top foils, bump foils compared to that of shown in FIGS. 1,4.

FIG. 24 illustrates a foil bearing comprising an inner sheet, a bump foil and a bushing with just one top foil 424. A bushing 410, mounted within the sleeve 96 instead of the bushing 6, has three groups of slits 412, 413, 414, each forming in cross section a zigzag-shaped bridge, which bridge extends along the bearing axis to provide for bushing 410 parts 418, 419, 420 relative synchronous radial and circumferential displacements. Hereinafter a relative radial displacement of bushing parts means synchronous displacement thereof towards and from the bushing bearing centre. The top foil 424 and a bump foil 426 are anchored to the bushing 410 by spot welding at a point 429. The bump foil 424 tops disposed near a top foil trailing edge 431, i.e. at the beginning of the lubrication film, have less heights compared to other tops. Lengths of several bump foil 426 waves are equal to a circumferential distance between their tops, for example, between tops 433 and 434, and the lengths decrease from the top foil 424 trailing edge 431 in the direction of journal rotation. Lengths of the following bump foil 426 waves can be constant. Between the top foil 424 and the bump foil 426 is disposed an inner sheet 428 having grooves similar to that of shown in FIG. 16 on the side facing the journal. These grooves of herringbone pattern are circumferentially arranged from an inner sheet edge 427 till the point 429 of anchoring the inner sheet. Bump parts 421, 422, 423 mounted between the sleeve 96 and the bushing 420 are used for damping possible oscillations of the bushing 410 parts 418, 419, 420.

Under the rotating journal 2 an air is circumferentially entrained from the lubrication film inlet at the top foil 424 edge 431 and overpressure is generated between the top foil 424 and the journal 2 surface. Under pushing bolts 104, 415, 416 displacements to the bearing centre, the bushing 410 parts 418, 419, 420 are also displaced to the bearing centre and circumferentially approach to each other by means of compliant bridges therebetween. Therefore thickness of the lubrication film between the journal 2 and the top foil 424 decreases, while pressure in the lubrication film increases as well as the bearing stiffness and damping.

The lubrication film overpressure provides the top foil 424 sagging at the place where grooves are disposed on the inner sheet 426. This sagging is similar to the top foil 4 sagging shown in FIG. 17. The grooves on the top foil 424 cause sucking the circumferential air into the lubrication film from the foil bearing faces and increasing the lubrication film pressure. Contrary, in a foil bearing without grooves an air comes out of the lubrication film through the foil bearing faces and pressure in the lubrication film decreases. Therefore in the foil bearing without grooves, the bushing 410 parts 418, 419, 420 admissible displacements to the bearing centre are less than in the foil bearing with generated grooves (shown in FIG. 23).

Compared to that of shown in FIGS. 1, 4, another possible bearing embodiment instead of the bushing 6 has a bushing of three parts, similar to the bushing 6 parts 118, 120, 122 but separated (not connected by bridges). Thereby the parts are capable to radially be displaced relative to each other under the three pushing bolts, including the pushing bolt 104.

FIG. 25 illustrates another embodiment of the foil bearing different from that of shown in FIG. 24 by circumferential distribution of wave lengths of a bump foil 438. The wave lengths of the bump foil 438 portion, disposed between the pushing bolts 415 and 416, decrease in the direction from the bolts 415 and 416 to a group of the slits 414 disposed at the position intermediate between ends of the portion, i.e. distance between tops 442/443 and 445/446 is more than that between tops 440/441. Respectively the wave lengths of the bump foil 438 portion between the bolts 415/104 decreases in the direction from the bolts 415 and 104 to the slits 413. Such a circumferential distribution of the bump foil 438 wave lengths provides a constant lubrication film load to the foil 438 part disposed between the groups of slits 414 and 413.

Under radial displacement of the rotating journal 2 in the direction of the bolt 415, the maximal radial journal displacement, further the journal displacement, relative to the bushing 410 part 419 takes place opposite the bolt 415 where the wave length is maximal and stiffness is minimal. Decrease in wave lengths of the foil 438 from the bolt 415 to the group of the slits 414, 413, i.e. to the part 419 edges, provides increase in radial stiffness of the foil 438 and the constant lubrication film load to the foil 438 in the part disposed between the groups of the slits 414 and 413.

Under the journal 2 displacement in the direction of the slits 414, the bushing 410 part 419 turns and orientates so that the maximal radial journal displacement relative to the bushing 410 part 419 also takes place opposite the bolt 415. It provides the constant lubrication film load to the foil 438 over all the bushing 410 part 419.

FIG. 26 illustrates a simplified embodiment of the control preload device without an inner sheet between the foils 424, 426 compared to that of shown in FIG. 24. Instead of the bushing 410 with three groups of slits forming the bridges between the bushing parts, a bushing 492 of FIG. 26 as a cut ring is mounted within the supporting sleeve 96. The bushing 492 is cut along its axis so that between its parts 494, 495 there is an axial slit 493 allowing the parts 494, 495 to be displaced radially and circumferentially with respect to each other. The pushing bolt 104 is abutted against the bushing 492 part 495 outward side and receives bearing load. The bushing 494 part 495 has a sufficiently big radial compliance so it is deformed under the bolt 104 load.

Under the rotating journal 2 is generated overpressure between the top foil 424 and the journal 2. Under the pushing bolt 104 displacement to the bearing centre, the bushing 492 part 495 is also displaced to the bearing centre and provides displacing parts of the top foil 424 and the bump foil 426, both disposed opposite the bushing part 495, to the journal centre and increasing bearing preload. Hereby between the journal 2 surface and the top foil 424 a thickness of the lubricant film decreases while pressure thereof as well as the bearing stiffness and damping increases.

FIG. 27 is a view of another embodiment of a bushing and a top and bump foils compared to that of shown in FIG. 1. In FIG. 27 a bushing 450, manufactured as a sleeve without slits, is mounted within the sleeve 96. Between the bushing 450 and the journal 2 are circumferentially disposed top foils 452, 453, 454, between thereof and the bushing 450 therein are respectively disposed bump foils 458, 459, 460. The bushing 450 has a sufficiently big radial compliance so it is deformed under the pushing bolts 104, 415, 416 loads. Therefore the bushing 450 parts are capable to radially be displaced relative to each other.

The bolts 104, 415, 416 displacements to the bearing centre provide deforming the bushing 450, which deformation in enlarged scale is shown in FIG. 28 by continuous lines, the bushing 450 in free condition is shown by dash lines. As seen in FIG. 28, the bushing 450 deformation provides displacing some of its parts, disposed opposite the bolts 104, 415, 416, towards the journal and displacing other of its parts, disposed between the bolts 104, 415, 416, from the journal. Approaching the bushing 450 parts to the rotating journal causes increasing the bearing stiffness and damping.

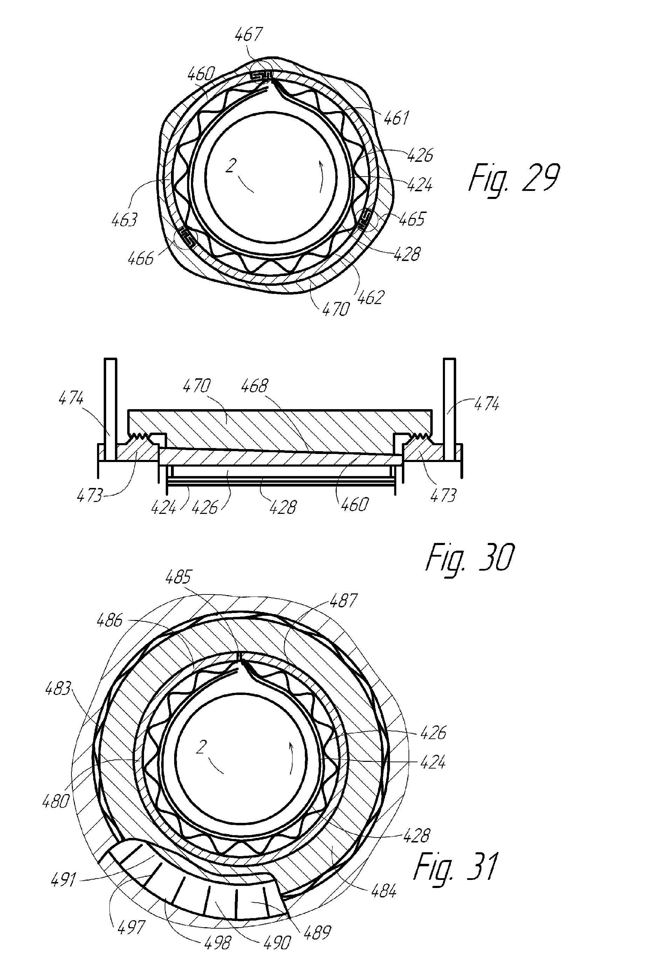

FIGS. 29, 30 are cross sectional and longitudinal sectional views of another embodiment of the control bearing preload device, wherein the preload device, a bushing and a supporting sleeve are different from that of shown in FIG. 24. The annular bushing 460 similar to the bushing 410 of FIG. 24 has three groups of slits 465, 466, 467 providing a radial displacement of bushing 460 parts 461, 462, 463. The bushing 460 has an outward conical surface 468, contrary to the bushing 410. The bushing 460 is mounted within a supporting sleeve 470 by adjoining its outward conical surface 468 to the supporting sleeve 470 conical inner surface. The sleeve 470 is mounted within the machine housing. Nuts 473, threadedly mounted to the sleeve 470 concentrically to the bushing 460, are abutted against both faces thereof. The nuts 473 may synchronously be rotated through arms 474 anchored to thereof, by means of the driver (not shown in FIG. 30). Under rotation the nuts 473 are synchronously displaced along the sleeve 470 axis in one direction and axially displace the bushing 460. Relative axial sliding of the conical surfaces of the bushing 460 and the sleeve 470 causes increase or decrease in inner diameter of the bushing 460 by means of relative radial displacement of its parts 461, 462, 463 thereby respectively decreasing or increasing bearing preload. This radial displacement is provided by the bridges formed by the groups of the slits 465, 466, 467.

Each nut 473 can be replaced by one or several pushing bolts, abutted against each bushing 460 face and anchored with respect to the sleeve 470, wherein axes of the pushing bolts are parallel to the bearing axis.

Under rotating rotor the nuts 473 are synchronously turned by the arms 474 and axially displace the bushing 460. Hereby the bushing 460 inner diameter decreases by means of decrease in diameter of the sleeve 470 inner conical surface, contacting with the bushing 460 surface 468, thereby decreasing the lubrication film thickness, increasing preload, stiffness and damping of the bearing. When the nuts 473 rotate in the opposite direction, bearing preload will decrease.

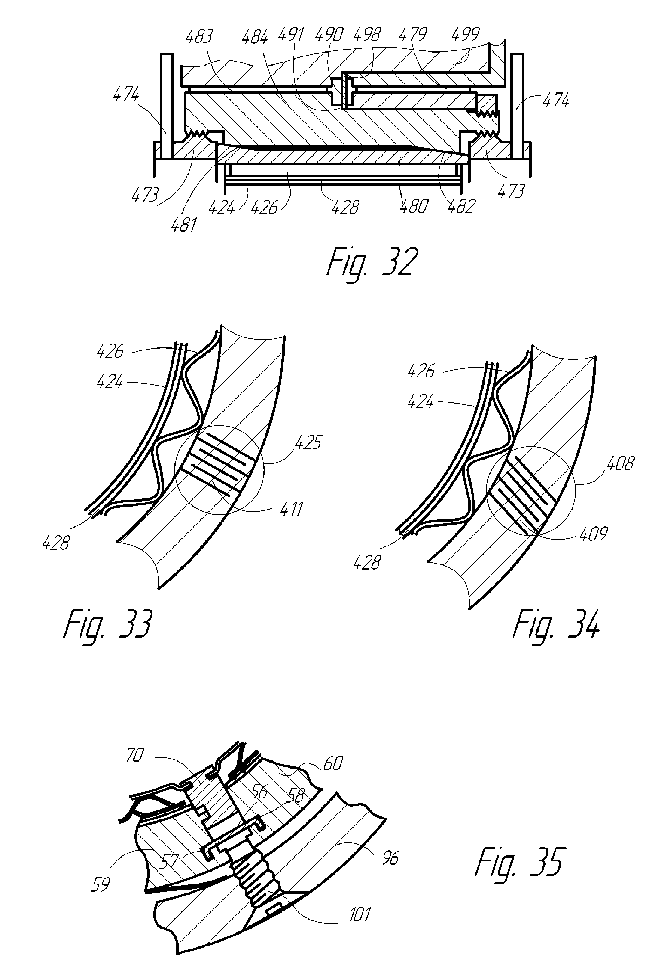

FIGS. 31, 32 are cross sectional and longitudinal sectional views of another embodiment of anchoring a bushing within a housing member in the other manner compared to that of shown in FIG. 26. A bushing 480 is cut similar to the bushing 492 of FIG. 26 and mounted within a supporting sleeve 484, i.e. the housing member, on two conical surfaces 481, 482 to decrease the bushing outward diameter. The sleeve 484 is anchored with respect to a machine housing 499 by a ring, i.e. by an annular element 490 anchored by its inner part 491 to the sleeve 484 outward diameter in the middle part thereof. The ring 490 is anchored by its peripheral part 498 relative to the machine housing 499 and by its inner part 491 relative to the sleeve 484. The ring 490 has (extending from its outward part 498 to its inner part 491) slits 497 providing decrease in bending stiffness of the ring 490 outward part relative to its inner part. The slits 497 can be disposed radially or under inclination to the radius. Such anchoring the housing member provides a big radial stiffness of the bushing 480 and its low angular stiffness relative to the machine housing 499 in order to accommodate bearing misalignment relative to the journal. Such anchoring can be used in conventional radial foil bearings without a bushing. The ring 490 can be without slits, or some of its parts 489, disposed between the slits, can be removed away to decrease a bending stiffness of the annular element, or the slits can begin from the annular element inner part, or the annular element can consist of separate parts circumferentially disposed, for example, plate shaped parts, each anchored by its first side to the sleeve 484 and by its other side to the machine housing 499.

Bump foils 483, 479 are disposed in gaps between the housing member 499 and the sleeve 484 for damping its possible conical oscillations, or to amplify damping conical oscillations of the sleeve 484 there can be mounted elastic-damping units comprising the bump foils 483, 479 (similar to that of shown in FIG. 5).

The control bearing preload device shown in FIGS. 31, 32 is similar to that of shown in FIGS. 29, 30.

The bushing 6 of FIG. 1 is circumferentially retained by screws 101, 103 radially mounted to the supporting sleeve 96. The screws 101, 103 ends are disposed between the bushing 6 parts 118, 120, 122. To limit a circumferential displacement of the bushing 6 in another embodiment, screws can radially be mounted to the sleeve 96 and faced to both pushing bolt 104 sides along the bearing axis, where the ends of these screws are disposed within the bushing 6 part 118 slot 11 of FIG. 4.

The bushing 6 parts 118, 120, 122 are connected by similar bridges, each formed by a group of slits. The bushing 6 parts 118, 122 are connected by a bridge 91 comprising parts 123, 124, between which there is an expansion 29 to mount the mounting bar 70 and the screw 101 end. A slot 31 is disposed along the bearing axis within the expansion 29 from the bushing 6 inner surface 11. The prismatic mounting bar 70 is mounted within the slot 31 extending across the circumferential direction. Such mounting bars are mounted within the respective slots of two other bridges connecting the bushing 6 parts 118, 120, 122. The bridge 91, which profile is zigzag-shaped in section perpendicular to the bushing 6 axis, extends circumferentially and radially. The bridge 91 is formed by slits 112, 113, 114, 115 each extended along the bushing axis. The bridges connecting the bushing 6 parts 118, 120, 122 provide an elastic turn-round and displacement (circumferential and radial) of the parts 118, 120, 122 relative to each other under the action of an external force or a torque. Therefore for sufficient circumferential and radial compliance and symmetrical circumferential displacement of the bushing 6 parts, parts of the bridges must at least be disposed in two different directions, for example, radial and circumferential, as shown in FIG. 1. Thickness of the bridges is about one millimeter. Depending upon the journal diameter and shape of the slits, thickness of the bridges can be more or less than one millimeter. Compliance of the bushing parts relative to each other can be adjusted by thickness, length and disposition of the bridges. For example, to increase radial compliance the bridge can be circumferentially zigzag-shaped similar to its radial zigzag-shaped part.

The slits 112, 113 and others, which thickness is several tenths of millimeters, can be manufactured, for example, by wire EDM cutting.

The bridges, connecting the bushing 6 parts into one workpiece, provide simplifying bearing assembling.

A bridge and slits forming thereof can be extended in one direction. FIGS. 33...34 are enlarged fragmentary sectional views of that of FIG. 24 illustrating embodiments of connecting-links between bushing parts. FIGS. 33, 34 illustrate other embodiments of bridges for the bushing shown in FIG. 24. A zigzag-shaped bridge 411 and a group 425 of slits, forming thereof, are radially disposed, as shown in FIG. 33. In FIG. 34 a zigzag-shaped bridge 409 and a group 408 of slits, forming thereof, are all disposed under inclination to the bushing radius.

FIG. 35 is an enlarged fragmentary sectional view of that of FIG. 1 illustrating another embodiment of a connecting-link between bushing parts. In FIG. 35 bushing parts 59, 60 are manufactured separately from each other and connected by a bridge 56 manufactured as a separated member, contrary to the bushing 6 parts 118, 122 of FIG. 1. The bridge 56 is manufactured of a thin plate, which thickness is about equal or a little less than the thickness of the bridges shown in FIG. 1. The bridge 56, having a U-shaped profile, is mounted within bushing parts 59, 60 slits 57, 58 respectively. The slits 57, 58 of L- shaped profile are disposed opposite each other to retain the parts 59, 60 with a small backlash relative to each other. The other bushing parts are connected in the same manner. Such a connection provides a relative radial and circumferential displacement of the bushing parts.

In a foil bearing with the control bearing preload device, there can be missing connecting-link elements between bushing parts, including bridges made by means of slits or thin plates, , however then assembling the bearing will be more complicated.

Shown in FIG. 1, the bump foils 92, 93, disposed between the bushing 6 part 118 and the supporting sleeve 96, have a less radial stiffness compared to the bump foils disposed between the top foil 4 and the part 118. If a bump foil has several waves in the circumferential direction (similar to the foil 92), their wave lengths and heights can increase in the circumferential direction from the bushing 6 supporting point on the cap 102 to the periphery of the part 118. Such a change in length and height of the bump foil wave decreases foil stiffness to its periphery and increases regularity of bump foil load under the bushing's turn-round causing increasing or decreasing of a gap between the supporting sleeve 96 and the bushing peripheral part.

The foils 92, 93 are disposed between the bushing 6 and the sleeve 96 with some preload and used for damping possible angular oscillations of the bushing 6 part 118. To increase damping, between the bushing 6 and the supporting sleeve 96 can be mounted bump foils comprised into elastic-damping units similar to that of shown in FIG. 5, for example.

As the bushing 6 parts 118, 120, 122 are elastically connected by the bridges, it allows mounting the bump foils 92, 93 of FIG. 1 with preload, causing only a slight radial displacement of the bushing 6 parts to the bearing axis, which displacement occurs almost without increase in bearing preload under start/stop, thereby decreasing contact pressure of the journal 2 to the top foil and consequently the bearing wear.

The top foil 4 of FIG. 1 is circumferentially retained by the mounting bars 70, 80 partially disposed within slots of the bushing 6. The top foils 7, 9 are retained in the same manner by a pair of respective mounting bars.

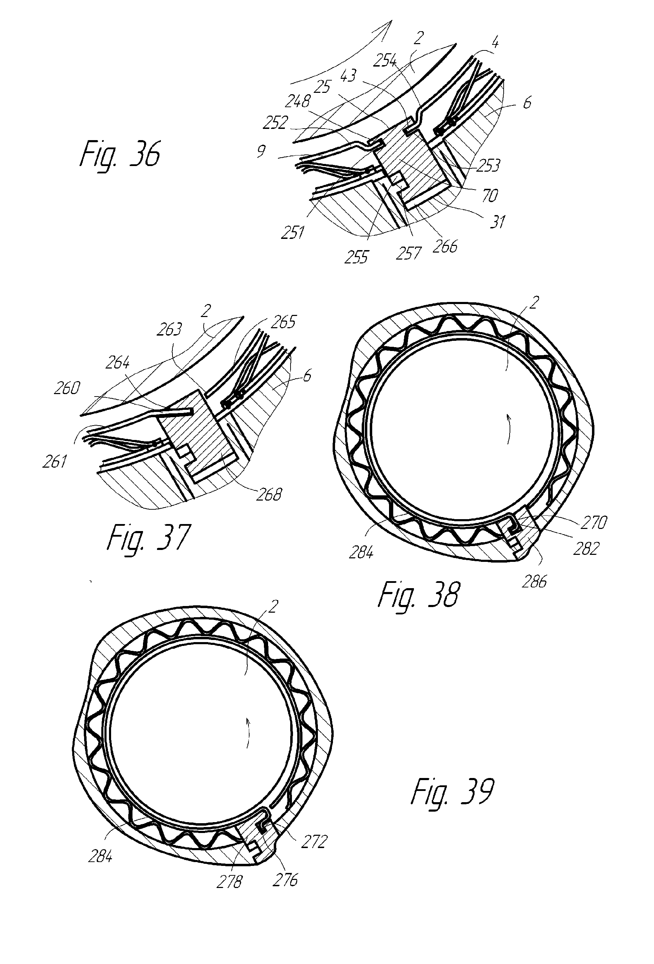

FIG. 36 is an enlarged partial view of that of shown in FIG. 1. The prismatic mounting bar 70 is extended within the bushing 6 slot across the circumferential direction. The mounting bar 70 portion, projecting out of the bushing 6 slot 31 to the journal 2, has three parts: the trailing part, the top part and the leading part. The trailing part, disposed towards the direction of journal rotation, has a slot 251, within which the foil 9 leading part 248 is mounted. The top part facing the journal is limited by a surface 25. The leading part, disposed opposite the trailing part, has a slot 253, within which the top foil 4 trailing edge 43 is disposed. The slots 251, 253 are disposed along the mounting bar 70 in the direction of the bearing axis, i.e. across the circumferential direction. The top foils 4, 7, 9 leading and trailing edges are disposed within slots of mounting bars mounted to the bushing 6 to prevent the top foils from displacements in the circumferential direction towards and against rotation. The top foil 9 can be displaced in the direction of rotation until its leading part is abutted against the slot 251 bottom disposed towards the direction of rotor rotation across the circumferential direction.

Each top foil 4, 7, 9 forms a step at its leading and trailing parts. To prevent contact of the journal 2 with the mounting bar 70, a top foil 9 upper part 252 (projecting to the journal and disposed nearby the foil 9 leading edge) must be closer to the journal surface than the mounting bar 70 top part 25. For this reason the top foil 9 leading edge 248 (disposed within the slot 251) is the bottom of the step thereof, i.e. the leading edge 248 is farther from the journal 2 than the upper part 252. An upper part 254 of the foil 4 disposed at its trailing edge 43 must be farther from the journal surface than the foil 9 upper part 252 and can be as closer as farther from the journal surface than the mounting bar 70 top part. Forming the step at the foil 4 trailing edge is needed for adjusting the optimal distance between the foil 4 upper part 254 and the journal surface.

The top foils 4, 9 leading and trailing parts have a sufficiently simple stepped shape. Absence of nonseparable connection of the top foil to mounting bars (that connection is normally made by welding) makes anchoring the top foils much simpler and cheaper. A small radial distance between the projecting top foil 9 upper part 252 and a contact point of the top foil 9 edge 248 with the mounting bar 70, this distance provides sufficient rigidness and durability of anchoring to retain the top foil in the direction of rotation. The top foils can axially be anchored to the mounting bars by plates anchored to faces thereof.

The bushing 6 has a slot 31, which surface forms a projection 257 inserted into a longitudinal slot 255 of the mounting bar 70 in order to limit displacement of this bar to the bearing centre.

Under the journal 2 displacement towards the mounting bar 70, the lubrication film pressure causes displacing the foil 9 top upper part 252 together with the mounting bar 70 in the same direction. The mounting bar 70 radial displacement is provided by a free space 266 between the mounting bar 70 and the bushing 6.

FIG. 37 illustrates an alternative embodiment of anchoring top foils to that of shown in FIG. 1. A mounting bar 268 of FIG. 37 has an inclined slot 264 disposed in a top portion thereof. A top foil 261 has an inclined leading part 260 which is mounted within the slot 264 to retain the top foil 261 in the direction of rotation. Such disposition of the slot 264 and the foil 261 also provides a gap between the journal and the mounting bar 268 under any journal disposition. A top foil 265 trailing edge 263 not having a special profile cannot be retained by the mounting bar 268. The top foil 260 can be displaced in the direction of rotation till its leading edge abuts against the slot 264 bottom disposed towards the direction of rotor rotation and across the circumferential direction. The top foil 265 can be displaced opposite the direction of rotation till its trailing edge abuts against the mounting bar 268 leading part.

FIG. 38 illustrates yet another embodiment of anchoring a top foil. A top foil 284 leading part 282 is retained within a slot having a L- shaped cross section, which slot is disposed in a mounting bar 286 top part. The top foil 284 can be displaced in the direction of rotation till its leading part 282 abuts against a slot lateral surface 270, disposed towards the direction of rotor rotation across the circumferential direction and axially extended.

FIG. 39 illustrates yet another embodiment of anchoring a top foil. A top foil 270 leading part 276 is retained within a slot having a L- shaped cross-section and disposed in the mounting bar 278 trailing part. The top foil 284 can be displaced in the direction of rotation till its leading part 276 abuts against a slot lateral surface 272 disposed towards the direction of rotor rotation and across the circumferential direction.

Shown in FIGS. 38 and 39 anchoring the top foil to the mounting bar within its slot, having a L- shaped profile, provides extracting the top foil out of the mounting bar only under the top foil displacement in the axial direction, that increases as reliability of anchoring the top foil as comfort under assembling the bearing.

FIGS. 40, 41, 42 illustrate yet another embodiment of anchoring a top foil in an axial foil bearing by means of a mounting bar.

FIG. 40 is a plan view of a separate top foil in an axial bearing. FIG. 41 is a sectional view of the axial bearing of FIG. 40 along the circumferential line A--A. FIG. 42 is a sectional view of the axial bearing of FIG. 40 along the circumferential line B--B. An annular top foil 287 is retained from displacement in the direction of rotation by means of its leading parts 288, 289 each is limited by a L -shaped slit and both are forming a L-shaped profile. The parts 288, 289 are extending across the circumferential direction. The part 288 is disposed within a L- shaped mounting bar 290 slot. The part 289 is mounted within another mounting bar 290 slot, which mounting bar is disposed in the diametrically opposite housing member 291 part. The foil 287 has a step 292 in order to form a converging wedge between the foil 287 and a rotating thrust disc 154 and to provide the bearing load capacity. The foil 287 has more five steps similar to the step 292, two of which, including a step 293, are radially disposed in narrow top foil 287 parts.

The top foil 287 can be displaced in the direction of rotation till its leading part 288 abuts against a slot lateral surface 294 disposed towards the direction of rotor rotation and across the circumferential direction. The mounting bar 290 axial displacement towards the thrust disc 154 is provided by a free axial space between the mounting bar 290 and the housing member 291 similar to the free space 266 between the bushing 6 and the mounting bar 70 as shown in FIG. 36.

A number of mounting bars, retaining the top foil 287, can be three and more under possible increased axial impact loads to the rotor, when loads significantly exceed the bearing load capacity.

Shown in FIGS. 1 and 4 the radial bearing comprises a means to limit a radial displacement of the journal from its central position, hereinafter the journal displacement unloading means or the unloading means used for increasing the ultimate load to the bearing, which load is more than the load damaging the bump foil (i.e. more than the damaging load). FIG. 4 illustrates the unloading means comprising an unloading ring 143, which inner surface, facing the rotor surface, is coated by an antifriction layer 149. The unloading ring 143, mounted to the supporting sleeve 96, can be entirely manufactured of antifriction material, for example, bronze, and thereby the antifriction coating 149 can be missing.

An unloading means can be directly anchored, for example, to the machine housing. However under such an anchoring increase in misalignment of the unloading means inner surface and the journal can be possible.

An unloading means can axially be disposed nearby a top foil, for example, facing a rotor cantilevered part or the opposite rotor cantilevered part. In both cases increase in distance between the bearing and the unloading means decreases effectiveness thereof.

Part of the unloading means, projecting to the journal 2, can have a cylindrical or conical inner surface, which surface can be a ring with projections facing the journal 2. In this case the projections must be circumferentially distributed to limit journal displacement in different directions.

When the rotor rotates with an operating speed under bearing load, which is smaller than the bearing load capacity, the journal is radially displaced and all bearing load is received by bump foils, disposed between the bushing 6 and the journal, and transmitted from a top foil through the bump foils to the bushing 6 and further to the supporting sleeve 96 through ridges facing the bushing, i.e. through the bump foil 20 outward projecting parts 367, 369 of FIG. 5 and other similar parts. When bearing load increases till the bearing load capacity or more, the journal, i.e. the rotor part, starts to contact with the unloading ring 143, and part of the bearing load is transmitted from the journal to the supporting sleeve 96 through the unloading ring 143. Under bearing load, exceeding the bearing load capacity, there begins a dry friction between the top foil 4 and the journal 2. Under further increase in bearing load, almost all the additional bearing load is transmitted through the unloading ring 143 and part of the bearing load, transmitted through the bump foils, does not practically increase. An inner diameter of the unloading ring 143, coated by the antifriction layer 149, is adjusted so that the bump foils 20, 40 are not plastically deformed under a further increase in bearing load till the ultimate load, which exceeds the bearing load damaging the bearing bump foil without the unloading ring 143. Therefore by means of distributing part of bearing load to the unloading ring 143, the ultimate load to the bearing increases till exceeding the load damaging the bump foil. Under decrease in bearing load or change in phase of journal oscillations, contact of the journal with the unloading ring 143 will disappear.

The unloading means is used for operation under conditions of short-time contacts with the rotating rotor surface. As a result of every contact, there occurs wear of the unloading means and the rotor surface. A foil bearing without the foil bearing unloading means can operate without wear for a long time in a wide range of bearing loads from zero up to the bearing load capacity. Arising contact of the rotor surface with the ring 143, when bearing load is less than the bearing load capacity, decreases the maximal bearing load, under which the bearing can operate without wear for a long time. Arising contact of the rotor surface with the ring 143, when bearing load is equal or exceeds the bearing load capacity, does not decrease the maximal bearing load, under which the bearing can operate without wear for a long time, in accordance with the present invention.

Besides protection from damaging a bump foil, an additional advantage of using the unloading means is decreasing wear of a top foil antifriction coating under contacts. Such materials as porous bronze impregnated by Teflon, materials on base of carbonic fiber and others can be used for the antifriction coating 149. Such materials are more wear-resistant under high speed and big contact pressure than the antifriction materials used for the top foil coating in foil bearings.

FIG. 43 illustrates another embodiment of an unloading means, comprising the unloading ring 143, mounted within the supporting sleeve 96 with a small radial gap 148, and bump foils 165 circumferentially extending and radially disposed in several layers between the ring 143 and the sleeve 96. The bump foils 165 are used for damping energy of journal displacement and for decreasing impact loads to the unloading ring 143. Under bearing load, exceeding the bearing load capacity, the unloading ring 143 is maximally displaced under the journal 2 load, which displacement is equal to the radial gap 148 between the sleeve 96 and the unloading ring 148, and there will occur contact between the sleeve 96 and the unloading ring 143. Taking into account the radial gap between the journal 2 and the ring 148 antifriction coating 149, the maximal ring displacement is adjusted so that not to occur plastic deformation of the bump foil. Instead of bump foils, therein can be used other materials dissipated energy of movement, for example, rubber or elastic member prepared from a wire net formed by braiding wires.

FIG. 44 illustrates another embodiment of an unloading means comprising an inner ring 145 mounted within the supporting sleeve 96 with a radial gap, an unloading ring 144, mounted with a small radial gap within the ring 145, and the bump foils 165 disposed in the radial gap between the ring 145 and the sleeve 96. The unloading ring 144 inner surface is coated by an antifriction layer 146. An antifriction layer 147 can be applied as the ring 145 inner surface as the ring 144 outward surface. The layers 146, 147 are made of different materials and the friction coefficient of the inner layer 147 is less than that of the layer 146. For this reason contact of the journal with the layer 146 causes sliding of the ring 144 on the ring 145. Under such a sliding wear of the layer 147 is circumferentially distributed over all its surface thereby decreasing wear thereof.

A ring with an antifriction coating, serving as the unloading means, has following advantages: small outer dimensions, a wide temperature range and simplicity. However a rolling bearing (a ball or roll bearing), serving as the unloading means, can be preferable for big rotors (wherein very big radial loads are possible and the needed free space is available) to limit rotor radial displacements and to increase the ultimate bearing load. FIG. 45 is a longitudinal sectional view of yet another embodiment of the unloading means, comprising a rolling bearing, which is mounted within a supporting sleeve 190 (similar to the sleeve 96) so that a rolling bearing outward ring 191 has a radial gap with the supporting sleeve 190. Radially disposed between the supporting sleeve 190 and the ring 191, bump foils 194 are used for damping energy of radial journal displacement and decreasing impact loads to the unloading ring. Instead of the bump foils 194, therein can be used other materials dissipated energy of movement, for example, rubber. An antifriction coating 193 is applied to the inner surface of a rolling bearing inner ring 192 to prevent overheating and damaging contacting surfaces when the rotor starts to contact with the ring 192, which speeds up and has a less rotation speed than the rotor speed. The antifriction coating 193 has a convex profile in the ring 192 middle part to prevent a rolling bearing inner ring's misalignment under contact with the journal. For decreasing the rolling bearing inner ring's misalignment, there can be used a double rolling bearing, wherein both bearing inner rings are forced on the sleeve contacting with the rotor surface under bearing load exceeding the bearing load capacity.

Under bearing load, exceeding the bearing load capacity, the outward ring 191 is maximally displaced under the action of the journal 2, which displacement is equal to the radial gap between the sleeve 190 and the outward ring 191, and there will occur contact between the sleeve 190 and the outward ring 191. Taking into account the radial gap between the journal 2 and the inner ring 192 inner surface, the maximal rolling bearing displacement is adjusted so that not to occur plastic deformation of the bump foil.

FIGS. 46, 47 illustrate yet another embodiment of an unloading means comprising a rolling bearing. FIG. 47 is a partial cross sectional view of the unloading means. The rolling bearing outward ring 191 is radially supported by an elastic-damping unit comprising a wave-shaped element 195 and two frictional members: foils 196, 197. The wave-shaped element can be manufactured, for example, by EDM wire cutting from a thick-walled ring. A bump, i.e. a wave 205 of the wave-shaped element 195, has edges, i.e. projecting parts 198, 199, which are the wave-shaped element 195 tops or ridges, disposed on one of the wave-shaped element 195 sides wherein the foils 196, 197 extend, and a ridge 201 disposed on the other wave-shaped element 195 side. The wave 205 has a jut 202 or an unloading means, which is disposed under the ridge 201 and extends towards the foils 196, 197. The wave 205 edge 198 is also a wave 212 ridge having edges, i.e. projecting parts 210, 211. Between a jut 202 top 203 and a foil 196 surface 204 facing the jut 202, there is a gap. The gap adjusts the radial displacement of the rolling bearing outward ring 191 under the wave-shaped element 195 maximal deformation. The unloading means 202 increases the ultimate bearing load by preventing the wave-shaped element 195 from damaging due to its big radial displacement. Waves, similar to the wave 205 with the jut 202, are circumferentially disposed around the ring 191. Combined into one wave-shaped element as the wave 205 as other waves have profiles similar to that of the bump foil. One edge of the wave-shaped element 195 is anchored along its ridge to the foil 197 at a point 217. Another edge of the wave-shaped element 195 is anchored along its ridge to the foil 196 at a point 206. The wave-shaped element 195 together with the foils 196, 197 (serving as frictional elements) forms an elastic-damping unit, similar to that of FIG. 5 and having all basic technical features thereof, thereby additionally increasing damping. The wave-shaped element 195 projecting parts 198, 199 contact with the foil 196. The wave-shaped element 195 projecting part 210 is in contact with the outward ring 191. Load between the outward ring 191, facing one elastic-damping unit's side, and the sleeve 190, facing another elastic-damping unit's side, is transmitted through the wave-shaped element 195 and the foils 196, 197.

Shown in FIG. 47 the elastic-damping unit can contact with the ring 191 through an intermediate sleeve contacting through its inner surface with the ring 191 and through its outward surface with the wave-shaped element 195 tops, thereby the elastic-damping unit can axially be displaced relative to the rolling bearing.

Under the action of the journal, contacting with the inner ring 192, the outward ring 191 is radially displaced and deforms the wave-shaped element 195 transmitting rotor load through the rotating rolling bearing inner ring 192 to the sleeve 190. The inner ring 192 is a means not having nonrotating mechanical details and transmitting bearing load from the rotating rotor to the sleeve 190. The wave-shaped element 195 edges are circumferentially displaced relative to each other thereby generating friction of sliding between the ring 191 and the foil 196. The wave-shaped element 195 edges are circumferentially displaced relative to each other thereby generating friction of sliding between the foils 196, 197. The ring 191 radial displacement will stop when the unloading means 202, or other similar unloading means, contacts with the foil 196.

A wave-shaped element similar to that of FIG.47 can be used as the elastic member, entirely or partially, as in radial as in axial foil bearings. In case of the axial foil bearings, wave-shaped element tops, disposed from one bearing side, are abutted against a housing member flat surface. A similar wave-shaped element can also be used (as separately as included into an elastic-damping unit) for bearings of other types, for example, for rolling bearings in machines (wherein rotors are supported by rolling bearings). Profile thickness of arc-shaped part of the wave-shaped element, which thickness determines stiffness thereof, can vary, for example, from several tenths of millimeters till one mm or a little more.

An elastic-damping unit, similar to that of shown in FIG. 47 and comprising the wave-shaped element 195 and the foils 196, 197, serving as two frictional elements, can be mounted between the unloading ring 143 and the sleeve 96 (shown in FIG. 43) instead of the bump foils 165.

FIG. 48 is a partial cross sectional view of another disposition of projections on the wave-shaped element shown in FIG. 47. A wave-shaped element 208 comprises unloading means 207, 209 as juts similar to the jut 202. The unloading means 209 faces the foil 196, the unloading means 207 faces the ring 191.

Shown in FIGS 4, 43....48 unloading means are disposed outside foil elements of the foil bearing. FIGS. 49...51 illustrate other embodiments of the unloading means having other dispositions. FIG. 49 illustrates foil elements also shown in FIGS. 1, 5. A convexity, i.e. a bump foil 20 wave 222, has the edges 367, 369 facing the first foil 20 side and the ridge 373 facing the second foil 20 side, disposed opposite the first side. Another bump foil wave has edges, i.e. the projecting parts 372, 373 facing the second foil 20 side and the ridge 367 facing the first foil 20 side. Between the bump foil 20 wave 222 and the foil 22 inner surface, there is disposed an unloading means 225 of set thickness, comprising foils 226, 227 disposed along the wave 222 ridge and anchored to the foil 22 by welding. Just one foil, having the width and thickness, equal to the summary thickness and width of the foils 226, 227, can be used instead of the foils 226, 227 . The unloading means 225 can comprise several double foils similar to the foils 226, 227 in the direction of the foil 20 ridge. A number of foils in the unloading means depending upon height of the wave 222, can vary from one till several units. Between the unloading means 225 facing the ridge 373 and the wave 222 there is a gap. Unloading means, similar to the element 225, are disposed under other bump foil 20 waves and other bearing bump foils' waves in the space between two surfaces, one of which extends through the inner ridges 372, 373, 374 and other similar ridges facing the bump foil 20 inner side, which faces the journal surface. The other surface extends through the outward ridges 367, 369 and other similar ridges facing the opposite bump foil 20 outward side.

Rotating with operating speed the journal 2 is displaced to the ridge 373 and under bearing load less than the bearing load capacity the bump foil 20 is deformed. Hereby all the bearing load, received by the foil 20, is transmitted to the bushing 6 through the foil 20 inner 372, 373, 374 and outward 367, 369 ridges. The bearing load exceeding the bearing load capacity causes dry friction between the top foil 4 and the journal 2. Under a further journal displacement the unloading means 225 contacts with the wave 222 and part of the bearing load, received by the foil 20, is transmitted to the bushing 6, besides the outward ridges 367, 369, through the unloading means 225, thereby decreasing a distance between the wave 222 supporting points and increasing the ultimate bearing load, under which the wave 222 has plastic deformation.

Increase in the ultimate load to a foil bearing is also provided under condition that unloading means are disposed not under each bump foil wave.

FIGS. 50, 51 illustrate other embodiments of dispositions of unloading means. As shown in FIG. 50, an unloading means 229 is anchored to the top foil 4 outward surface facing the bump foil 20. Under load not less than the bearing load capacity, the bump foil 20 starts to contact with the unloading means 229 and part of the bearing load from the journal 2 to the bushing 6 is transmitted, besides the foil 20 inner ridges 372, 373, 374, through the unloading means 229 and other unloading means disposed nearby.

FIG. 51 illustrates an unloading means 230, disposed between the bushing 6 and bump foil 231 inner ridges 233, 234 and having length more than that of the bump foil 231 in the direction of the bushing 6 axis. The unloading means 230 is anchored relative to the bushing 6 and the bump foil 231 outside the space therebetween. An unloading means 232 is directly anchored to a bump foil 231 wave 235 between a ridge 236 and the top foil 4. Under load not less than the bearing load capacity, the load from the top foil 4 to the bushing 6 is transmitted, besides the ridge 236, through the unloading means 230.

Shown in FIGS. 49...51 embodiments of disposition of unloading means in radial foil bearings can also be used in axial foil bearings.

As shown in FIGS. 1, 4 the radial bearing has a cooling of the journal 2, that in detail are also shown in FIGS. 23, 52, 53, wherein partial cross sectional views of the journal 2 are shown. The journal 2 comprises an inner part as a continuous shaft 502 and an outward sleeve 501 concentrically forced thereof. On inner side of the sleeve 501 there are disposed ribs 510, between which are circumferentially arranged cooling channels 503. Each channel 503 is disposed along the bearing axis. Between the channels 503 and the sleeve 501 outward surface 27 is disposed the outward journal 2 part as a cylinder with a bore, i.e. the channels 503 are disposed between the journal 2 inner and outward parts. Radial juts, or ridges 504 of FIGS. 23, 52 are disposed at one sleeve 501 face nearby the channels 503. Each ridge 504 lateral surface is disposed radially and axially or possibly at a small angle to the radial direction, for example. Between the ridges 504 there are disposed the channels 503 outlets as channels withdrawing air in the radial direction from the journal centre out of the channels 503 into the space surrounding the journal. Juts or ridges 505, directed at an angle to the radial direction towards rotation, are disposed at another sleeve 501 face, which is nearby the channels 503 and faces a second bearing side. Between the ridges 505 are disposed the channels 503 inlets manufactured as channels supplying air in the radial direction to the journal centre out of the space surrounding the journal. Ridges 505 inclination is adjusted so that under rotor rotation the air surrounding the journal is sucked by channels between the ridges 505 and pumped into the channels 503 under overpressure. The ridges 505 and channels formed thereof can be missing, hereby an air is directly sucked into the channels 503 through annular inlets disposed instead of the ridges 505.

Heat from the foil bearing is partially withdrawn (by means of a pressure gradient at the bearing faces) by an air running through gaps between the journal 2, the bushing 6 and the sleeve 96 from one bearing face, wherein the ridges 505 are disposed, to another bearing face, wherein the ridges 504 are disposed. Another part of heat is withdrawn by an air running through the channels 503. Surrounding the journal, the air is sucked into the channels between the ridges 505 and pumped into the channels 503, wherein the air is heated and further runs between the ridges 504, wherein the air pressure head increases. The air, running through the channels 503, withdraws the heat, generated in the lubrication film and heating the journal. The ridges 505, 504 at the cooling channel 503 inlet/outlet provide decreasing a gradient of pressure (needed for cooling) at both bearing faces by means of increasing air circulation through the channels 503 or improving cooling of the bearing.

The channels 503 extend in the direction of the journal axis but it can also be a screw extending of similar channels, running between the journal inner and outward parts. The channels 503 have a rectangle flow section but they may be otherwise shaped, for example, cross shaped as shown in FIG. 54, wherein channels 507 are disposed between the journal inner and outward parts. A perimeter of the channel 507 flow section is more than that of the channel 503 thereby increasing the channel 507 cooling surface. FIG. 54 is a partial cross sectional view of a journal.

Axial channels can be disposed between ribs, which are parts of a shaft, similar to the sleeve ribs 510, when on the shaft there is forced a sleeve with a smooth inner surface and which outward surface is the outward journal surface. In this case channels are disposed between the inner journal surface, which is a continuous part of the shaft without ribs, and the outward journal surface, which is a sleeve forced on the shaft. The channels can extend axially or can be screw shaped.

FIG. 55 is a cross sectional view of the journal 507 with another embodiment of cooling channels 506 that are similar to the channels 503. The channels 506 can be disposed within the entirely continuous journal 507 without an outward sleeve.

FIG. 56 is a partial longitudinal sectional view of a journal disposed nearby a thrust disc of the axial foil bearing. FIG. 56 illustrates another embodiment of cooling of the radial bearing with additional increase in air circulation through journal channels and decrease in gradient of pressure (needed for cooling) at both bearing faces, when an axial bearing thrust disc 515 is disposed nearby the radial bearing. Outlets of cooling channels 513, disposed within a bearing journal outward sleeve 512, are connected to inlets of channels 516, extending within the thrust disc 515 to its periphery. By means of the channels 516 under rotor rotation there increases as air pressure head as a mass flow of cooling air through the channels 513.

FIG. 57 is a longitudinal sectional view of a journal in another embodiment of cooling of the radial bearing with additional increase in air circulation. In FIG. 57 the foil bearing is disposed nearby an electromagnetic part of the electromotor or the generator, which diameter is more than the bearing journal diameter. Outlets of channels 519, extending within a bearing journal sleeve 518, are connected to inlets of channels 522 extending within a covering disc 521 to its periphery, which disc is disposed at an electromagnetic part 521 face. Increase in a mass flow of cooling air through the channels 519 is achieved in the same manner as shown in FIG. 56.

Shown in FIGS. 52...57 embodiments of cooling a foil bearing journal can be used for cooling other types of gas dynamic bearings, wherein problems to withdraw heat from the lubrication film take place.

As shown in FIG. 4 an electromagnet 183, comprising a core 185 and a coil 186, is axially located nearby the sleeve 96. Other three electromagnets 183 are circumferentially disposed around the rotor surface. The electromagnets 183 are used for generating constant and variable electromagnetic forces acting to the rotor to provide unloading the foil bearing from rotor radial forces and decreasing amplitude of rotor mid-range frequency oscillations, which are about rotor critical speeds of rotation. For unloading the foil bearing from radial forces it is normally required not less than two pairs of electromagnets, when electromagnets are radially opposed to each other in one pair and another pair is disposed across disposition of the first pair. For unloading the foil bearing the rotor weight one electromagnet is sufficient when the rotor is disposed horizontally or under inclination. Under current supplying one of the coils, the respective electromagnet attracts the journal 2, other electromagnets operate in the same manner. The electromagnets 183 are included into the radial foil bearing electromagnetic unloading device or the electromagnetic unloading device.

Electromagnets can be disposed relative to a radial foil bearing as at the rotor centre as at the rotor cantilevered side. An axial distance between the electromagnets and the radial foil bearing can be varied. When the electromagnets are used for decreasing radial bearing load, it is required that the rotor eccentricity should coincide in the sign at places of mounting the electromagnets and the radial foil bearing. Increase in difference of rotor eccentricities (which grows with increase in axial distance between the electromagnets and the radial foil bearing under a nonparallel displacement of the rotor axis from its central position) will worsen controlling the electromagnets. When the electromagnets are used for decreasing amplitude of rotor oscillations, it is required that speed of the rotor eccentricity should coincide in the sign at places of mounting the electromagnets and the radial foil bearing. Thus it is desirable that the electromagnets would axially be disposed nearer the radial foil bearing.

FIG. 58 is a schematic view illustrating a combined control system of the electromagnetic unloading device and the control bearing preload device for the radial foil bearing of FIGS. 1,4.

Outputs of the force sensors 94, mounted within the bearing bushing 6, are connected with sensor amplifiers 604 inputs. The sensor amplifiers 604 outputs are connected with bearing load summator 608 inputs. The bearing load summator 608 outputs electrical signals $S_X$, $S_Y$, which are proportional to projections of the journal 2 load (acting to the force sensors 94) to the axes X, Y. If nonlinear force sensors 94 or nonlinear sensor amplifiers 604 are used, the summators 608 can output signals nonlinearly but steadily depending upon load.

The summators 608 outputs are connected with the filters 614 inputs of a processing circuit of electrical signals of mid-range frequencies. The filters 614 transmit electrical signals of frequencies not exceeding the frequency of the critical rotor speed, for example, a little more than second and third critical rotor speeds. The filters 614 outputs are connected with derivative D-controllers 618 inputs and proportional P-controllers 619 inputs.

The D-controllers 618 outputs and integral I-controllers 638 outputs are connected with summator 620 inputs. The summator 620 makes a summation of signals from the D-controller 618 and the I-controller 638. The summator 620 outputs are connected with control current power driver 622 inputs for unloading the foil bearing along the directions X and Y. The driver 622 outputs are connected with inputs of power amplifiers 642, 643, 644, 645 supplying the electromagnets 183.

The filter 614 may be disposed in the circuit between the D- controller 618 and the summator 620 or between the summator 620 and the driver 622 or between the driver 622 and the power amplifiers 642, 643, 644, 645.

FIGS. 59...63 depict characteristics of linear and nonlinear D-controllers 618.

FIG. 59 depicts the derivative control coefficient D as a function of the speed $V_l$ of change in input signals for a conventional linear D-controller, wherein the coefficient D does not depend upon the value of $V_l$.

In a non linear D-controller 618 there is first generated a signal proportional to the speed $V_l$ of change in input signal. Then an output signal So of the D-controller 618 additionally changes as shown in FIGS. 60...63.

FIG. 60 depicts the output signal So as a function of $V_l$ under decrease of $V_l$ from the maximal value $(V_l)_{max}$ till the minimal value $(V_l)_{min}$. FIG. 61 depicts (respective to FIG. 60) a dependence of the derivative control coefficient D (equal to the ratio of So to $V_l$) from speed $V_l$. Under decrease in the direction to zero for $V_l$ in the interval from $(V_l)_{max}$ till $(V_l)_1$, first So steadily increases keeping negative. Therein the coefficient D is equal to the constant negative value $D_0$ similar to that in the conventional linear D- controller. Then contrary to the linear D- controller, which dependence corresponds to a line 664, So increases step-wise till a positive value and under $0 < V_l < (V_l)_1$ decreases till zero. Thereby the coefficient D is equal to some positive value $D_1$. Further under $(V_l)_{min} < V_l < 0$ So steadily increases and the coefficient D is equal to $D_0$.

FIG. 62 depicts the output signal So as a function of the speed $V_l$ under increase in $V_l$ from the minimal value $(V_l)_{min}$ till the maximal value $(V_l)_{max}$ FIG. 63 depicts (respective to FIG. 62) the coefficient D as a function of $V_l$. Under increase in $V_l$ in the direction to zero in the interval from $(V_l)_{min}$ till $(V_l)_2$, first So steadily decreases but keeping positive, when the average value $D_1$ of the coefficient D is equal to $D_0$ Further So decreases step-wise till a negative value and under $(V_l)_2 < V_l < 0$ So increases till zero when the coefficient D is equal to some positive value $D_1$. Finally under $0 < V_l < (V_l)_{max}$ So steadily decreases when the coefficient D is equal to $D_0$.

Depicted in FIGS. 59...63 graphics have the following meaning: due to inertia of the control system of the electromagnetic unloading device, specifically inductivity of the electromagnets, a force acting from the electromagnets to the rotor has a phase difference in comparison with a radial journal displacement (further the journal displacement), or in comparison with the signals $S_X$ and $S_Y$ proportional to bearing load. The phase difference depends upon electromagnetic properties of the control system, including the electromagnets 183, and increases under increase in frequency of the signals at the D-controllers 618 inputs. Increase in phase difference decreases effect of amplitude reduction of the rotor oscillations and increases currents and heat generation in the electromagnets 183 coils. The filter 614, cutting off oscillations with a frequency exceeding the set value, eliminates reaction of the control system to rotor high-range frequency oscillations, for example, oscillations with an operating frequency of rotor rotation, and thereby occurs decrease in currents, power and heat generation in the electromagnets 183 coils. The filter 614 can eliminate not all inputting signals with a frequency exceeding the set value but just the signals of considerable amplitude, for example, oscillations generated by the synchronous frequency of rotor rotation, which can be twice bigger than the set frequency, as well as high- range frequency oscillations of the machine housing with respect to the rotor, which oscillations are generated, for example, by gas oscillations in machine flowing parts. Without the filter 614 the effect of decrease in amplitude of rotor oscillations will be less but heat generation in the electromagnets 183 coils will increase. This positive effect can be obtained by using either a linear or a nonlinear D-controller. To decrease as the phase difference as the amplitude of the rotor oscillations, in the nonlinear derivative D-controller occurs changing as the sign as the value of the derivative coefficient D in some interval of changing $V_l$. As the optimal ratio of $D_0$ to $D_1$ as disposition of the part, where the derivative coefficient D changes its sign, depends upon the phase difference and other parameters of the control system of the electromagnetic control unloading device.

Shown in FIG. 58 the proportional P-controller 619 generates an output signal proportional to the input signal from the filter 614. Due to suppression of high-range frequency oscillations by the filter 614, stability of the P-controller 619 increases. Bearing load is approximately proportional to the journal displacement, therefore the P-controller 619 proportional coefficient approximately sets an additional stiffness of the bearing assembly, where the basic stiffness is determined by the foil bearing. Under normal operating conditions the P-controller 619 is disabled to avoid appearing of self-oscillations of the electromagnetic unloading device control system. However under rotor run-up and run-down, when rotor rotation speed is about the critical rotor speed, the P-controller 619 can be used for correcting the bearing assembly stiffness to shift the critical rotor speed from the operating rotor speed and avoid resonance. The control bearing preload device can function in the same manner, as described further and shown in FIG. 64.

The summator 608 outputs are also connected with filters 630 inputs, which filters are comprised into the processing circuit of electrical signals of low-range frequency. The filters 630 transmit only frequencies, for example, less than several tens Hz, or a little more than frequencies of possible rotor oscillations under surging. The filters 630 outputs are connected with the integral I-controllers 638 inputs. Limitation of the maximal frequency at the I-controllers 638 inputs provides eliminating instability in the electromagnetic unloading device control system even when the control system has a big time response. To give the set value, the I-controllers 638 inputs are connected with controller 640 outputs. One of the controller 640 inputs is connected with a speed sensor 606 of rotor rotation. An output signal from the I-controllers 638 is proportional to the time integral from difference between an input signal thereof and the set value given by the controller 640, similar to that in a conventional integral controller. To decrease heat generation in the electromagnets 183 coils, the I-controllers 638 can start to output a nonzero signal only if a module of difference between the set value given by the controller 640 and the input signal is more than the determined value. The controller 640 is connected with the P- controllers 619 to change the control coefficient P during operating conditions.

The controller 640 is used for receiving and processing output signals of the amplifiers 604 of force sensors, the summator 608, the rotor rotation speed sensor 606; for the outputting set values to the I- controllers 638;, for outputting signals to the power amplifier 643 of supplying the electromagnet 183 and for outputting signals to a driver 650 of a control bearing preload device 655, comprising (as shown in FIG. 4) the bolt 104, the arm 105 and the ring 98. The controller 640 is used also for temporary disconnection of the summator 608 outputs to the filters 614 and 630.

Shown in FIG. 58 the electromagnetic unloading device control system can be used to achieve following objects: unloading the foil bearing from low-range frequency and constant loads by means of the I-controllers 638; damping and decreasing amplitude of mid-range oscillations by means of the D-controllers 618; controlling preload of the foil bearing through the control bearing preload device 655; unloading the foil bearing from the rotor weight under start/stop by means of direct supplying the electromagnet 183 from the controller 640 by set current. Hereby the electromagnetic unloading device with its control system cannot be used as a self-contained rotor bearing because it does not provide generating a force (growing with increase in the radial journal displacement and opposite in the sign thereof. However under shared operating with the foil bearing the electromagnetic unloading device control system effectively accommodates foil bearing disadvantages, and it is simpler and cheaper in comparison with the active magnetic bearing control system. Such objects are achieved by separate using different parts of the electromagnetic unloading device control system of FIG. 58 and each part can separately be used for the foil bearing.

Part of the electromagnetic unloading device control system, used for damping, i.e. decreasing amplitude of the rotor oscillations in the foil bearing, comprises disposed in one circuit a first block of forming the signal proportional to the rotor displacement (comprising the force sensor 94, the amplifier 604 and the summator 608), the filter 614, the D-controller 618 and a second block of forming the signal for driving the electromagnets 183 comprising the driver 622 and the power amplifiers 642, 643, 644. The filter 614 can be disposed in any place of the circuit between the amplifier 604 and the electromagnets 185. Separate using this part of the control system provides effective decreasing amplitudes as of critical rotor oscillations as of rotor oscillations generated by other exciting forces by means of very big set coefficients of damping, which are ten times and more than those in foil bearings. Hereby the used electromagnets 183 have the maximal attractive force (which force is significantly less than the foil bearing load capacity), small overall dimensions, and small power supply.

Shown in FIG. 58 the elements of the electromagnetic unloading device control system can be used for other types of gas bearings. For example, for gas bearings of relatively small damping can be used the system of damping and decreasing amplitude of mid-range oscillations through the filters 614 and the D-controller.

Shown in FIG. 58 the electromagnetic unloading device control system realizes the aforementioned objects in all possible radial directions. However the objects can be achieved by means of the only electromagnet but just in one direction of the rotor radial displacement. In such conditions the electromagnetic unloading device control system may be simplified by means of decrease in number of circuits till one under coinciding in the direction of mounting a force sensor and an electromagnet.

Under zero frequency of rotation before rotor start, the summator 608 outputs, connected with the filters 614 and 630, are disabled on command from the controller 640. From the force sensors 94 through the amplifiers 604 signals input to the summator 608 and further to the controller 640. The average value of signals $(S_X)_1$ and $(S_Y)_1$, inputting from the summator 608, is recorded by the controller 640, which outputs to the power amplifier 643 the set constant electric signal passing through the power amplifier 643 to the coil 186 to generate a force decreasing the rotor weight load to the radial foil bearing. A value of this signal depends upon an inclination of the rotor axis to the horizon, by decreasing with increase in inclination. In the end the average value of signals $(S_X)_0$ and $(S_Y)_0$ inputting from the summator 608 is recorded by the controller 640.

Further the rotor speeds up under unloading the radial bearing from the rotor weight load in two variants. According to a first variant the rotor speeds up to the set frequency, for example, about the lift off speed frequency, under keeping unloading the radial bearing from the rotor weight by means of the electromagnetic unloading device. This stage is over, i.e. the electromagnet 183 supply is disabled and the constant force from the electromagnet 183 stops acting to the rotor as soon as a signal of the set frequency is received by the controller 640 from the rotor rotation speed sensor 606. The electromagnet supply can also be disabled according to a signal outputting from another type of the sensor, for example, from the pressure sensor in the operating flow of the machine wherein pressure depends upon the rotor rotation speed. Under rotor stop and decrease in rotation speed till the set value, the controller 640 again outputs a constant signal through the power amplifier 643 to the coil 186 to generate a force decreasing the rotor weight load to the radial foil bearing.

According to a second variant before the rotor speeds up, a constant signal, outputting from the controller 640 to the power amplifier 643, is disabled and the summator 608 outputs, connected with the filters 614, 630, will be enabled. Under a further rotor speedup till the set frequency, for example, till the rotor lift off speed in the foil bearing, aforesaid signals $(S_X)_0$ and $(S_Y)_0$ are used for the I-controllers 638 as the set value to provide unloading the foil bearing from the rotor weight. Under reaching the set frequency, the controller 640 changes the set values of the I-controllers 638 from $(S_X)_0$ and $(S_Y)_0$ to $(S_X)_1$ and $(S_Y)_1$ and the summator 608 outputs, connected with the filters 614, 630, will be enabled. Change in the set values eliminates electromagnetic unloading of the bearing from the rotor weight and decreases heat generation in the coil 186. Such adjustment of the set values accommodates shared operating of the foil bearing and the electromagnetic unloading device and prevents loading the bearing by additional force of the electromagnet 183 due to an imprecise setting of the electromagnetic unloading device control system.

Unloading the foil bearing from mid-range frequency oscillations, for example, rotor self-oscillations, by means of the electromagnetic unloading device is carried out in the following manner: time varying signals of mid-range frequency (which are proportional to projections of the bearing load to the axes X, Y), inputting from the force sensors 94 and transformed in the amplifiers 604 and the summator 608, are transformed under running through the filters 614, the D-controllers 618, the summators 620, the drivers 622 and the power amplifiers 642, 643, 644, 645. And the transformed time varying signals generate between the electromagnets 183 and the rotor the force directed against speed of the journal radial displacement. Such a force causes decreasing amplitude of rotor mid-range frequency oscillations.

Unloading the foil bearing from oscillations of low-range frequency, for example, from rotor surging oscillations, is carried out in the following manner: time varying signals of low-range frequency (which are proportional to foil bearing load projections to the axes X, Y), inputting from the force sensors 94 and transformed in the amplifiers 604 and the summator 608, are transformed under running through the filters 630, the I-controllers 638, the summator 620, the drivers 622, the power amplifiers 642, 643, 644, 645. And the transformed time varying signals generate between the electromagnets 183 and the rotor the force directed against the foil bearing load. Such a force causes decreasing the foil bearing load.

In the beginning the rotor speeds up on command from the controller 640, the control bearing preload device 655 radially displaces the bushing 6 parts of FIG. 1 from the journal 2 and generates the minimal bearing preload to decrease stiffness and rotor critical speeds in the bearing.

At rotor speedup the controller 640 drives the preload device 655, by increasing and decreasing bearing preload and providing the minimal amplitude of resonant oscillations under critical rotor speeds. FIG. 64 depicts amplitudes of oscillations A of the unbalanced rotor in foil bearings as a function of the rotation speed N. A curve I depicts the amplitude A for foil bearings of small stiffness when bearing preload is minimal. A curve II depicts the amplitude A for foil bearings of increased stiffness when bearing preload increases by means of the preload device 655. Each curve, I and II, has two critical frequencies: $N_1$, $N_3$ and $N_2$, $N_4$ respectively. After rotor start and lift off speed the rotor speeds up along the curve I till the point *a*, where amplitude of oscillations starts increasing and the set rotation speed, recorded by the controller 640, is reached. Then on command from the controller 640 to the preload device 655, as the bearing preload as the bearing stiffness increases and therefore occurs transition from the curve I to the curve II at the point b. Increase in bearing preload is adjusted so that a further speedup occurs along the curve II till the point c and thereby under the frequency $N_1$ the resonance is eliminated. Further the speedup occurs through points c, *d, e, f, g, h, k* and sequential transitions from the curve II to the curve I and vice versa under reaching the set value of rotation speed, when amplitude of oscillations starts increasing. Such a process provides running through the zone of critical frequencies from $N_1$ till $N_4$ under low amplitude of rotor oscillations. At reaching the point *k*, therein occurs as increase in bearing preload as increase in bearing stiffness and therefore occurs transition to the curve II at the point *m*. Further the rotor speeds up and work under operating conditions occurs along the curve II under the increased preload to provide an increased foil bearing stiffness and damping.

To provide a small amplitude of rotor oscillations under rotor rundown, the rotor runs through the zone of critical frequencies under a variable preload provided by the controller 640 in inverse order, compared to rotor speedup, i.e. through points *m, k, h, g, f, e, d, c, b, a*. At reaching the set rotation speed the summator 608 outputs, connected with the filters 614, 630, are disabled on command of the controller 640, from which a constant electric signal inputs through the power amplifier 643 into the coil 186 to generate under rotor start/stop a vertical force to decrease the rotor weight load to the radial bearing.

As previously discussed, the bearing load is approximately proportional to the radial journal displacement. Therefore the embodiment of the control system of FIG. 58 can be used under sensors of the radial journal displacement (displacement in the direction normal to the journal surface) instead of the force sensors.

FIG. 65 illustrates a control system for the bearing electromagnetic unloading device and the control bearing preload device of another embodiment to that of FIG. 58, wherein journal radial displacement sensors (journal displacement sensors) are used instead of force sensors. The journal displacement sensors 670, 671 are disposed around the journal 2 to measure the journal displacement in mutually perpendicular directions: respectively in the vertical and horizontal directions under the horizontal position of the rotor axis. The sensors 670, 671 can circumferentially be disposed nearby the electromagnets 183, or for example, nearby another foil bearing side in the direction of the rotor axis. Journal displacement sensors can be of inductive or capacitive type.

Similar to that of shown in FIG. 58, wherein one electromagnet and one force sensor can be used for damping rotor oscillations, shown in FIG. 65 the control system also can use one electromagnet and one journal displacement sensor for damping oscillations.

Compared to that of shown in FIG. 58, in the control system of FIG. 65, besides replacing force sensors, two amplifiers 605 are mounted instead of three amplifiers 604 of FIG. 58, a commutator 609, replacing the summutator 608 of FIG. 58, outputs signals $S_X$ and $S_Y$ to the respective filters 614 on command of the controller 640 through the amplifiers 605. The controller 640 of FIG. 65 has two inputs instead of three, due to replacement of three amplifiers 604 of FIG. 58 for two amplifiers 605. Hereby the set values of the D-controller 618 and I-controller 638 may be changed.

The commutator 609 serves only for connection/disconnection because its inputs connected to the amplifiers 605 and its outputs connected to the filters 614, 630 inputs respectively. The commutator 609 is controlled by commands of the controller 640. Because the amplifiers 605 directly output the value of the journal displacement in two coordinates, thereby the controller 640 receives the signal directly from the amplifiers 605.

The electromagnetic unloading device control system of FIG. 65 functions similarly to that of shown in FIG. 58.

Shown in FIG. 65 part of the electromagnetic unloading device control system (used for damping, i.e. decreasing amplitude of rotor oscillations in the foil bearing) comprises in one circuit a first block of forming the signal proportional to the rotor displacement (comprising the journal displacement sensors 670, 671, the amplifier 605 and the commutator 609), the filter 614, the D-controller 618 and a second block of forming the signal for driving the electromagnets, comprising the driver 622 and the power amplifiers 642, 643, 644.

FIG. 66 illustrates a control system for the bearing electromagnetic unloading device and the control bearing preload device of one more alternative embodiment to that of FIGS. 58, 65. FIG. 66 illustrates journal radial displacement speed sensors 674 and 675, i.e. the rotor displacement speed sensors instead of the journal radial displacement sensors 670, 671 shown in FIG. 65. The journal radial displacement speed sensors 674 and 675 are disposed around the journal 2 to measure its speed of displacement in mutually perpendicular directions: in the vertical and horizontal directions under the horizontal position of the rotor axis. The sensors 674 and 675 (for example, of inductive type) can be disposed nearby the electromagnet 183 or at the other bearing side.

As the journal radial displacement speed sensors 674, 675 as the journal radial displacement sensors 670, 671 can axially be disposed at various axial distances from the radial foil bearing, which distances influence the bearing operation as well as the distance between the foil bearing and the electromagnet, as previously discussed. Thereby it is desirable that journal radial displacement sensors and journal radial displacement speed sensors should axially be disposed closer to the foil bearing.

Contrary to the previously discussed control systems illustrated in FIGS. 58, 65, in the embodiment of FIG. 66 an integral I-controller is missing, therefore there is missing a reaction to a static rotor displacement. Compared to that of FIGS. 58, 65, in FIG. 66 the amplifiers 605 are replaced for amplifiers 676; P-controllers 677 are used instead of the D-controllers, there are missing the filters 630, the I-controllers 638, the P- controllers 619 and the summator 620 (used for unloading from low-range rotor frequency oscillations).

The journal radial displacement speed sensors 674, 675 outputs are connected with the amplifiers 676 inputs. The amplifiers 676 outputs are connected with the commutator 609 inputs. If either a speed sensor or an amplifier is nonlinear, a signal nonlinearly depending upon load can be output from the amplifiers 676.

The filters 614 outputs are connected with the proportional P-controllers 677 inputs. FIG. 67 depicts the control coefficient P of the P- controller 677 as a function of an output signal S of the P- controller 677. The coefficient P, being equal to the ratio of signals at the P-controller 677 input/output, is not constant in all the range shown in FIG. 67. And the module of mid-value $P_0$ of the coefficient P in the interval $S$ from $(S)_{max}$ till $(S)_1$ is more than the module of mid-value $P_1$ of the coefficient P in the range $S$ from $(S)_1$ till zero.

The embodiment of the electromagnetic unloading device control system shown in FIG. 66 is used only for unloading the bearing from mid-range frequency oscillations, for example, from the rotor self-oscillations, as previously discussed in detail for that of FIG. 58. Hereby the journal radial displacement speed sensors 674, the amplifier 676 and the P-controller 677 (shown in FIG. 66) function as the journal displacement sensors 670, the amplifier 605, the D- controller 618 (shown in FIG. 65).

The filter 614 can be disposed in any place between the amplifiers 676 and the electromagnet 185 in the circuit comprising the amplifier 676, the P-controller 677, the driver 622 and the electromagnet 185.

FIGS. 4, 68...73 illustrate embodiments of a hydrodynamic axial foil bearing. FIG. 68 is a fragmentary sectional view of the axial foil bearing along the circumferential direction. FIGS. 69, 70 illustrate partial longitudinal radial sectional views of the axial foil bearing.

As shown in FIGS. 4, 73 a top foil 156 is disposed between a face thrust rotation surface 173 of the thrust disc 154 mounted to the rotor and a flat thrust surface of a housing member 168 receiving bearing load, i.e. between the disc 154 and the housing member 168. The sliding surface 173 is normally flat. The annular foil 156 by its inner surface faces the surface 173 and a lubrication film 150 is generated therebetween.

Between an outward surface of the foil 156, disposed opposite its inner surface, and the housing member 168 thrust surface, i.e. between the housing 168 and the foil 156, there is disposed the block 165 of bump foils. Between the block 165 and the foil 156, there is disposed an inner member as an inner sheet 170. Between the housing member 168 thrust surface and the block 165 is disposed a supporting foil 174. Between the foil 174 outward surface and the housing member 168 there are disposed in the direction of the rotor axis a top bushing 158 and a bottom bushing 160 both receiving bearing load.

An axial bearing load is transmitted to the housing 168 through the top foil 156, the block 165 of bump foils, the supporting foil 174, the top and bottom bushings 158, 160 respectively and other members described further.

FIG. 71 is a partial plan view of the thrust disc 154. Grooves 845 are circumferentially arranged on a peripheral annular part of the thrust disc 154 surface 173. The thrust disc sliding surface 173 is circumferentially disposed and limited by inner and outward circumferences 847, 848 respectively. The grooves 845 are disposed under inclination, i.e. nonperpendicularly to a sliding surface 173 midline 846. The midline 846 coincides with the axial foil bearing midline, i.e. the top foil 156 midline circumferentially extends at the position intermediate between the top foil 156 inner and outward diameters. The arrangement of the grooves on the disc 154 surface is normal for conventional axial herringbone grooved bearings with rigid sliding surfaces. The disc 154 surface disposed between the grooves 845 is part of the surface 173.

Disposition of the grooves 845 on the thrust disc sliding surface provides increasing as pressure in the lubrication film as the bearing load capacity under thrust disc rotation. Under rotor start/stop, when the lubrication film thickness is minimal, increase in pressure is considerably big. Increase in the bearing load capacity under rotor start/stop provides decreasing the thrust disc lift off and touch-down speeds in the axial bearing.

FIG. 72 is a sectional view of the thrust disc of FIG. 71 along the line A--A. A transient surface 849 between the groove 845 bottom and the sliding surface 173 is rounded and similar to the transient surface between the groove 402 and the journal 2 surface 27 shown in FIG. 20. A profile of the transient surface 849 between the grooves 845 and the flat surface 173 can be similar to that of shown in FIG. 21.

Another embodiment of arrangement of grooves on the thrust disc sliding surface can be similar to that of the grooves on the journal 2 shown in FIG. 4. Additional grooves are disposed nonperpendicularly to the circumferential direction on the surface 173 inner part and extend from a bearing inner circumference 848 to the midline 846. Such disposition of the grooves on the thrust disc surface is normal for conventional axial herringbone grooved bearings with rigid sliding surfaces.

One row of grooves can be disposed nonperpendicular to the circumferential direction on the disc 154 surface 173 inner part from the bearing 848 inner circle to the midline 846. Such disposition of grooves on the disc surface is also normal for conventional axial herringbone grooved bearings with rigid sliding surfaces.

FIG. 73 is a plan view of an axial bearing without the thrust disc 154, wherein are partially shown the top foil 156 and the inner sheet 170. The annular top foil 156 in its periphery has three projections, each comprises an arc-shaped cutout 812 to retain the foil 156 radially and circumferentially by pins 838 mounted to the housing member 168. The supporting foil 174 and the inner sheet 170 are retained in the same manner. The foil 156 is axially supported by the annular inner sheet 170, which thickness can be a little more than that of the foil 156 to make a more bending stiffness. The sheet 170 has grooves 830 circumferentially arranged and disposed between projections 832. On the sheet 170 inner surface, facing the foil 156, the grooves 830 of herringbone pattern are disposed at an angle, i.e. nonperpendicularly to the circumferential direction, i.e. to a midline 840 running at the position intermediate between an inner lateral edge 841 and an outward lateral edge 842 of the top foil 156 operating part. The shape and disposition of the grooves 830 are similar to those in conventional axial herringbone grooved bearings with rigid sliding surfaces, which bearings generate pressure in the lubrication film under rotation of the thrust disc adjoining to the surfaces with grooves. The grooves 830 can depend, for example, upon the bearing size and is between several to several tens microns. To increase the top foil sagging into the groove 830, its width can be more than the width of the projection 832.

FIG. 76 is a sectional view of the axial bearing of FIG. 73 along lines A--A. When the thrust disc 154 rotates, the top foil 156 is sagging into the grooves 830 under the lubrication film pressure. Generated on the top foil 156 the grooves are axially arranged over the grooves 830, thereby realizing the grooves overpressure effect by providing increase in the lubrication film pressure and in the bearing load capacity.

FIGS. 74, 75 are partial plan views of two embodiments of disposition of grooves on an inner sheet alternative to that of shown in FIG. 73. Shown in FIG. 74 grooves 853 are similar to outward parts of the grooves 830 and disposed in an inner sheet 852 peripheral part, which part faces the top foil 156. Shown in FIG. 75 grooves 855 are similar to inward parts of the grooves 830 and disposed in an inner sheet 854 inward part, which part faces the top foil 156.

Shown in FIGS. 68, 73 the sheet 170 is supported by an elastic member comprising the blocks 165 of bump foils 814, 816, 818, 820, 822 circumferentially arranged. The block 165 (having the form of annular sector in a plan view) is anchored to the supporting foil 174 in any suitable manner, for example, by welding at spots 172. Shown in FIG. 73 the bearing has the six blocks 165 circumferentially arranged on the supporting foil 174. A number of the blocks of bump foils in the circumferential direction can be about ten or less. Bump foils wave ridges 802, 804, 806, 808 of the blocks 165 are marked in FIG. 73 by dash lines.

Shown in FIGS. 4, 73 the grooves are formed on the top foil 156 (which is flat in free condition) only under generated lubrication film overpressure between the disc 154 and the foil 156. Such a generated overpressure is provided by means of the grooves disposed on the disc 154.

FIG. 77 illustrates another embodiment of an axial foil bearing, wherein an initial overpressure in the lubrication film is generated under a small rotor rotation speed. FIG. 77 is a sectional view of the axial foil bearing similar to that of shown in FIGS. 4, 73, 76. A top foil 887 of FIG. 77 is similar in a plan view to the top foil 156. The top foil 887 has preliminarily formed grooves 888 with boundaries 889, 890, which grooves are axially disposed over the grooves 830. The grooves 888 are disposed on the foil 887 similar to the grooves 830 disposed on the inner sheet 170. A depth of the preliminary grooves 888 is less than that of the grooves 830 and approximately equal to the depth of the grooves disposed on the thrust disc 154, i.e. about several microns. The grooves 888 on the top foil 887 can be preliminarily formed by press forming or processing the foil 887 surface. In case of the top foil having the preliminarily formed grooves an initial overpressure in the lubrication film can be generated under a smooth thrust disc surface, wherein grooves are missing.

The top foil 887, having the grooves 888, can also be used to generate an initial lubrication film overpressure in the bearing and to decrease the lift off speed, when the inner sheet 170 is missing and either a conventional bump foil or an elastic sheet is used as an elastic member.

A similar embodiment of preliminarily formed grooves on the top foil can also be used for the radial foil bearing. For example, such grooves can be formed on the top foil over the grooves 376 of the inner sheet 386 in the embodiment shown in FIG. 16.

Under increase in the lubrication film pressure the top foil 887 is sagging into the grooves 888 on the inner sheet 170 and the depth of the grooves 888 will increase. Increase in the bearing load capacity under rotor start/stop and decrease in the lift off and touch-down speed of the thrust disc in the bearing occur similar to the embodiment of the thrust disc with the grooves shown in FIGS. 4, 71.

FIG. 78 is a plan view of yet another embodiment of an axial foil bearing having a top foil to support a thrust disc, which sliding surface is circle-shaped. A top foil 860 circle-shaped supporting part without an inner aperture is supported by an inner sheet 861 having grooves 864 disposed nonperpendicularly to the circumferential direction. The inner sheet 861 is supported by blocks 862 of the bump foils circumferentially arranged. In the bearing centre the inner sheet 861 is supported by a bump foil 863 anchored to the supporting foil 174.

FIG. 79 illustrates yet another embodiment of an axial foil bearing, wherein grooves are generated on an axial bearing top foil. The grooves are formed similar to those on the top foil 4 in the radial bearing shown in FIGS. 1, 13. Shown in FIG. 79 a block 865 of bump foils 868, 869, 870, 871, 872 is anchored by welding at a spot 866 to the supporting foil 174. The bump foils of the block 865 are circumferentially arranged. The bump foils 868, 869, disposed closer to the top foil 156 outward lateral edge, have periodically varying widths in the circumferential direction. The bump foils 868, 869 have narrow ridges of less stiffness and wide ridges of more stiffness interchanging with each other and the foils 868, 869 are disposed so that their ridges of less stiffness are extended along the directions marked by arrows, i.e. from an outward edge of the foil 865 to its midline (i.e. from the top foil 156 outward lateral edge) in the direction of rotation. The directions marked by arrows are disposed nonperpendicularly to the circumferential direction.

Under the lubrication film pressure the top foil 156 is more sagging over the bump foils 868, 869 narrow ridges from the thrust disc 154 along the directions marked by arrows, wherein the bump foils' stiffness is less thereby causing generating grooves. Generated on the top foil 156 the grooves provide increasing pressure in the lubrication film and the bearing load capacity.

FIG. 80 illustrates yet another embodiment of an axial foil bearing, wherein grooves are generated on an axial bearing top foil. Between the supporting foil 174 and the top foil 156 is disposed an elastic member as a circumferentially continuous annular perforated sheet 875 made of elastic material, for example, of rubber. The sheet 875 outward side has a plurality of apertures 876, 877, 878, 870, which form a big sectional area and thereby zones of less stiffness, which zones are disposed along the directions marked by arrows, i.e. from an outward edge of the foil 875 to its middle part nonperpendicularly to the direction of rotation. Apertures 880, 881, 882, 883 forming a less sectional area, compared to that of the apertures 876, 877, 878 и 870, and thereby zones of more stiffness, are used for adjusting the ratio of zones of more stiffness to zones of less stiffness. Apertures 884, 885 disposed from the sheet 875 inner side are used for smooth decreasing stiffness of the foil 875 to its inner edge. Apertures, forming circumferentially interchanging zones of more and less stiffness, can be disposed on the elastic member inner part.

Under the lubrication film pressure the top foil 156 is more sagging from the thrust disc 154 over the sheet 875 zones of less stiffness along the directions marked by arrows. It causes generating grooves in the top foil 156 peripheral part, wherein the grooves are disposed nonperpendicularly to the circumferential direction, providing increasing as the lubrication film pressure as the bearing load capacity.

In the axial foil bearing can be used an annular elastic sheet, wherein apertures (by means of their variable sectional areas) form a net-shaped structure of zones of less and more stiffness instead of the circular apertures manufactured on the sheet 875. FIG. 81 illustrates an annular elastic sheet 886, alternative to the sheet 875. Instead of the apertures 876 and others shown in FIG. 80, on the sheet 886 outward side there are disposed wide and narrow slits 850, 851 outwardly opened and forming circumferentially alternating zones of less and more stiffness.

FIGS. 82, 83 illustrate other embodiments of an axial bearing having a conventional disposition of several top foils. FIG. 82 is a partial plan view of an axial bearing having several, for example, three top foils 878 radially anchored to the supporting foil 174 by welding at the spots 876. FIG. 83 is a partial sectional view of an axial foil bearing by a cylindrical surface in the circumferential direction. Two bump foils 877, 878, anchored to the supporting foil 174 at the respective spots 879, 880, are circumferentially extended between the top foil 875 and supporting foil 174. The inner sheet 882, radially anchored at the spots 883 to the top foil 875, is disposed between thereof and the bump foils 877, 878. The sheet 882 has the grooves 884 similar to the grooves 853 shown in FIG. 76. Height of the bump foil 877 (from its free edge to its anchored edge at the spots 879) increases in the direction of the thrust disc 154 rotation, providing forming the lubrication film in shape of a converging wedge between the top foil 875 and the thrust disc to generate overpressure. The grooves 884 provide forming grooves on the top foil by means of overpressure and thereby provide increasing as the lubrication film pressure as the bearing load capacity. The lubrication film, shaped as a converging wedge, can provide the bearing load capacity without any grooves on the thrust disc.

FIGS. 73, 79, 80 illustrate embodiments of an axial bearing comprising a flat top foil. Under the rotating thrust disk, the shape of the lubrication film in the bearing is similar to that in a conventional noncontacting hydrodynamic face seal with rigid sliding surfaces having grooves, which seal serves to decrease a gas leakage along the rotor from the surrounding space of high gas pressure to the surrounding space of low gas pressure. Therefore the discussed axial bearings will pass a small gas leakage in the radial direction through the lubrication film between the thrust disc 154 and the top foil 156 under different pressure at an inner edge and outward edge of the foil bearing. Besides the gas leakage through the lubrication film, there is a gas leakage in the radial direction through the bearing along channels between the blocks 165 of bump foils, the inner sheet 170 and the supporting foil 174 shown in FIG. 73. This gas leakage is significantly more than the gas leakage through the lubrication film; therefore efficiency of the foil bearing as a seal considerably decreases.

As shown in FIGS. 80, 81, in the bearings, comprising the annular elastic member, the gas leakage between the top foil 156 and the supporting foil 174 will be small due to a practically missing gap therebetween, therefore such bearings can be used as face seals.

Significant decrease in gas leakage through channels, formed by a bump foil, when the axial foil bearing is used as a noncontacting hydrodynamic face seal, can be obtained under specified disposition of the bump foil, when its corrugations and its ridges are circumferentially extended. FIGS. 84...97 illustrate embodiments of axial bearings-seals having such an arrangement of bump foil ridges.

FIG. 84 is a partial plan view of an axial bearing-seal, wherein between the top foil 156 (partially shown) and the supporting foil 174 is disposed an elastic member 898 manufactured of an entire sheet and comprising bump foils 895 each radially extended and divided by narrow slits, i.e. gaps, 897 radially extended. A number of the bump foils 895 can be, for example, from one to several tens and depends upon manufacturability and sizing of the bearing. Marked by dash lines, lines of the bump foils 895 ridges are straight but may be curved-shaped, or for example, arc-shaped. FIG. 85 is a partial longitudinal sectional view of the bump foils 895 in the axial bearing-seal (the bushing 158 is not shown). The slits (gaps) 897 between the bump foils 895 can be manufactured, for example, by scissors cutting or EDM wire cutting, and have a width from several microns till several tenths mm. The bump foils 895 are circumferentially arranged and connected along an inner uncut annular part 896 of the elastic member 898. The elastic member 898 is anchored to the supporting foil 174 by welding at spots 892 of the part 896. Ridges of each bump foil 895 have equal angles with the lateral sides thereof. Bump foils 895 peripheral ridges 901 form a closed loop, within which is disposed the bearing axis, similar loops are formed by the bump foils 895 ridges disposed closer to the bearing centre. Ridges 901 adjacent 893, 894 edges, i.e. the nearest, displaced opposite each other and divided by the slit 897, are disposed at the equal distance from the bearing axis. Such a mutual disposition of bump foils' ridges provides the maximal hydraulic drag to the gas leakage in the radial direction. For the optimal ratio of distribution of pressure on the top foil 156 inner and outward surfaces, which ratio provides a required thickness of the lubrication film between the top foil 156 and the thrust disc 154, the slit 897 can be of variable widths.

Generating overpressure in the lubrication film (between the top foil 156 and a rotating thrust disc to eliminate contact therebetween) can be provided by means of grooves on the thrust disc similar to that on the disc 154. Besides that, the lubrication film overpressure can be generated by means of grooves on a top foil similar to the foil 887 shown in FIG. 75. In another manner the lubrication film overpressure can be generated by means of circumferentially arranged bump foils of various heights and suitable circumferential profiling a top foil.

Generating overpressure in the lubrication film in another manner can be provided by means of variable circumferential stiffness of bump foils. Shown in FIG. 84 the slit 897 is manufactured narrower from a gas leakage inlet. Increase in hydraulic drag at the gas leakage inlet provides much quicker decrease in pressure between the top and the bump foils. In this case under different pressures at the bearing outward and inner diameters the pressure between the top foil and the thrust disc is more than the pressure between the top foil and the bump foil. It causes a bigger sagging of the top foil above a bump foil of less stiffness, increasing thickness of the lubrication film and forming a converging wedge thereof, thereby providing as the lubrication film overpressure as the bearing load capacity.

FIG. 86 is a partial plan view of another embodiment of an axial bearing-seal, wherein bump foils 902 ridges, comprised in an elastic member 903, have another disposition, compared to the bump foils 895 ridges shown in FIG. 84. The bump foils 902 are manufactured of one entire sheet and connected with each other through a continuous outward annular part 904. The bump foil 902 ridges, marked with dash lines, have different angles with the bump foil 902 lateral sides radially disposed, i.e. the ridges are disposed at an angle to the circumferential direction. Located opposite each other, peripheral ridges 911 adjacent edges 905, 906, divided by a slit 907, are disposed at a different distance from the bearing centre. Similar to that of the bump foils 895 shown in FIG. 84, lines are running along all the bump foils 902 peripheral ridges 911 and connecting edges thereof, which edges are divided by the slit 907, and the lines form a closed loop, within which the bearing axis is. Similar loops are formed by the respective ridges disposed closer to the bearing centre. Distance between the peripheral ridges 911 edges 905, 906 is less than distance between the peripheral ridge 911 edge 905 and an edge 900 of a ridge 899 disposed on the adjacent bump foil closer to the bearing centre than the peripheral ridge 911. Distance between the edges 905 and 900 can be less than the distance between the edges 905, 906. In this case the nearest adjacent edges are 905, 900 but not the edges 905, 906 and a closed loop, within which the bearing axis is, will be formed by lines running along all the bump foils 902 ridges 911, 899 and connecting edges thereof, i.e. the edges 905, 900 divided by the slit 907.

FIG. 87 is a partial longitudinal section of the elastic member 903 shown in FIG 86. A radial distance between the ridges 911 edges 905, 906, forming a closed loop, does not exceed half a distance between the adjacent ridges' edges 905, 908 on the bump foil 902, which distance is equal to the wave length, or the distance is equal to the width of the convexity forming the wave. Such a radial displacement of the ridges causes forming windows 909, 910 and increasing a radial gas leakage. However this leakage is considerably less than the leakage along the bump foils, whose ridges are radially extended and do not form a closed loop, within which is disposed the bearing axis.

A circumferential distance between the elastic member 903 adjacent ridges' edges 905, 906, forming the closed loop, must be sufficiently small to decrease the gas leakage between the top foil and the supporting foil or the housing member, to which the bump foils are mounted, compared to the conventional disposition of bump foils, some of whose ridges are radially disposed. In case of a small number of bump foils, for example, two or three, which adjacent ridges' edges form a closed loop and are disposed similarly to that of shown in FIG. 86, decrease in gas leakage can be obtained under the circumferential distance between the adjacent ridges' edges not more than several bump foil wave lengths. In case of a big number of bump foils in an elastic member, for example, several tens, decrease in gas leakage can be obtained under the respective circumferential distance not more than half a bump foil wave length. To obtain a significant decrease in gas leakage, the respective circumferential distance must be minimal, not more than several tenths of millimeters or less.

FIG. 84 illustrates the elastic member comprising equal bump foils, however bump foils can also be different and each have ridges disposed at different angles to the circumferential direction.

To decrease stiffness of an axial foil bearing-seal under the required big range of axial rotor displacements, other embodiments of an elastic member (similar to that of shown in FIG. 84) are presented in FIGS. 88...92.

FIG. 88 is a partial longitudinal sectional view of yet another embodiment of a bearing-seal, wherein a couple of the elastic member 898 (comprising the top bump foil 895) together with the supporting foil 174 (shown in FIG. 84) is mounted over the same couple in the direction normal to the thrust disc 154 sliding surface. Bearing load is sequentially transmitted through the top foil 156, the top bump foil 895, the top supporting foil 174, the bottom bump foil 895 and the bottom supporting foil 174. There are two layers of the bump foils 895 and each layer comprises the bump foils 895 circumferentially arranged. Thereby decrease in bearing stiffness is provided by sequential distribution of stiffness of the elastic members 898.

FIG. 89 is a partial longitudinal sectional view of an alternative embodiment of an elastic member to that of shown in FIG. 84. In FIG. 89 the elastic member comprises an elastic ring 912 mounted under the supporting foil 174. The ring 912 can be manufactured, for example, of elastic member prepared from a wire net formed by braiding wires.

FIG. 90 illustrates yet another embodiment of a bearing-seal, comprising bump foils of decreased stiffness. To decrease stiffness, a bump foil 914 (similar to the bump foil 895 shown in FIG. 84) has slits 915 on the line of ridges contacting with the top foil 156, and slits 916 on the line of ridges contacting with the supporting foil 174. The slits 915, 916 are respectively divided by bridges 917, 918, combining the bump foil 914 into one workpiece. FIGS. 91, 92 are longitudinal radial sectional views of the bump foil 914 through the bridges 917, 918 respectively. Stiffness of the bump foil 914 is proportional to a circumferential length of the bridges 917, 918. The bridges 917, 918 are circumferentially shifted relative to each other to regularly distribute the bump foil 914 stiffness. Lengths of the bridges can depend upon their disposition. The ridges, running through the slit 915, the bridge 917 and the respective slits and bridges of other bump foils, form a closed loop, within which the bearing axis is.

FIG. 93 is a partial plan view of a yet another embodiment of a bearing-seal, comprising an elastic member without slits, contrary to that of shown in FIG. 84. As seen in FIG. 93, the elastic member is an annular bump foil 920 having annular corrugations or waves, which ridges are marked by dash lines. The bump foil 920 ridges are closed and without edges. Radial distribution of pressure between the foil 920 and the top foil 156 can be adjusted, for example, by means of the grooves, formed on the bump foil 920 ridges and having a small depth and a variable sectional area.

FIG. 94 is a partial plan view of a bearing-seal, wherein an elastic member comprises separate bump foils 923 anchored to the supporting foil 174 along its inner edge. Ridges 924, 942, 943, 944, 945, 946 and others (not shown in FIG. 94) form an opened spiral loop, extending from the periphery of the bump foils 923 to inner edges thereof. Formed by the bump foils 923 ridges (comprised into the loop) and other ridges (comprised into the similar loops), and also by the top foil 156 and by the supporting foil 174, channels are considerably longer than the respective channels formed by the bump foils' ridges radially arranged in conventional bearings, and the number of the channels is significantly less than in conventional bearings. Thereby in the radial direction a hydraulic drag to gas leakage in the bearing-seal shown in FIG. 94 is also significantly more than in the conventional bearings, whose ridges are radially extending, i.e. across the circumferential direction. Increase in hydraulic drag will be more considerable if an angular size of a spiral loop exceeds half a circumference.

FIG. 95 is a partial circumferential cylindrical sectional view yet another embodiment of a bearing-seal. An annular top foil 926 has several parts 928, parallel to the supporting foil 174, and several inclined parts 930, which parts are circumferentially interchanging with each other. Under the parts 926 are disposed bump foils 932, similar to the bump foils 923 shown in FIG. 94. Under the parts 930 are disposed bump foils 931. The foils 931 ridges are extended similar to the foils 932 ridges but the height of the foils 931 ridges circumferentially increases in the direction of rotation (similar to that of the top foil 926 part 930). Under thrust disc rotation a gas overpressure, providing the bearing load capacity, is generated in the converging wedge, formed by the part 930 and the thrust disc surface. Such a converging wedge causes increasing a radial gas leakage through the lubrication film, compared with a flat top foil, however the maximal lubrication film thickness can be sufficiently small and thereby the gas leakage through such a lubrication film is considerably less than the gas leakage along the bump foils, which ridges are radially extended and do not form a closed loop, within which is disposed the bearing axis.

FIG. 96 is a partial plan view of yet another embodiment of a bearing-seal, which partial circumferential sectional view is shown in FIG. 97. The bearing-seal has several top foils 934, circumferentially arranged and anchored to the supporting foil 174. Top foils 934 parts 935, 936 are similar to the top foil parts 928, 930 shown in FIG. 95. Shown in FIG. 96 the bearing-seal has the lubrication film, which circumferential profile is similar to that of shown in FIG. 94. Shown in FIG. 96 lines 938, 941 of the peripheral ridges 931, 932 (circumferentially arranged) are connected by the lines running between adjacent ridges' edges 940, 939 disposed opposite each other, which lines 938, 941 form a closed loop, within which is disposed the bearing axis. Similar loops are also formed by lines of ridges' edges disposed closer to the bearing-seal centre.

The previously discussed axial foil bearings-seals can also be used for an alternative embodiment, wherein a thrust disc, mounted to the machine housing and not rotatable, and a top foil and bump foils are anchored to the rotor. To decrease accuracy of manufacturing the thrust disc and to accommodate its possible deformations, the top foil (similar to the top foil 156), supported by the bump foils, which ridges are circumferentially extended, can be mounted as to the rotor as to the machine housing. In this case occurs sliding between the top foils.

To significantly reduce the gas leakage through a bearing, bump foils (having corrugations and consequently ridges extending circumferentially, i.e. along the bearing midline) can also be used for a radial foil bearing-seal. FIGS. 98...101 illustrate embodiments of such a radial bearing-seal having ridges extending circumferentially. FIG. 98 is a plan view, unwrapped, of an elastic member or a block 950 of bump foils 958 separated by slits 952. The bump foils 958 ridges are marked by dash lines 953. FIG. 99 is a plan view of a top foil 960. FIG. 100 is an axial view of a bearing (the journal is not shown), wherein the top foil 960 and the block 950 are wrapped together in a tube so that their respective edges 961 and 966, 956 and 959 are disposed opposite each other. FIG. 101 is a longitudinal sectional view of the bearing by a plane running through the bearing axis and the top foil edge 966. The block 950 is axially retained by means of a ring 970. The top foil 960 is axially retained by the block 950 by means of top foil 960 deflected parts 962, 963 inserted into slots 954, 955 of the bump foils of the block 950. The top foil 960 is circumferentially anchored relative to the ring 970 mounted within the slot 955 concentrically to the bearing axis by means of foil 960 deflected parts 964, 965 inserted into a slot 972 of the ring 970.

The bump foils 958 ridges form closed loops, within which are disposed the bearing axes. For the optimal ratio of distribution of pressure at top foil 760 inner and outward sides, the slit 952 can have a variable width to provide the needed thickness of the lubrication film between the top foil 760 and the journal. Height of bump foils can vary in the circumferential direction to generate overpressure in the lubrication film under the rotating journal. To generate overpressure there can also be used grooves on the journal surface or on the top foil.

Shown in FIG. 100 the radial bearing can have an alternative embodiment, wherein several top foils circumferentially arranged and under each top foil is disposed a bump foil, similar to that of shown in FIGS. 96, 97.

Ridges of bump foils, comprised into a block similar to the block 950 shown in FIG. 100, can form an opened screw loop, similar to the ridges of the bump foils shown in FIG. 94. Such disposition of ridges also provides a significant increase in hydraulic drag to a gas leakage in the axial direction in a foil radial bearing-seal.

Shown in FIGS. 88...90 embodiments of the elastic member, comprising bump foils to decrease stiffness of the axial foil bearing-seal, can also be used for radial foil bearings-seals shown in FIGS. 98...101. Besides the embodiments shown in FIGS. 88...90, other embodiments of the elastic member can be used to decrease stiffness of the foil bearings-seals, as shown in FIGS. 102, 103. Compared to that of shown in FIG. 84, alternative embodiments of FIGS. 102, 103 comprise a second layer of bump foils in the elastic member.

FIG. 102 is a partial longitudinal sectional view of an axial foil bearing-seal similar to that of FIG. 85. Forming an elastic member, bump foils 975, 976 form pairs and are disposed between the top foil 156 and the bushing 158 in two layers, i.e. the foil 975 is disposed above the foil 976 in the axial direction, i.e. normal to the thrust disc 154 surface. The bump foil 975 is disposed between the top foil 156 and the bushing 158. The bump foil 976 is disposed in a first layer between the bump foil 975 and the bushing 158. Ridges 977, 978 of the respective bump foils 975, 976 and other ridges thereof are extended in the circumferential direction, similar to the bump foils 895 ridges 901 shown in FIG. 84. The bump foils 976 are circumferentially arranged, i.e. in the direction of their extending ridges, and form a first layer of the elastic member. The bump foils 975 are circumferentially arranged, i.e. in the direction of their extending ridges, and form a second layer of the elastic member. The ridge 978 and other ridges of the bump foil 976 are disposed along the ridge 977 and other ridges of the bump foil 975.

The bump foils 975, 976 are anchored to each other through elastic means and capable to generate an elastic reaction therebetween under their relative displacement along the top foil 156 surface and across the foil 975 ridges, i.e. in the radial direction. The bump foils 975, 976 are both anchored by their respective peripheral edges 981, 982 to the supporting foil 174, for example, by contact welding. The bump foils 975, 976 edges, which are opposite the respective peripheral edges 981, 982, are not anchored. The elastic means, which connects the bump foils 975, 976 parts (disposed between the thrust disc 154 and the bushing 158) to generate the elastic reaction therebetween, is a foil 975 wave 985 having a ridge 983 and a length significantly exceeding that of other waves of the foil 975. The foil 975 wave 985 is disposed at the foil 975 end and farther from the rotor axis than the peripheral part of the thrust disc 154 and the top foil 156. The bump foils 975, 976 are connected through the wave 985 (as an elastic means) and through the supporting foil 174. The wave 985 ridge 983 is disposed along the foil 975 ridge 977. A big wave 985 length provides the required small stiffness and the elastic reaction under relative radial displacement of the foils 975, 976. Stiffness of the elastic means, connected a pair of the bump foils 975, 976, can be various for other pairs of bump foils thereby providing forming a lubrication film profile between the top foil 156 and the thrust disc.

The bump foils 975, 976 are in contact along inclined parts of their wave surfaces, which parts are contacting and transmitting load from the foil 975 to the foil 976. One of such contacting parts, having margins 979, 980 arranged in the direction across the foil 975 ridges, extends along the bump foil 975 ridges. The contacting part comprises the bump foil 975 contacting surface, facing the foil 976 and the bushing 158, and the bump foil 976 surface, facing the foil 975 and the thrust disc 158 and also contacting with the foil 975 contacting surface.

Inclined parts of the bump foils 975, 976, having the above mentioned contacting surfaces, interchange with other bump foils 975, 976 inclined parts, which have gaps therebetween. One of such gaps, a gap 996, is disposed between inclined parts 984, 987 of the bump foils 975, 976 waves. Such gaps provide displacing the foil 975 relative to the foil 976 along their contacting parts under decrease in distance between the foil 975 and the bushing 158.

To change a friction coefficient in such a contacting part, this part can comprise between the foil 975, 976 surfaces, for example, a thin polymer foil (or metal paper, or a coating of the foil 975 or that of the foil 976) transmitting load from the foil 975 to the foil 976.

Under bearing load the top foil 156 pushes the ridge 977 and other foil 975 ridges, i.e. the foil 975, and the foils 975, 976 can be displaced relative to each other along the top foil 156 surface and across the foil 975 ridges. Under missing friction between the foils 975, 976 contacting surfaces, their displacement occurs under any nonzero value of a contact angle 986 between the foil 975 or 976 contacting surface and the foil 156 or 174 surface, under as increase as decrease in load to the foil 975 and thereby decreasing or increasing a gap between the top foil 156 and the bushing 158 respectively. Under a nonzero friction coefficient between the foils 975, 976 contacting surfaces and when the contact angle 986 is less than some minimal value, such the foils 975, 976 relative displacement does not occur under increase in load to the foil 975 and this displacement can occur only under decrease in load to the foil 975 by means of the elastic reaction of the foil 975 wave 985. Under the nonzero friction coefficient between the foils 975, 976 contacting surfaces and when the contact angle 986 is more than some maximal value, such the foils 975, 976 displacements occur under increase in load to the foil 975 and this displacement does not occur under decrease in load to the foil 975. When the angle 986 is in the range between some minimal and maximal values, also depending upon the friction coefficient between contacting surfaces, such a displacement of the foils 975, 976 occurs under as decrease as increase in load to the foil 975.

FIG. 103 illustrates another embodiment of a bearing-seal, wherein another anchoring of a pair of bump foils 988, 989 and other elastic means connecting thereof takes place compared to that of shown in FIG. 102. The bump foils 988, 989 comprise bump parts, including waves and contacting surfaces, and anchoring parts 992, 997. The elastic means are elastic parts 990, 991 of the bump foils 988, 989 respectively disposed between the anchoring parts 992, 997 and bump parts of the foil 988, 989. The elastic parts 990, 991 are disposed approximately normal to the top foil 156 surface and serve as elastic means. The foil 988 anchoring part 992 is mounted to the foil 989 anchoring part 997 through a sheet 994 mounted therebetween by welding. The foils 988, 989 anchoring parts together with the sheet 994 are mounted within a housing member 993 slot 995 disposed along the bump foils 988, 989 ridges. Between the foil 988 elastic part 990 and the foil 989 elastic part 991 there is a free space formed by means of the sheet 994 and allowing the parts 990, 991 to vary a gap therebetween and to generate an elastic reaction by means of bending thereof in the direction across the foil 988 ridge and along the top foil.

In the previously discussed bearing-seals shown in FIGS. 102, 103 the elastic means, connecting the bump foils, are parts of the connected bump foils. The elastic means can be manufactured separately from a pair of connected bump foils, for example, as a separate foil welded to each bump foil and functioning as a plate spring similar to the bump foils 988, 989 parts 990, 991 shown in FIG. 103.

Shown in FIG. 102 the bearing-seal can comprise an elastic member, wherein several bump foils contact along their inclined wave parts. For example, three bump foils can be disposed one over another in three layers in the direction normal to the thrust disc 154 surface and connected with each other by elastic means similar to the bump foils 975, 976.

Shown in FIGS. 99... 101 radial bearings-seals can comprise instead of each bump foil 958 a pair of bump foils similar to the bump foils 975, 976 of FIG. 102 and having all their technical features in order to slide relative to each other to decrease stiffness of the bearing-seal.

Stiffness of the bearing elastic member in the bearing-seals shown in FIGS. 102, 103 mainly depends upon stiffness of the elastic means, through which the bump foils are connected, and also the contact angle of inclination of the bump foils contacting surfaces under condition of relative sliding thereof. Therefore the contacting bump foils' wave length can significantly be decreased without increase in stiffness of the elastic member. Thus such an elastic member can be used, for example, for conventional axial and radial bearings of small size, wherein the elastic member comprises a conventional bump foil, which stiffness increases proportionally to the third power of the bump foil wave length, and under the lubrication film pressure the optimal distribution of stiffness of the top foil cannot be obtained because of too a big wave length of the bump foil. Thereby the elastic member shown in FIGS. 102, 103 can be used, for example, for axial and radial bearings of small size to optimize distribution of top foil stiffness.

Shown in FIG. 103 the elastic member for the bearing-seal can be used for conventional axial and radial foil bearings, wherein bump foils are supported by the rigid housing member, a bushing is missing and bump foils' ridges are extended, for example, across the circumferential direction.

The axial bearing top bushing 158 shown in FIGS. 4, 68, 70 is supported by abutments 164, 169 diametrically disposed at the bearing axis opposite sides. The abutments 164, 169 through their cylindrical or other suitable surfaces transmit bearing load from the top bushing 158 to the bottom bushing 160.

As shown in FIGS. 68, 69, the bottom bushing 160 is supported by abutments 162, 171 diametrically disposed at the bearing axis opposite sides. The abutments 162, 171 are arranged across the direction of arrangement of the abutments 164, 169. The abutments 162, 171 have cylindrical surfaces, contacting with respective force sensors 163, 167 and transmitting the main part of an axial bearing load from the bushing 160 to the housing member 168. Force sensors can be mounted between the bushings 158, 160 together with the abutments 164, 169.

The rotating thrust disc 154 misalignment relative to the top bushing 158 causes increasing thickness of the lubrication film at one top bushing 158 side and decreasing at the opposite side thereof. Such irregularity in thickness of the lubrication film causes increasing pressure in the lubrication film of less thickness and appearing a torque acting to the top bushing 158. The torque causes turning as the bushing 158 relative to the bushing 160 around a contact line of the bushing 160 with the abutments 162, 171 as the bushing 160 relative to the housing member 168 around a contact line of the abutments 162, 171 with the force sensors 163, 167. Resulting from both turnings, the appeared irregularity in thickness of the lubrication film is eliminated and the misalignment of the housing member 168 and the thrust disc is accommodated. Such misalignment can be accommodated in any direction by means of a pair of the abutments 164, 169 arranged in the cross direction to the arrangement of the abutments 162, 171.

The bushings 158, 160 are radially and circumferentially anchored by pins 166, 161 relative to an intermediate disc 127, which is anchored to the housing member 168. Between the bushings 158, 160 are disposed several bump foils 177 circumferentially arranged. Between the intermediate disc 127 and the bushing 160 are disposed several bump foils 176 circumferentially arranged. The bump foils 176, 177 are used for damping the bushings 158, 160 possible oscillations. To increase damping the bump foils 176, 177 can be comprised into elastic-damping units, for example, similar to that of shown in FIG. 5.

Bearing load is transmitted from the force sensors 163, 167 to piezoceramic actuators 126, 129 similar to the actuator 216 shown in FIG. 23. The actuators 126, 129 are comprised into a control axial bearing preload device (preload device) similar to the control radial bearing preload device shown in FIGS. 1, 4. Instead of the actuators 126, 129 can be used pushing bolts similar to the pushing bolt 104 to control the bearing preload in the radial foil bearing shown in FIG. 1.

The control bearing preload device (the control preload device) can also be used for an axial foil bearing without tilting the bushing 158. This embodiment can be realized, for example, by removal the bottom bushing 160 together with the abutments 162, 171 out of the axial bearing shown in FIGS. 4, 68, 69 and mounting the top bushing 158 through abutments to three piezoceramic actuators, similar to the actuator 126 and circumferentially arranged at an angle of about 120 degrees.

An axial bearing similar to that of shown in FIGS. 4, 68, 69 is disposed at another thrust disc 154 side. This axial bearing comprises bushings, similar to the bushings 158, 160 and supported by abutments, similar to the abutments 164, 169, 162, 171 and disposed in cross directions. The bushings and abutments transmit bearing load to force sensors. To preload in an axial bearing, the control-preload device can just be used for one axial bearing.

Under rotor start/stop the control preload device movable parts, i.e. the actuators 126, 129, have a minimal height towards the thrust disc 154 and bearing preload is minimal thereby providing a minimal contact pressure between the thrust disc 154 and the top foil 156 and consequently a small foil 156 wear. At rotation speed exceeding the thrust disc 154 lift off speed, the control system outputs a signal to the actuators 126, 129. The actuators increase in height and push the bushings 158, 160 and the top foil 156 to the disc 154 thereby increasing the bearing preload and axial bearing stiffness in the axial bearing.

FIG. 4 illustrates the housing member 168, to which is mounted an electromagnet 134 comprising a coil 135 and a core 136. Under current supplying the coil 135 the electromagnet 134 axially attracts the thrust disc 154. An axial electromagnet can be mounted, for example, opposite a separate thrust disc.

In the annular space between the bushings 158, 160 and the electromagnet 134, there is mounted an unloading means for limiting the thrust disc 154 axial displacements, or the thrust disc unloading means, comprising an unloading ring 130, to which face an antifriction coating 131 is applied.

When the rotating rotor is displaced under an axial load exceeding the bearing load capacity, an initial contact between the thrust disc 154 and the top foil 156 occurs, then under continued displacement of the rotating rotor contact between the thrust disc 154 and the unloading ring 130 antifriction coating 131 occurs and as the disc 154 as the rotor stops displacing. The unloading ring 130 has such an axial size that plastic deformation of the bump foils 165 (shown also in FIG. 73) does not occur under the maximal thrust disc displacement.

An unloading ring, similar to the ring 130, and an electromagnet, similar to the electromagnet 134, are disposed at the opposite thrust disc 154 side.

FIG. 104 is a schematic view similar to that of FIG. 58 illustrating the control system for the axial bearing electromagnetic unloading device and the axial control bearing preload device.

Shown in FIG. 4 the force sensors 163, 167 outputs receive an axial bearing load in one direction and force sensors 702, 703 outputs (similar to the force sensors 163, 167) receive the axial bearing load in another direction and all outputs of aforesaid force sensors are connected with amplifiers 704 inputs. The amplifiers 704 outputs are connected with inputs of a bearing load summator 708. The bearing load summator 708 outputs an electric signal S proportional to the thrust disc 154 load to one of axial bearings.

The bearing load summator 708 output is connected with inputs of filters 714, 730 and of a controller 740. The-controller 740 is used for receiving and processing signals from the amplifiers 704, the bearing load summator 708 and the rotation speed sensor 606, for outputting the set value to I-controllers 738 and outputting a signal to a preload device driver 745 to control a bearing preload device 746 comprising the piezoceramic actuators 126, 129 shown in FIGS. 4, 68.

The filter 714 transmits frequencies less or a little more than the frequency of the rotor axial self oscillations. The filter 714 output is connected with a D-controller 718 input. The D- controller 718 operates similar to the D- controller 618 of the radial bearing shown in FIG. 58.

The filter 730 transmits frequencies lower or a little more than frequencies of rotor possible axial oscillations under surging, for example, about several tens of Hz. The filter 730 output is connected with the integral I-controller 738 input. The I-controller 738 operates similar to the I-controller 638 shown in FIG. 58. The I-controller 738 also has inputs connected with the controller 740 to output signals of the set value.

The controller 740 is used for receiving and processing signals from as the bearing load summator 708 as the rotation speed sensor 606, for outputting signals of the set value to the I- controller 738 and also for temporary disconnection of the bearing load summator 708 outputs with the filters 714, 730.

Outputs of the D and I-controllers 718, 738 are connected to a summator 720 input, which summator make summation of signals from the D and I-controllers 718, 738. The summator 720 output is connected to a driver 722 input, which driver controls currents for unloading the axial bearing. The driver 722 outputs are connected with power amplifiers 742, 744 inputs.

Shown in FIG. 104 the control system is used for unloading the axial bearing from low- range frequency and constant loads through the I-controller 738 and for damping rotor mid-range oscillations through the D-controller 718.

Before start under zero rotation speed the summator 708 outputs, connected with the filters 714, 730, are disabled on command from the controller 740. From the force sensors 163, 167, 702, 703 signals input to the summator 708 through the amplifiers 704. From the summator 708 the signal inputs to the controller 740, wherein the average value $(S)_1$ of the signal is recorded.

If the rotor is disposed vertically or under inclination, the controller 740 outputs the constant set electrical signal to the power amplifier 742 input. The power amplifier 742 supplies the electromagnet coil 135 disposed at the opposite axial bearing side, which axial bearing is loaded by the rotor weight to generate a force decreasing the rotor weight load to the axial bearing. The value of the signal depends upon an angle of inclination to the rotor axis. In the controller 740 is recorded the average value of signals $(S_X)_0$ and $(S_Y)_0$ inputting from the summator 708.

Further the rotor speeds up under keeping unloading the axial bearing, what can be realized in two variants.

In a first variant, similar to aforesaid unloading the radial foil bearing by the electromagnetic unloading device, the rotor speeds up to the set frequency under keeping a constant force of the electromagnet. This stage is over after inputting the signal by the controller 740 from the rotation speed sensor 606. When the rotor speeds down by decreasing rotation speed till the set value, the set signal again is output from the controller 740 into the power amplifier 742 input and further into the electromagnet coil 135 for generating the force decreasing the rotor weight load to the axial bearing.

In a second variant a constant signal outputting from the controller 740 into the amplifier 742 is disabled and the summator 608 outputs connected with the filters 714, 730 are enabled. Under further rotor speedup aforesaid signal $(S)_1$ is used in the I-controller 738 as the set value. Such an adjusting of the set value provides an optimizing shared operation of the foil bearing and the electromagnetic unloading device.

Under a vertical or inclined rotor when the rotor weight loads the axial bearing and after rotor speedup there can be made a change in the set value, similar to that of the control system of the control electromagnet unload device of the radial bearing, in order to eliminate unloading the rotor weight by the electromagnet and to decrease heat generation in the electromagnet coil 135.

In the beginning of rotor speedup the control preload device 746 actuators 126, 129 shown in FIG. 4 move back from the thrust disc 154 on command from the controller 740 and a minimal bearing preload is generated to decrease the bearing wear. On command from the controller 740 of FIG. 97 the rotor speeds up till the frequency exceeding the lift off speed and the control preload device 746 increases bearing preload.

Under unloading the axial bearing from mid-range frequency oscillations, for example, from the rotor self-oscillations, outputting from the force sensors 163, 167, 702, 703 though the amplifiers 704, time variable signals input to the summator 708. The summator 708 transforms the signals into the signal proportional to the axial bearing load. This signal is transformed, by running through the filter 714, the D- controller 718, the summator 720, the driver 722, the power amplifiers 742, 744, and supplies the electromagnet coil 135 or 137, and generates between the core 135 or 138 and the thrust disc 154 the force directed against an axial speed of the thrust disc. Such a force causes decreasing amplitude of axial rotor oscillations.

Under unloading the bearing from low- range frequency oscillations, for example, from rotor surging oscillations, outputting from the force sensors 163, 167, 702, 703though the amplifiers 704, time variable signals input to the summator 708. The summator 708 transforms the signals into the signal proportional to the axial bearing load. This signal is transformed, by running through the filter 730, the I-controller 738, the summator 620, the driver 722 and the power amplifiers 742, 744, and supplies the electromagnet coil 135 or 137, and generates between the core 136 or 138 and the thrust disc 154 the force directed against the axial bearing load. Such a force causes decreasing the axial foil bearing load.

Under a vertical rotor the control systems of the electromagnetic unloading device of the radial and axial bearings (shown in FIGS. 58, 96) can be changed to accommodate the rotor weight load for the axial bearing under rotor start/stop. In this variant under rotor speedup/slow-down the controller 740 through the power amplifiers 742 or 744 outputs a constant signal to the electromagnet coil 135 or 137 to generate a force, acting to the thrust disc 154 and decreasing the rotor weight load to the axial bearing. In this case unloading the radial bearing from the rotor weight load does not occur.

FIGS. 105...107 illustrate alternative embodiments of a radial foil bearing to increase its reliability under big durational loads. FIG. 105 is a plan view, unwrapped, of a top foil 395 operating part of the radial foil bearing. FIG. 106 is a partial cross sectional view of this radial foil bearing.

The bearing comprises a journal 200 disposed within a bore formed by a housing member 401 inner surface 405. The journal 200 has an outward surface of rotation 407 specifically cylindrical in shape. Between the surfaces 407 and 405, i.e. between the journal 200 and the housing member 401, is disposed the top foil 395. The foil 395 is anchored relative to the housing member 401 in any suitable manner, for example, by means of a foil 395 tail part 404 mounted within the housing member 401 slot extending in the direction of the bearing axis. Between the top foil 395 and the housing member 401 is disposed a bump foil 400 as an elastic member. A foil 395 trailing edge 391 and the leading edge 396 are disposed along the bearing axis, i.e. across the direction of the journal 200 rotation. The foil 395 lateral edges are circumferentially extended.

The journal 200 rotates in the direction from the foil 395 trailing edge 391 to its leading edge 396. The lubrication film is formed between the journal surface 407 and the top foil 395. Bearing load is transmitted from the lubrication film to the housing member 401 through the top foil 395, an intermediate foil 382 and the bump foil 400.

The bump foil 400 is anchored relative to the housing member 401 in any suitable manner, for example, by contact welding of the foil 400 to the top foil 395 at sports 389.

The foil 395 comprises two equal separate parts 1010, 1011 both rectangular in a plan view. The parts 1010, 1011 are arranged across the circumferential direction. Foil 395 lateral edges 1013, 1014 of the respective parts 1010, 1011 are circumferentially extended from a point 399, disposed at the foil 395 trailing edge 391, to a point 397 disposed at the foil 395 leading edge. The journal 200 rotates in the direction from the parts 1010, 1011 trailing edges to their leading edges. The parts 1010, 1011 leading and trailing edges are the top foil 395 leading edge 396 and the trailing edge 391 respectively. Between the lateral edges 1013, 1014, facing each other, is disposed a narrow slit having a width of about several hundredths or tenths of millimeters at the foil 395 leading edge. The lateral edges 1013, 1014 can also bear against each other.

Between the top foil 395 and the bump foil 400, there is disposed the intermediate foil 382 transmitted bearing load from the top foil 395 to the bump foil 400. The intermediate foil 382 comprises three equal separate rectangular parts 1020, 1021, 1022 arranged across the circumferential direction. Between adjacent parts 1020, 1021 lateral edges 1030, 1031 and adjacent parts 1021, 1022 lateral edges 1032, 1033, facing each other, there is disposed a narrow slit. This slit width can be a little more than the width of the slit between the foil 395 parts but not more than one millimeter to prevent the top foil 395 from significant sagging into this slit.

The intermediate foil 382 is anchored to the top foil 395 by contact welding at several spots 389 disposed nearby the foil 395 leading edge 391 in the following manner: the foil 382 lateral part 1020 is anchored to the foil 395 part 1010, the foil 382 middle part 1021 is anchored to the top foil 395 parts 1010, 1011, the lateral foil 382 part is anchored to the foil 395 part 1011.

Heat is generated in the lubrication film between the rotating journal 200 and the top foil 395. The most part of the heat is generated closer to the foil 395 leading edge 391, wherein the lubrication film thickness is small. Resulting from such circumferentially irregular heating, as the temperature of the top foil 395 as its heat expanse across the circumferential direction is more at its leading edge than at its trailing edge. A narrow slit between the foil 395 parts 1010, 1011 lateral edges 1013, 1014 provides their free relative displacement across the circumferential direction. Hereby thermal stress in the top foil 395 appears due to circumferentially irregular heating the parts 1010, 1011, each having a less width across the circumferential direction than the entire foil 395 thereby decreasing thermal stress and its area on the foil 395, compared to a one-piece top foil in a conventional foil bearing, and eliminating or decreasing a top foil 395 warping under a big journal rotation speed and big bearing loads.

The intermediate foil 382 is irregularly heated in the circumferential direction, too. Hereby the intermediate foil 382 comprises separate parts thereby decreasing its thermal stress and eliminating its warping under a big journal rotation speed and big bearing loads.

The slit between the parts 1010, 1011 causes an additional air leakage in the lubrication film and consequently decreasing as the lubrication film capacity as the bearing load capacity. If the intermediate foil 382 is missing, the air leakage from the lubrication film is normally directed to the journal surface 200 and comes through the slit into the space between the top foil 395 and the housing member 401, wherein the bump foil 400 is disposed. Such a leakage causes the maximal loss of the bearing load capacity. However decrease in width of a slit provides decreasing a leakage and increasing the lubrication film load capacity, therefore a width of the slit can be adjusted sufficiently small in order to make the lubrication film load capacity more than that of the one-piece top foil without slits mounted instead of the top foil 395 when the one-piece foil has the maximal width, under which the top foil warping (due to heat deformations) is still missing. With growth of a slit portion width, the less is the lubrication film thickness the more decreases pressure in the lubrication film. Therefore wherein the lubrication film thickness is big and the lubrication film pressure is small, the maximally admissible width of the slit portion at the top foil trailing edge can be significantly more than that at the top foil leading edge, wherein the lubrication film thickness is small and the lubrication film pressure is big. To decrease air leakage, a slit width can be practically equal to zero.

Mounting the intermediate foil 382 between the foil 395 and the bump foil 400 significantly increases the lubrication film load capacity by decreasing the air leakage because the foil 382 bears against the foil 395 and the air leakage occurs from the lubrication film area of high pressure into the lubrication film area of small pressure along the slit between the foil 395 parts 1011, 1011 in the circumferential direction, and the hydraulic drag of this air leakage will significantly be bigger than that of the air leakage in the radial direction through the slit between the parts 1011, 1011 when the foil 382 is missing.

A number of parts in the top foil can be several, for example, three, and depends upon the value of irregularity of the top foil's heating in the circumferential direction. A width of the top foil parts can be variable across the circumferential direction. The ratio of the width of the top foil parts is adjusted by reaching the optimal pressure in the lubrication film. The number of such top foil parts, facing each other by their edges, can be several, for example, three, and their width can be variable. The number of intermediate foil parts can be two or several units and their width can be variable.

Shown in FIG. 107 a top foil 1040 and an intermediate foil 1060 are other embodiments to those of shown in FIGS. 105, 106. The top foil 1040 is divided into parts only partially. The intermediate foil 1060 is also divided into parts only partially. A slit 1055, circumferentially dividing the foil 1040 into two rectangular parts 1042, 1043 from a point 1047 (disposed at a foil 1040 leading edge 1045) till a point 1048, is discontinued by a bridge 1050 between the parts 1042, 1043, which bridge is extending from a foil 1040 trailing edge 1044 till the point 1048 and connecting the foil 1040 parts 1042, 1043. The slit 1055, disposed in the lubrication film area of small thickness, must be long enough to decrease thermal stress in the foil 395. A top foil can be divided by a slit beginning at the top foil trailing edge and a bridge connecting the top foil parts can be disposed at the top foil leading edge. The intermediate foil 1060, comprising parts 1052, 1053, 1054, has two slits and respectively two bridges connecting the parts 1052/1053 and the parts 1053/1054 respectively. The bridges are disposed similar to the bridge connected the top foil 1040 parts 1042, 1043.

The radial foil bearing shown in FIGS.1, 4 can have an alternative embodiment wherein instead of the top foils 4, 7, 9 are mounted top foils having all the technical features of aforesaid foil 395 shown in FIG. 105, thereby providing decreasing thermal stress in the top foil and eliminating warping thereof and also keeping a sufficiently high pressure in the lubrication film. Intermediate foils, having all the basic technical features of aforesaid intermediate foil 382, can also be mounted within the foil bearing to decrease the top foil thermal stress and eliminate warping thereof.

To decrease warping owing to irregular heating, top foils and intermediate foils similar to those of shown in FIGS. 105, 107 can be used for other bearing embodiments of the present invention and also in conventional axial bearings, wherein bump foils are supported by the bearing rigid housing member and the bushing is missing. In this case the top foil, disposed between the thrust disc and the housing member and having a trailing edge and a leading edge arranged in the direction of the thrust disc rotation, comprises two or several parts, arranged across the circumferential direction and having the trailing and leading edges being the top foil trailing and leading edges respectively. These parts have lateral edges circumferentially extended, hereby the lateral edges of the adjacent parts are disposed with a small gap therebetween or bear against to each other to decrease loss of pressure in the lubrication film.

## Claims

1. A foil radial bearing to provide a rotor rotation relative to a housing member comprising a journal disposed within a bore of a bushing,
the bushing disposed between the journal and the housing member and having a first part and a second part and capable to change a radial disposition of said first bushing part relative to said second bushing part under the action of a force,
a top foil disposed between the journal and the bushing, an elastic member disposed between the top foil and the bushing,
a control bearing preload device mounted to the housing member
and including a movable part receiving a load from the second bushing part and having a capability to radially displace the second bushing part relative to the first bushing part to vary a bearing preload under normal operating conditions.

2. The foil bearing of claim 1, wherein to transmit a load from said bushing to said movable part of the control bearing preload device are used a force sensor and a supporting member comprising a spherical part.

3. The foil bearing of claim 1, wherein to transmit a load from said bushing to said movable part of the control bearing preload device are used a force sensor and a supporting cylindrically shaped member manufactured from a wire net formed by braiding wires.

4. The foil bearing of claim 2, wherein said movable part of the control bearing preload device is a rotatable pushing bolt having a rotatable driver, said bushing comprises three parts connected by thin bridges and each bushing part is supported by said pushing bolt.

5. The foil bearing of claim 3, wherein said movable part of the control bearing preload device is a piezoceramic actuator, said bushing comprises three parts connected by thin bridges and said actuator is abutted against each bushing part.

**6.** The foil bearing of claim 1, wherein a bushing has an outer conically shaped surface, comprises three parts connected by thin bridges.

**7.** A foil gas dynamic bearing-seal comprising a rotor part, hereinafter a rotatable member, a housing member, a top foil disposed between the housing member and the rotatable member, an elastic member disposed between the top foil and the housing member or more elastic members, disposed between the top foil and the housing member and mounted one over another to decrease an axial bearing stiffness, wherein each elastic member comprises two or more bump foils divided by narrow slits, each having a ridge formed by a wave to form a group comprising said ridges, further the group of ridges, wherein each ridge edge of the group of ridges is disposed opposite the nearest ridge edge from said group of ridges, further adjacent ridge edges, and the ridges, comprised in said group, are disposed so that a line, running along said ridges and joining their edges, forms a closed loop so that distance between each said adjacent ridge edge in the direction perpendicular to rotation of the rotatable member is not more half a length of said wave and a gas leakage in a space between the top foil and the housing member in the direction across the direction of rotation of the rotatable member is less than a gas leakage between the top foil and the housing member in said direction under disposition of bump foils' ridges in said direction.

**8.** The foil bearing-seal of claim 7, wherein a rotatable member is a thrust disk and said adjacent ridges' edges are at the equal distance from the bearing axis.

**9.** The foil bearing-seal of claim 8 wherein said bump foils connected with each other along an inner diameter by an uncut annular part of said elastic member and anchored by welding to a supporting foil disposed between said bump foils and said housing member, and said bump foils are divided by said narrow slits manufactured by EDM wire cutting and having a width till several tenths of millimeters and widening in the direction of a gas leakage from a bearing inlet to outlet.

**10.** The foil bearing-seal of claim 8 wherein to decrease a bearing-seal stiffness said bump foil has a slit divided by a bridge and running along ridges contacting with said top foil, and another slit divided by a bridge and running along ridges contacting with a supporting foil, said bridges are circumferentially displaced relative to each other to provide a regular distribution of said bump foil stiffness.

**11.** The foil bearing-seal of claim 7 wherein said rotatable member is a journal.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

Fig. 43

Fig. 44

Fig. 45

Fig. 46

Fig. 47

Fig. 48

Fig. 49

Fig. 50

Fig. 51

Fig. 52

Fig. 53

Fig. 54

Fig. 55

Fig. 56

Fig. 57

Fig. 58

EP 2 949 952 A1

Fig. 59

Fig. 60

Fig. 61

Fig. 62

Fig. 63

Fig. 64

Fig. 65

EP 2 949 952 A1

Fig. 66

Fig. 67

Fig. 68

Fig. 69

*Fig. 70*

*Fig. 71*

*Fig. 72*

Fig. 73

Fig. 74

Fig. 75

Fig. 77

Fig. 76

Fig. 78

Fig. 79

156
174
884
875
885
838
876
877
880
881
882
883
878
879

*Fig. 80*

156
886
174
850
851

*Fig. 81*

875
876
174
875
882
838
884
877
879
878

*Fig. 82*

Fig. 83

Fig. 84

Fig 86

Fig. 85

Fig. 87

Fig. 88

Fig. 89

Fig. 90

Fig. 91

Fig. 92

Fig. 93

Fig. 94

Fig. 95

Fig. 96

Fig. 97

*Fig. 98*

*Fig. 99*

*Fig. 100*

*Fig. 101*

Fig. 102

Fig. 103

Fig. 104

Fig. 105

Fig. 106

Fig. 107

## INTERNATIONAL SEARCH REPORT

| International application No. |
| --- |
| PCT/RU 2013/000972 |

**A.    CLASSIFICATION OF SUBJECT MATTER**
F16C 17/03 (2006.01 ); F16C 17/06 (2006.01); F16C 17/12 (2006.01); F16C 27/02 (2006.01)

According to International Patent Classification (IPC) or to both national classification and IPC

**B.    FIELDS SEARCHED**

Minimum documentation searched (classification system followed by classification symbols)
F16C 17/00, 17/02, 17/03, 17/06, 17/12, 27/00, 27/02, 32/00, 32/06, 33/00, 33/10, 33/26, 33/74

Documentation searched other than minimum documentation to the extent that such documents are included in the fields searched

Electronic data base consulted during the international search (name of data base and, where practicable, search terms used)
PAJ, Espacenet, DWPI, USPTO DB, Information Retrieval System of FIPS, PatSearch (RUPTO internal)

**C.    DOCUMENTS CONSIDERED TO BE RELEVANT**

| Category* | Citation of document, with indication, where appropriate, of the relevant passages | Relevant to claim No. |
| --- | --- | --- |
| D, A | US 6505837 B1 (MOHAWK INNOVATIVE TECHNOLOGY, INC.) 14.01.2003, col. 3, lines 13-57, col. 8, lines 9-64, the claims, fig. 1, 11 | 1-6, 7-11 |
| D, A | US 5911511 A (ALLIEDSIGNAL INC.) 15.06.1999, the claims, fig. 1-5 | 1-6, 7-11 |
| A | US 6726365 B2 (HONDA GIKEN KOGYO KABUSHIKI KAISHA) 27.04.2004, the claims, fig. 1-11 | 1-6, 7-11 |
| A | US 4445792 A (GENERAL MOTORS CORPORATION) 01.05.1984, the abstract, fig. 1 | 1-6, 7-11 |
| A | RU 2350795 C1 (ERMILOV JURY IVANOVICH) 27.03.2009, the abstract, fig. 1 | 1-6, 7-11 |

| ☐  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 February 2014 (06.02.2014) | 27 February 2014 (27.02.2014) |

| Name and mailing address of the ISA/ RU | Authorized officer |
| --- | --- |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4415280 A
- US 6726365 B
- US 5902049 A
- US 4116503 A
- US 5427455 A
- US 4445792 A
- US 6953283 B
- US 6024491 A
- US 5911511 A
- US 7614792 B

- US 5915841 A
- US 4394091 A
- JP 2008232289 A
- US 6353273 B
- US 6770993 B
- US 6965181 B
- US 4296976 A
- RU 2449184
- US 6505837 B

**Non-patent literature cited in the description**

- **DELLACORTE, C. ; BRUCKNER, R.J.** Remaining Technical Challenges and Future Plans for Oil-Free Turbomachinery. *Proceedings of 2010 ASME-IGTI Turbo Expo, Glasgow, UK, GT2010-22086,* June 2010